# EUROPEAN PATENT APPLICATION

(11) **EP 4 195 866 A1**
(43) Date of publication of application: **14.06.2023**
(21) Application number: 21853532.6
(22) Date of filing: 04.08.2021
(51) Int. Cl.: H04W 76/27, H04W 76/30, H04W 88/04, H04W 52/02

(54) **COMMUNICATION SYSTEM AND COMMUNICATION TERMINAL**

(30) Priority: 05.08.2020 JP 2020132946
(71) Applicant: MITSUBISHI ELECTRIC CORPORATION, Chiyoda-ku Tokyo 100-8310 (JP)
(72) Inventor: MOCHIZUKI Mitsuru, Tokyo 100-8310 (JP); SHIMODA Tadahiro, Tokyo 100-8310 (JP)
(74) Representative: Meissner Bolte Partnerschaft mbB
(86) International application number: PCT/JP2021/028877
(87) International publication number: WO 2022/030520

(57) **Abstract**

The power consumption is reduced in a communication system using Device-to-Device communication. The communication system includes: a base station; a first communication terminal configured to perform radio communication with the base station; and a second communication terminal configured to perform Device-to-Device communication with the first communication terminal. The first communication terminal is configured to relay communication between the second communication terminal and the base station. The first communication terminal releases connection with the base station and transitions to an idle state in the absence of data to be transmitted and received between the second communication terminal and the base station for a predetermined period (Steps ST1411 to ST1415).

## Description

### TECHNICAL FIELD

The present invention relates to a radio communication technology.

### BACKGROUND ART

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

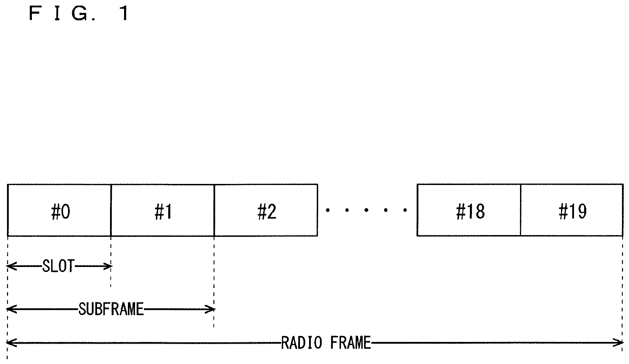

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgment (Ack) / negative acknowledgment (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a data demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions validly by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 19). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Furthermore, supporting services using sidelink (SL) communication not only in the EPS but also in the 5G core system has been studied (Non-Patent Documents 1, 16, 20 to 23). Examples of the services using the SL communication include V2X services and proximity services.

### PRIOR-ART DOCUMENTS

### NON-PATENT DOCUMENTS

Non-Patent Document 1: 3GPP TS 36.300 V16.2.0
Non-Patent Document 2: 3GPP S1-083461
Non-Patent Document 3: 3GPP TR 36.814 V9.2.0
Non-Patent Document 4: 3GPP TR 36.912 V16.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.2.0
Non-Patent Document 9: 3GPP TR 38.804 V14.0.0
Non-Patent Document 10: 3GPP TR 38.912 V16.0.0
Non-Patent Document 11: 3GPP RP-172115
Non-Patent Document 12: 3GPP TS 37.340 V16.2.0
Non-Patent Document 13: 3GPP TS 38.211 V16.2.0
Non-Patent Document 14: 3GPP TS 38.213 V16.2.0
Non-Patent Document 15: 3GPP TS 38.214 V16.2.0
Non-Patent Document 16: 3GPP TS 38.300 V16.2.0
Non-Patent Document 17: 3GPP TS 38.321 V16.1.0
Non-Patent Document 18: 3GPP TS 38.212 V16.2.0
Non-Patent Document 19: 3GPP TS 38.331 V16.1.0
Non-Patent Document 20: 3GPP TR 23.703 V12.0.0
Non-Patent Document 21: 3GPP TS 23.501 V16.5.0
Non-Patent Document 22: 3GPP TS 23.287 V16.3.0
Non-Patent Document 23: 3GPP TS 23.303 V16.0.0

### SUMMARY

### PROBLEMS TO BE SOLVED BY THE INVENTION

Furthermore, supporting various services using the SL communication (also referred to as the PC5 communication) not only in the EPS but also in the 5G core system has been studied (see Non-Patent Documents 1, 16, 20 to 23). Communication is performed between devices in the SL communication. In the SL communication, not only the direct communication between devices but also the communication between the UE and a NW through a relay has been proposed (see Non-Patent Documents 20 and 23). In such a communication through a relay, how to reduce the power consumption of devices is a problem.

In view of the problem, one of the objects of the present invention is to reduce the power consumption in a communication system using Device-to-Device communication.

### MEANS TO SOLVE THE PROBLEMS

A communication system according to the present invention includes: a base station; a first communication terminal configured to perform radio communication with the base station; and a second communication terminal configured to perform Device-to-Device communication with the first communication terminal, wherein the first communication terminal is configured to relay communication between the second communication terminal and the base station, and the first communication terminal releases connection with the base station and transitions to an idle state in the absence of data to be transmitted and received between the second communication terminal and the base station for a predetermined period.

A communication terminal according to the present invention is a communication terminal configured to perform radio communication with a base station, wherein the communication terminal is configured to perform Device-to-Device communication with another communication terminal and to relay communication between the other communication terminal and the base station, and the communication terminal releases connection with the base station and transitions to an idle state in the absence of data to be transmitted and received between the other communication terminal and the base station for a predetermined period.

### EFFECTS OF THE INVENTION

The present invention can reduce the power consumption in a communication system using Device-to-Device communication.

The objects, features, aspects and advantages of the present invention will become more apparent from the following detailed description and the accompanying drawings of the present invention.

### BRIEF DESCRIPTION OF DRAWINGS

FIG. 1 is a diagram illustrating the configuration of a radio frame for use in an LTE communication system.
FIG. 2 is a block diagram showing the overall configuration of an LTE communication system 200 under discussion of 3GPP.
FIG. 3 is a block diagram illustrating an overall configuration of a NR communication system 210 that has been discussed in 3GPP.
FIG. 4 illustrates a structure of the DC to be performed by an eNB and a gNB that are connected to the EPC.
FIG. 5 illustrates a structure of the DC to be performed by gNBs that are connected to the NG core.
FIG. 6 illustrates a structure of the DC to be performed by the eNB and the gNB that are connected to the NG core.
FIG. 7 illustrates a structure of the DC to be performed by the eNB and the gNB that are connected to the NG core.
FIG. 8 is a block diagram showing the configuration of a user equipment 202 shown in FIG. 2.
FIG. 9 is a block diagram showing the configuration of a base station 203 shown in FIG. 2.
FIG. 10 is a block diagram showing the configuration of an MME.
FIG. 11 is a block diagram illustrating a configuration of the 5GC.
FIG. 12 is a flowchart showing an outline from a cell search to an idle state operation performed by a communication terminal (UE) in LTE communication system.
FIG. 13 illustrates an example structure of a cell in an NR system.
FIG. 14 is a sequence diagram illustrating an example method for communicating between the UE and the NW through the relay UE according to the first embodiment.
FIG. 15 is a sequence diagram illustrating the example method for communicating between the UE and the NW through the relay UE according to the first embodiment.
FIG. 16 is a sequence diagram illustrating the example method for communicating between the UE and the NW through the relay UE according to the first embodiment.
FIG. 17 is a sequence diagram illustrating an example method for communicating between the UE and the NW through the relay UE according to the first modification of the first embodiment.
FIG. 18 is a sequence diagram illustrating the example method for communicating between the UE and the NW through the relay UE according to the first modification of the first embodiment.
FIG. 19 is a sequence diagram illustrating the example method for communicating between the UE and the NW through the relay UE according to the first modification of the first embodiment.
FIG. 20 is a sequence diagram illustrating an example method for communicating between the UE and the NW through the relay UE according to the second modification of the first embodiment.
FIG. 21 is a sequence diagram illustrating the example method for communicating between the UE and the NW through the relay UE according to the second modification of the first embodiment.
FIG. 22 is a sequence diagram illustrating the example method for communicating between the UE and the NW through the relay UE according to the second modification of the first embodiment.
FIG. 23 is a sequence diagram illustrating an example method for communicating between the UE and the NW through the relay UE according to the third embodiment.
FIG. 24 is a sequence diagram illustrating the example method for communicating between the UE and the NW through the relay UE according to the third embodiment.
FIG. 25 is a sequence diagram illustrating an example method for communicating between the UE and the NW through the relay UE according to the first modification of the third embodiment.
FIG. 26 is a sequence diagram illustrating the example method for communicating between the UE and the NW through the relay UE according to the first modification of the third embodiment.
FIG. 27 is a sequence diagram illustrating an example method for notifying, between the remote UE, the relay UE, and the gNB to which the relay UE is connected, information on the communication between the remote UE and the NW through the relay UE according to the first modification of the third embodiment.
FIG. 28 is a conceptual diagram illustrating the first example of the PC5 DRX configuration according to the fourth embodiment.
FIG. 29 is a conceptual diagram illustrating the second example of the PC5 DRX configuration according to the fourth embodiment.
FIG. 30 is a conceptual diagram illustrating the third example of the PC5 DRX configuration according to the fourth embodiment.
FIG. 31 is a conceptual diagram illustrating the fourth example of the PC5 DRX configuration according to the fourth embodiment.
FIG. 32 is a sequence diagram illustrating the first example method for matching bidirectional DRXs in the UE-to-UE direct communication in the PC5 according to the fourth embodiment.
FIG. 33 is a sequence diagram illustrating the first example method for matching the bidirectional DRXs in the UE-to-UE direct communication in the PC5 according to the fourth embodiment.
FIG. 34 is a sequence diagram illustrating the second example method for matching the bidirectional DRXs in the UE-to-UE direct communication in the PC5 according to the fourth embodiment.
FIG. 35 is a sequence diagram illustrating the second example method for matching the bidirectional DRXs in the UE-to-UE direct communication in the PC5 according to the fourth embodiment.
FIG. 36 is a sequence diagram illustrating an example method for establishing the PC5 DRX configuration between the remote UE and the relay UE in the communication between the remote UE and the NW through the relay UE according to the fourth embodiment.
FIG. 37 is a sequence diagram illustrating the example method for establishing the PC5 DRX configuration between the remote UE and the relay UE in the communication between the remote UE and the NW through the relay UE according to the fourth embodiment.

### DESCRIPTION OF EMBODIMENTS

### The First Embodiment

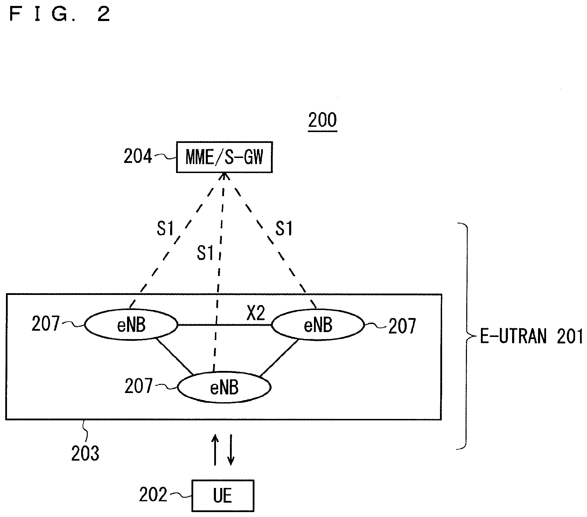

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC IDLE and RRC_CONNECTED.

In RRC_IDLE, public land mobile network (PLMN) selection, system information (SI) broadcast, paging, cell reselection, mobility, and the like are performed. In RRC_CONNECTED, the user equipment has RRC connection and is capable of transmitting and receiving data to and from a network. In RRC CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

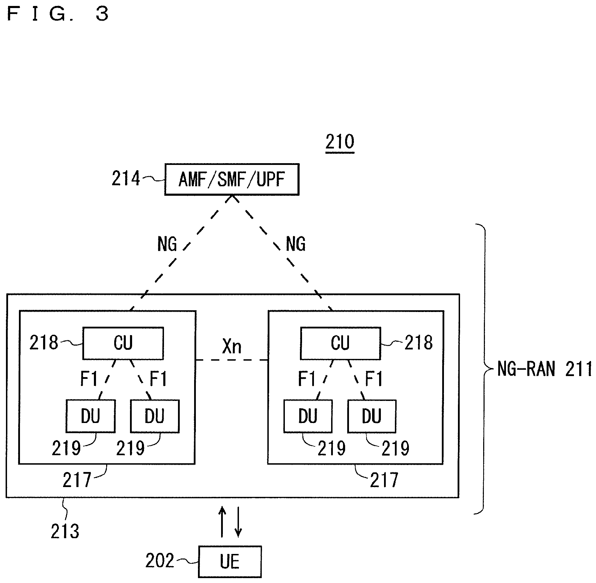

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NR base station (NG-RAN NodeB (gNB))") 213, and transmits and receives signals to and from the NR base station 213 via radio communication. Furthermore, the core network is referred to as a 5G Core (5GC).

When control protocols for the UE 202, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC CONNECTED, and RRC_INACTIVE.

RRC_IDLE and RRC_CONNECTED are identical to those in LTE. In RRC_INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

The 5G communication system may include the Unified Data Management (UDM) function and the Policy Control Function (PCF) described in Non-Patent Document 21 (3GPP TS23.501). The UDM and/or the PCF may be included in the 5GC unit in FIG. 3.

The 5G communication system may include the Non-3GPP Interworking Function (N3IWF) described in Non-Patent Document 21 (3GPP TS23.501). The N3IWF may terminate an Access Network (AN) with the UE in a non-3GPP access with the UE.

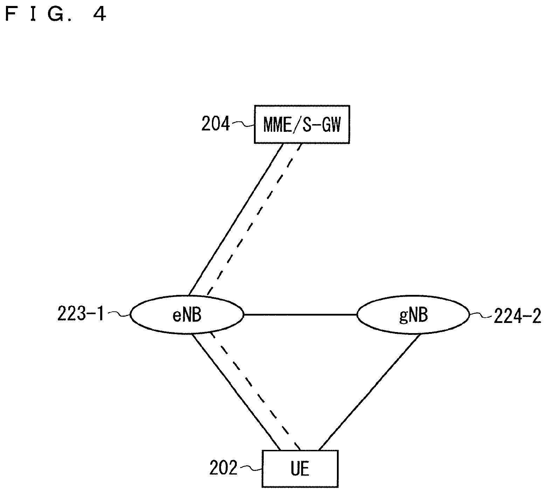

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

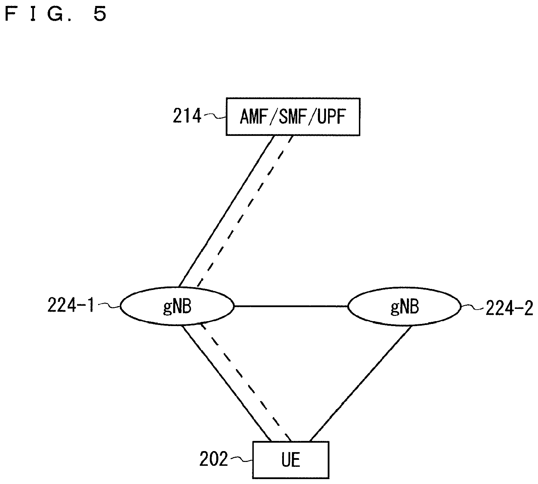

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

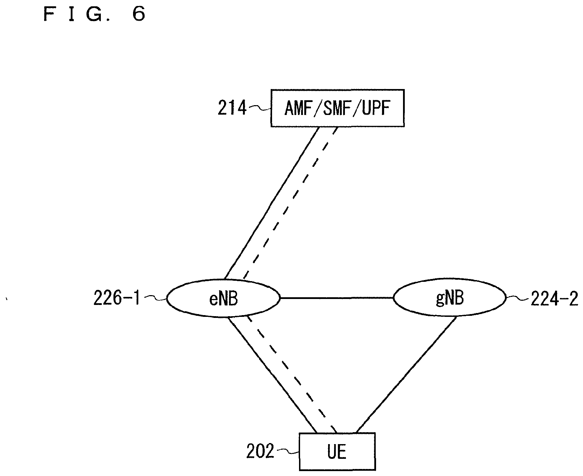

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

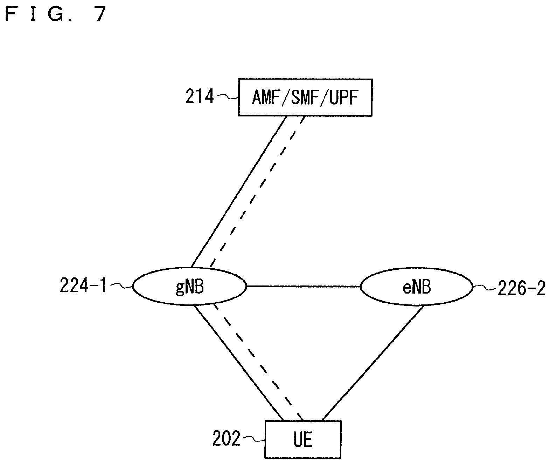

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

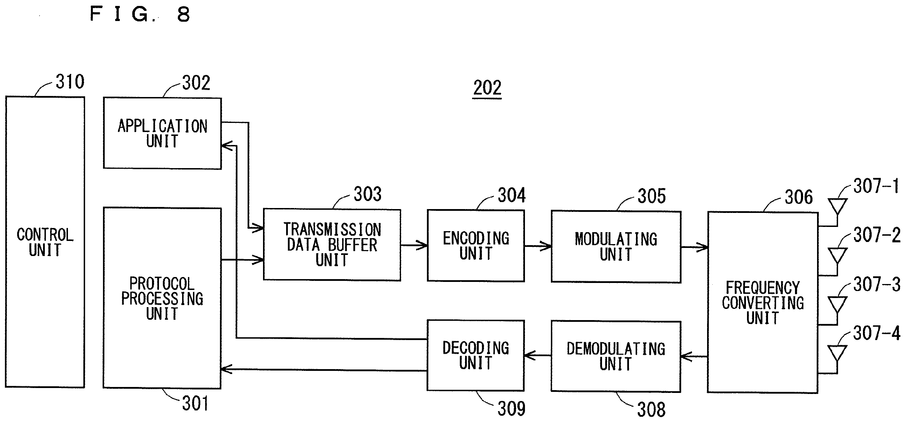

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process. The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction. Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

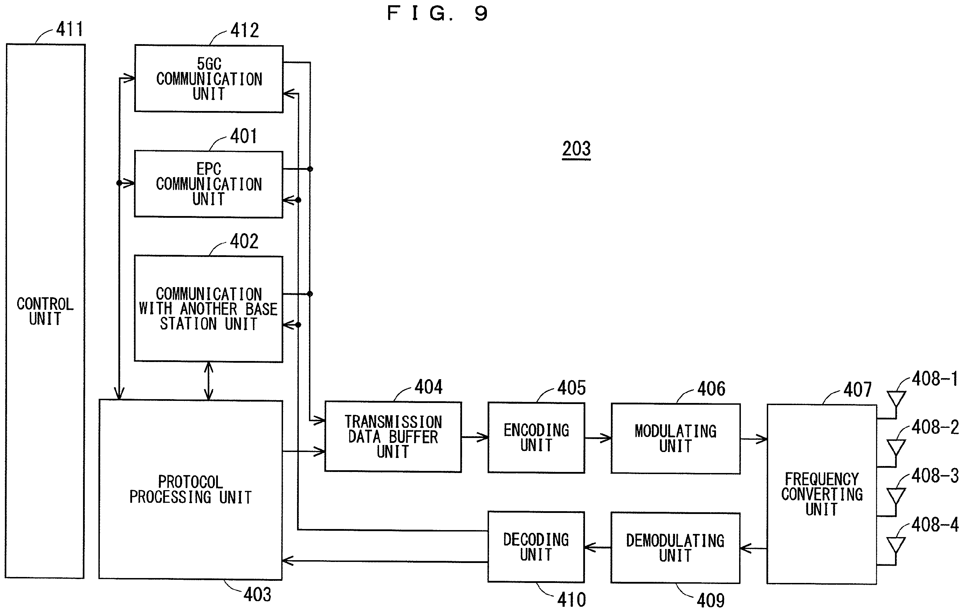

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station. The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction. Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401, and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

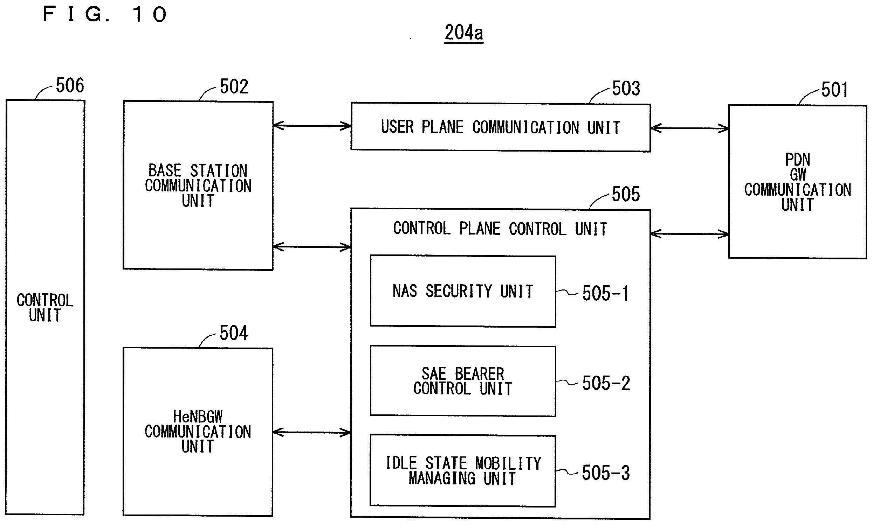

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface. In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility managing unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer. The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the eNBs 207 to be connected to the MME 204a, CSG IDs, and a whitelist.

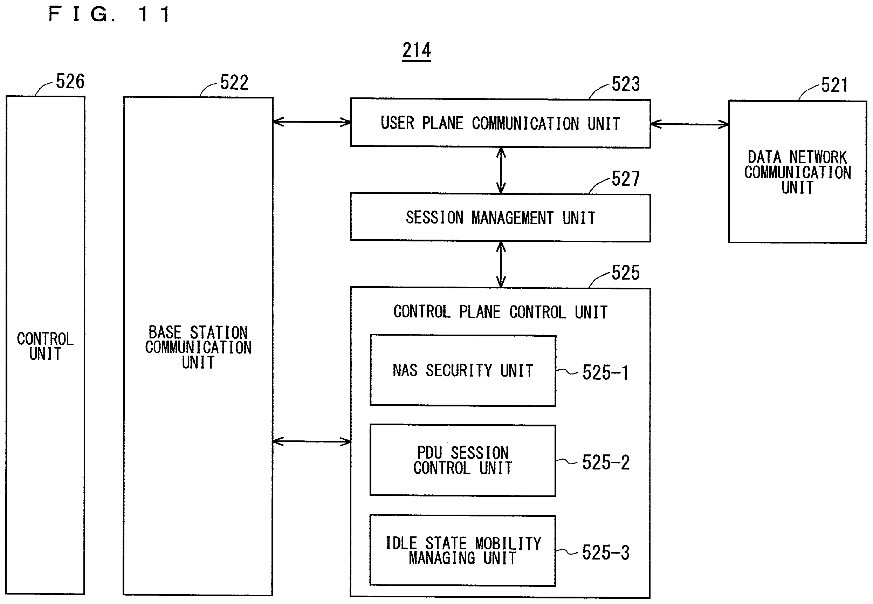

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data to a session management unit 527 through the user plane communication unit 523. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility managing unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility managing unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

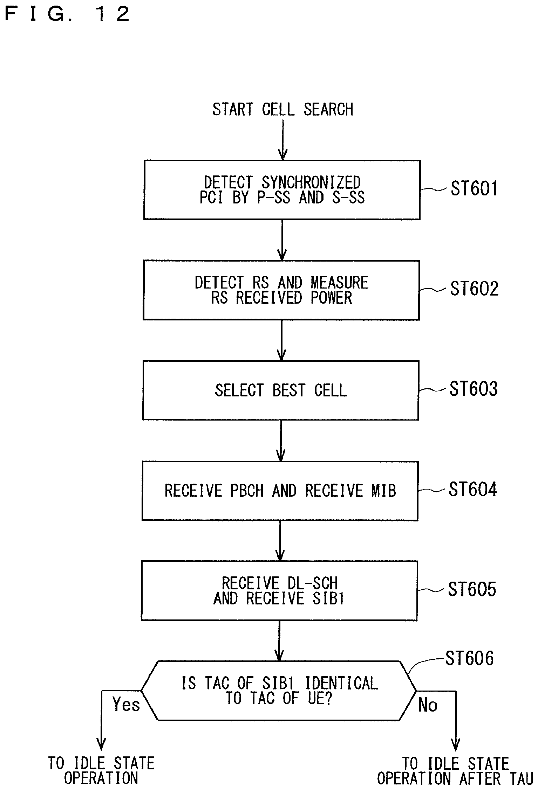

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP) for the synchronized cells. The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

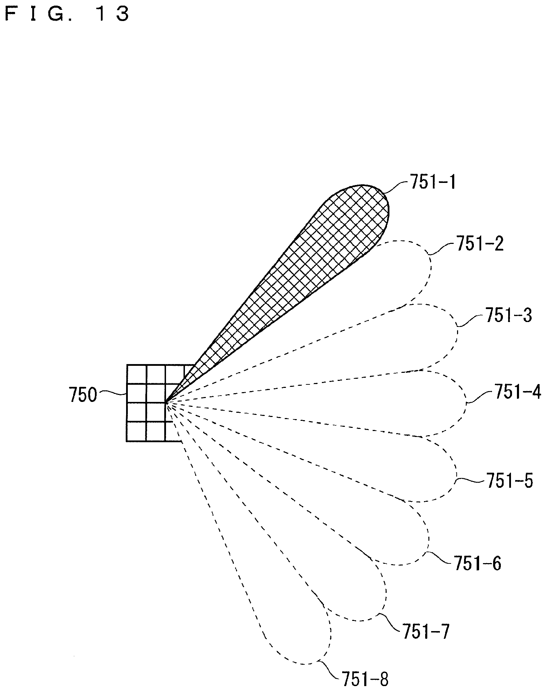

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

In 3GPP, the Side Link (SL) is supported for the Device-to-Device (D2D) communication and the Vehicle-to-Vehicle (V2V) communication (see Non-Patent Documents 1 and 16). The SL is defined by the PC5 interface.

The physical channels to be used for the SL (see Non-Patent Document 1) are described. A physical sidelink broadcast channel (PSBCH) carries information related to systems and synchronization, and is transmitted from the UE.

A physical sidelink discovery channel (PSDCH) carries a sidelink discovery message from the UE.

A physical sidelink control channel (PSCCH) carries control information from the UE for the sidelink communication and the V2X sidelink communication.

A physical sidelink shared channel (PSSCH) carries data from the UE for the sidelink communication and the V2X sidelink communication.

A physical sidelink feedback channel (PSFCH) carries, to the UE that has transmitted the PSSCH, the HARQ feedback in the sidelink from the UE that has received the PSSCH transmission.

The transport channels to be used for the SL (see Non-Patent Document 1) are described. A sidelink broadcast channel (SL-BCH) has a predetermined transport format, and is mapped to the PSBCH that is a physical channel.

A sidelink discovery channel (SL-DCH) has periodic broadcast transmission of a fixed size and a predetermined format. The SL-DCH supports both of the UE autonomous resource selection and the resource allocation scheduled by the eNB. The SL-DCH has collision risk in the UE autonomous resource selection. The SL-DCH has no collision when the eNB allocates dedicated resources to the UE. The SL-DCH supports the HARQ combining. However, the SL-DCH does not support the HARQ feedback. The SL-DCH is mapped to the PSDCH that is a physical channel.

A sidelink shared channel (SL-SCH) supports broadcast transmission. The SL-SCH supports both of the UE autonomous resource selection and the resource allocation scheduled by the eNB. The SL-SCH has collision risk in the UE autonomous resource selection. The SL-SCH has no collision when the eNB allocates dedicated resources to the UE. The SL-SCH supports the HARQ combining. However, the SL-SCH does not support the HARQ feedback. The SL-SCH also supports dynamic link adaptation by varying the transmission power, modulation, and coding. The SL-SCH is mapped to the PSSCH that is a physical channel.

Logical channels to be used for the SL (see Non-Patent Document 1) are described. A sidelink broadcast control channel (SBCCH) is a sidelink channel for broadcasting sidelink system information from one UE to other UEs. The SBCCH is mapped to the SL-BCH that is a transport channel.

A sidelink traffic channel (STCH) is a point-to-multipoint sidelink traffic channel for transmitting user information from one UE to other UEs. This STCH is used only by sidelink communication capable UEs and V2X sidelink communication capable UEs. The point-to-point communication between two sidelink communication capable UEs is realized with the STCH. The STCH is mapped to the SL-SCH that is a transport channel.

A sidelink control channel (SCCH) is a sidelink control channel for transmitting control information from one UE to other UEs. The SCCH is mapped to the SL-SCH that is a transport channel.

Supporting the V2X communication also in NR has been studied in 3GPP. Study of the V2X communication in NR has been pursued based on the LTE system and the LTE-A system. There are changes and additions from the LTE system and the LTE-A system in the following points.

In LTE, the SL communication relies only on broadcasts. In NR, supporting not only broadcasts but also unicasts and groupcasts has been studied as the SL communication (see Non-Patent Document 22 (TS23.287)).

Supporting, for example, the HARQ feedback (Ack/Nack) or the CSI report in the unicast communication or the groupcast communication has been studied.

Supporting the PC5-S signaling has been studied to support not only broadcasts but also unicasts and groupcasts in the SL communication (see Non-Patent Document 22 (TS23.287)). For example, the PC5-S signaling is performed for establishing the SL or a link for conducting the PC5 communication. This link is implemented by the V2X layer, and is also referred to as a Layer-2 link.

Supporting the RRC signaling in the SL communication has also been studied (see Non-Patent Document 22 (TS23.287)). The RRC signaling in the SL communication is also referred to as PC5 RRC signaling. As an example proposal, UEs performing the PC5 communication mutually notify the UE capability or the configuration of the AS layer for performing theV2X communication using the PC5 communication.

The communication between a UE and a NW through a relay in the SL communication has been proposed (see Non-Patent Documents 20 and 23). The relay between the UE and the NW may be referred to as a UE-to-NW relay or a UE-NW relay. In this invention, the UE relaying data between the UE and the NW may be referred to as a relay UE.

For example, a RAN node (e.g., the gNB) sometimes needs to communicate not only with a UE in a coverage of the RAN node but also with a more distant UE. Here, a method using the UE-NW relay is applicable. For example, the gNB and a UE (may be referred to as a remote UE) communicate through a relay UE. The gNB and the relay UE communicate via the Uu, and the relay UE and the remote UE communicate via the PC5.

Conventionally in the communication between the UE and the NW in the 5G system, a PDU session is established between the UE and the NW. However, since the UE and the NW communicate through the relay UE in the UE-NW relay, the conventional method is not applicable. A PDU session when the UE and the NW communicate through the relay UE is disclosed.

The relay UE and the NW establish a PDU session. The relay UE and a CN node establish a PDU session. The CN node may be the UPF. The relay UE and a data network (DN) may establish a PDU session. The relay UE and the remote UE establish a PC5-S link. The UE and the NW communicate through the relay UE, using the PDU session and the PC5-S link.

The relay UE and the CN node establish a PDU session for relaying data. The relay UE and the remote UE establish the PC5-S link. The relay UE notifies the AMF or the SMF of information on the relay UE. The relay UE may notify this in a procedure for establishing the PDU session. The remote UE notifies the relay UE of information on the remote UE. Furthermore, the remote UE may notify the AMF or the SMF of information on the remote UE. Specific examples of the information on the relay UE or the remote UE include an identifier of the UE and IP information. The IP information may be an IP address. Other specific examples of the information on the remote UE may include information on the PC5-S link between the remote UE and the relay UE. Examples of the information on the PC5-S link may include an identifier of the PC5-S link, an identifier of a transmission source UE, an identifier of a transmission target UE, PC5 QoS flow information, a PC5 QoS flow identifier, SLRB configuration information, and an SLRB identifier. The examples may include combinations of these.

The IP address of the remote UE may be IPv4. This can avoid increase in complexity of designing a device. The IP address of the remote UE may be IPv6. This can accommodate many UEs in a communication network.

The relay UE may store information on the remote UE. Furthermore, the AMF/SMF may store the information on the remote UE. The information on the remote UE may be associated with the relay UE. The information on the remote UE may be stored in association with the relay UE. The information on the remote UE may be associated with the PDU session established between the relay UE and the NW. The information on the remote UE may be stored in association with the PDU session established between the relay UE and the NW. For example, information on the remote UE may be stored in the context of the relay UE. Associating the information on the remote UE with the relay UE or with the PDU session established between the relay UE and the NW enables, for example, the AMF/SMF to recognize that the PDU session is not merely a PDU session between the relay UE and a CN but a PDU session for relaying data to the remote UE.

The AMF/SMF notifies the UPF of information on the remote UE. The UPF can recognize the information on the remote UE. Furthermore, the AMF/SMF may associate the information on the remote UE with the relay UE, and then notify the information. The AMF/SMF may associate the information on the remote UE with the PDU session established between the relay UE and the NW, and then notify the information. Associating the information on the remote UE with the relay UE or with the PDU session established between the relay UE and the NW enables, for example the UPF to recognize that the PDU session is not merely a PDU session between the relay UE and the CN but a PDU session for relaying data to the remote UE.

Consequently, the PDU session between the relay UE and the NW can be associated with the PC5-S link between the relay UE and the remote UE.

The relay UE functioning as a router of the remote UE forwards the PC5-S link between the remote UE and the relay UE and the PDU session between the relay UE and the NW. The relay UE may forward them using the information on the remote UE.

This enables data communication between the remote UE and the UPF through the relay UE.

As described above, the remote UE and the NW communicate through the relay UE in a state where the PDU session between the relay UE and the NW has been established. The relay UE needs to maintain a connected state with the NW. Furthermore, the remote UE and the NW communicate through the relay UE in a state where the PC5-S link between remote UE and the relay UE has been established. The remote UE needs to maintain a connected state with the relay UE. Thus, the power consumption of the relay UE and the remote UE is increased in the communication between the remote UE and the NW through the relay UE.

It is assumed that a device performing the SL communication is not only mounted on a vehicle but also carried by a pedestrian. Such a device has a limitation of a loadable battery capacity. Even when the device has a sufficient battery, reducing the power consumption of devices is demanded for building an ecological society. Thus, a challenge is reducing the power consumption of devices performing the SL communication, for example, the relay UE and the remote UE in the communication between the remote UE and the NW through the relay UE.

A method for solving the challenge is disclosed.

The relay UE with the UE-to-NW relay capability is permitted to transition to RRC_Idle. The relay UE with the UE-to-NW relay capability may be permitted to transition to CM_Idle. In other words, the RRC connection between the relay UE and the gNB may be released. The PDU session between the relay UE and the NW may be released. Even when the PC5-S link between the remote UE and the relay UE has been established, the transition and the release may be performed.

The gNB and the relay UE perform an RRC release procedure. The gNB may start the RRC release for the relay UE. The relay UE may request the RRC release to the gNB. Upon receipt of the request for releasing the RRC, the gNB performs the RRC release procedure with the relay UE. When the AMF performs a procedure for releasing the PDU session with the gNB, the gNB may perform the RRC release procedure with the relay UE. This enables the relay UE to transition to an RRC_Idle state. Thus, the power consumption of the relay UE can be reduced.

The relay UE and a NW node may perform the procedure for releasing the PDU session. Such NW nodes include the gNB, the AMF, the SMF, and the UPF. The NW nodes may include a data network (DN). The AMF may start the procedure for releasing the PDU session between the relay UE and the NW. The SMF may request the AMF to release the PDU session. The UPF may request the AMF to release the PDU session through the SMF. The relay UE may request the AMF to release the PDU session. Upon receipt of the request for releasing the PDU session, the AMF performs the procedure for releasing the PDU session between the relay UE and the NW. This can release resources for the PDU session in the relay UE. Accordingly, the power consumption of the relay UE can be reduced. Moreover, the use efficiency of radio resources can be enhanced.

The AMF performs a procedure for releasing the CM connection between the relay UE and the NW. The AMF may start releasing the CM connection. The relay UE may request the AMF to release the CM connection. The gNB may request the AMF to release the CM connection with the relay UE. Upon receipt of the request for releasing the CM connection, the AMF performs the procedure for releasing the CM connection with the relay UE. Furthermore, upon receipt of the request for releasing the PDU session, the AMF may perform the procedure for releasing the CM connection. This enables the relay UE to transition to a CM_Idle state. Thus, the power consumption of the relay UE can be reduced.

The procedures for releasing the RRC connection, the PDU session, and the CM connection may be dedicatedly performed. Execution of a part or all of these releasing procedures can reduce the power consumption of the relay UE.

The releasing procedures should be performed with the PC5-S link between the relay UE and the remote UE being connected. The releasing procedures should be performed without releasing the PC5-S link between the relay UE and the remote UE.

The releasing procedures should be performed, for example, in the temporary absence of the communication between the remote UE and the NW. The releasing procedures should be also performed, for example, during a period without communication which is cyclically performed between the remote UE and the NW. For example, in the absence of service data communication between the remote UE and the NW, only the procedure for releasing the PDU session may be performed. For example, in the absence of the service data communication between the remote UE and the NW, the procedures for releasing the PDU session, the RRC connection, and even the CM connection may be performed. For example, in the absence of the service data communication and data communication including signaling between the remote UE and the NW, the procedures for releasing the PDU session, the RRC connection, and the CM connection may be performed. The power consumption of the relay UE can be reduced by performing the releasing procedures, releasing the connection between the relay UE and the NW, and transitioning the relay UE to the RRC_Idle state or the CM_Idle state.

A method for the relay UE or a NW node to determine whether to execute or request the releasing procedures is disclosed. In the absence of data of the PDU session for a predetermined period, the relay UE or the NW node determines whether to execute or request the releasing procedures.

The predetermined period may be statically determined, for example, in a standard. Alternatively, the NW node may be able to configure the predetermined period. The predetermined period may be semi-statically configurable. For example, the AMF or the PCF may configure the predetermined period. The AMF may configure the predetermined period, for example, using the QoS to be used for establishing the PDU session. A node that has configured the predetermined period notifies each node of the configured predetermined period.

The relay UE or the NW node may measure time information on the data communication in the PDU session. For example, the relay UE or the NW node measures the timing when the data communication in the PDU session has been performed. For example, the relay UE or the NW node may measure a period since data is communicated in the PDU session. The relay UE or the NW node may calculate a traffic pattern from the measured time information on the data communication. The relay UE or the NW node may perform the calculation, for example, using statistical treatment.

The measurement result may be stored in the node that has made the measurement. Alternatively, the measurement result may be notified to another NW node or a server. The other NW node or the server may calculate a traffic pattern from the measurement result. The node that has calculated the traffic pattern should notify the relay UE or the NW node of the calculated traffic pattern.

This enables the relay UE or the NW node to obtain the time information on the data communication in the PDU session. The relay UE or the NW node should determine the absence of data for a predetermined period, using the time information.

The predetermined period may be configured in a timer. For example, when data is communicated in the PDU session, the timer is started. Each time new data is communicated, the timer is reset. In the absence of data communication and on expiration of the timer, the releasing procedures are performed or requested.

Another method for determining whether to execute or request the releasing procedures is disclosed. In the absence of data in the PC5-S link for a predetermined period, whether to execute or request the releasing procedures is determined.

The predetermined period may be statically determined, for example, in a standard. Alternatively, the NW node may be able to configure the predetermined period. The predetermined period may be semi-statically configurable. For example, the AMF or the PCF may configure the predetermined period. The AMF may configure the predetermined period, for example, using the QoS of the service to be communicated between the remote UE and the NW. A node that has configured the predetermined period notifies the relay UE or the remote UE of the configured predetermined period.

The relay UE or the remote UE may measure the time information on the data communication in the PC5-S link. For example, the relay UE or the remote UE measures the timing when the data communication in the PC5-S link has been performed. For example, the relay UE or the remote UE may measure a period since data is communicated in the PC5-S link. The relay UE or the remote UE may calculate a traffic pattern from the measured time information on the data communication. The relay UE or the remote UE may perform the calculation, for example, using statistical treatment.

The measurement result may be stored in the relay UE or the remote UE that has made the measurement. Alternatively, the remote UE may notify another NW node or a server of the measurement result through the relay UE. Alternatively, the relay UE may notify the other NW node or the server of the measurement result. The other NW node or the server may calculate a traffic pattern from the measurement result. The node that has calculated the traffic pattern should notify the remote UE or the relay UE of the calculated traffic pattern.

This enables the remote UE or the relay UE to obtain the time information on the data communication in the PC5-S link. The remote UE or the relay UE should determine the absence of data for a predetermined period, using the time information.

The predetermined period may be configured in a timer. For example, when data is communicated in the PC5-S link, the timer is started. Each time new data is communicated, the timer is reset. In the absence of data communication and on expiration of the timer, the releasing procedures are performed or requested.

The predetermined period configured in the PDU session may be different from that configured in the PC5-S link. This enables a flexible configuration according to each communication timing. Alternatively, these predetermined periods may be configured as the same period. The same configuration can be used for both of the PC5-S link and the PDU session, according to the service for communicating between the remote UE and the NW. This can facilitate the releasing procedures. Configuring the predetermined periods as the same value enables, for example, the relay UE that has established the PC5-S link and the PDU session to manage the predetermined periods by one timer. This can avoid increase in complexity of determining whether to transition to the releasing procedures.

In the absence of data communication for a predetermined period, this method enables the relay UE to transition to the RRC_Idle state or the CM_Idle state. Moreover, the power consumption of the relay UE can be reduced.

The remote UE may request the RRC release between the relay UE and the gNB. The remote UE may request the RRC release to the relay UE or the gNB.

The remote UE may issue a request for releasing the PDU session between the relay UE and the NW. The remote UE may request the relay UE, the gNB, the AMF, the SMF, the UPF, or the DN to release the PDU session.

The remote UE may issue a request for releasing the CM connection between the relay UE and the NW. The remote UE may request the relay UE, the gNB, or the AMF to release the CM connection.

Since the remote UE recognizes the service for communicating with the NW, the remote UE can easily determine, for example, the temporary absence of the communication between the remote UE and the NW. The remote UE requests the releasing procedures between the relay UE and the NW. This enables the relay UE to transition to the RRC_Idle state or the CM_Idle state that is appropriate for the communication service between the remote UE and the NW.

The method for determining whether to execute or request the releasing procedures in the absence of data in the PC5-S link for a predetermined period should be appropriately applied for the remote UE to determine whether to execute or request the releasing procedures. The presence or absence of data communication in the PDU session is determined, depending on the presence or absence of data communication in the PC5-S link. Since the PC5-S link between the remote UE and the relay UE and the PDU session between the relay UE and the NW are used for communication between the remote UE and the NW, the determination takes effect.

In the absence of data communication in the PC5-S link for a predetermined period, the remote UE can transition the relay UE to the RRC_Idle state or the CM_Idle state. Thus, the power consumption of the relay UE can be reduced.

What is disclosed is a method for releasing the connection between the relay UE and the NW in the absence of data communication in the communication between the remote UE and the NW through the relay UE. What is also disclosed is a procedure for transitioning the relay UE to the RRC_Idle state or the CM_Idle state. When the relay UE is in the RRC_Idle state or the CM_Idle state and data for the relay UE has been generated, the method and the procedure enable notification of generation of the data. However, when data from the Application Server (AS) or the DN to the remote UE has been generated with the relay UE being in the RRC_Idle state or the CM_Idle state, generation of the data cannot be notified. Thus, the data cannot be transmitted to the remote UE through the relay UE.

A method for solving such a problem is disclosed.

What is previously described is that the AMF may store information on the remote UE in association with the relay UE as a communication method between the remote UE and the NW. Information associating the relay UE with the remote UE may be provided. In this invention, the information associating the relay UE with the remote UE may be simply referred to as associating information. The remote UE associated with the relay UE should be a remote UE with which the relay UE has established the PDU session and which communicates with the NW. The remote UE associated with the relay UE may be a remote UE that has established the PC5-S link with the relay UE.

One relay UE may be associated with a plurality of remote UEs. This is effective when the remote UEs communicate with the NW through the one relay UE. One remote UE may be associated with a plurality of relay UEs. This is effective when the remote UE communicates with the NW through the plurality of relay UEs.

The AMF may manage the mobility of the remote UE. The AMF can manage the mobility of the remote UE by holding information relevant to the remote UE. The AMF may associate the remote UE with the relay UE and manage the mobility of the remote UE together with the mobility of the relay UE.

The associating information may be a list. The associating information may include information on each UE. Examples of the information on each UE include an identifier, IP information, a service type, and slice information. The associating information may include information on the remote UE. The associating information may be a list describing the relay UE as an index and the remote UE associated with the relay UE. For example, the AMF can easily create a list. This is because the AMF can create a list including the remote UE as an information element of the relay UE that has obtained the remote UE relevant information.

The associating information may be a list describing the remote UE as an index and the relay UE associated with the remote UE. Since the AMF can create a list including the relay UE as an information element of the remote UE, for example, the AMF can easily search for the relay UE associated with the remote UE upon receipt of notification of generation of the data for the remote UE.

What is disclosed is a procedure for transitioning the relay UE to the RRC_Idle state or the CM_Idle state in the communication between the remote UE and the NW through the relay UE. The AMF holds the associating information even when the relay UE is in the RRC_Idle state or the CM_Idle state.

Information on the remote UE may be appropriately updated. When the information on the remote UE is updated, the remote UE may notify the relay UE, the AMF, or the SMF of the updated information. The relay UE may notify the AMF or the SMF of the updated information on the remote UE. When information on the relay UE connected to the remote UE is updated, the remote UE may notify the AMF or the SMF of the updated information. For example, when the relay UE is newly connected to the remote UE, the relay UE may notify the AMF or the SMF of information on the remote UE. For example, upon receipt of the updated information on the remote UE from the remote UE, the relay UE may notify the AMF or the SMF of the updated information on the remote UE.

Furthermore, the relay UE may notify the AMF or the SMF of information on the remote UE whose connection with the relay UE has been released. The relay UE may notify information indicating that the connection between the relay UE and the remote UE has been released.

The AMF may update the associating information, using these pieces of updated information.

The AMF may include the associating information in context information on the relay UE.

For example, the gNB may request the AMF to release the context of the relay UE in the procedure for releasing the PDU session or in the procedure for transitioning the relay UE to the RRC_Idle state or the CM_Idle state. Upon receipt of the request for releasing the context of the relay UE, the AMF performs a procedure for releasing the context of the relay UE. The AMF discards the context of the relay UE.

When the associating information is included in the context information on the relay UE, a problem of releasing the associating information simultaneously with releasing of the context of the relay UE occurs. To avoid this, the AMF should hold the context information on the relay UE including the associating information, even when the relay UE is in the RRC_Idle state or the CM_Idle state. Alternatively, the AMF should hold only the associating information in the context information on the relay UE, even when the relay UE is in the RRC_Idle state or the CM_Idle state.

A message for releasing the context may include information indicating holding a part or the entirety of the context information. The context information to be held may be the associating information. This enables the AMF to determine whether to hold the associating information as it is even when the relay UE is in the RRC_Idle state or the CM_Idle state.

Although what is disclosed is that the AMF creates and stores the associating information, the relay UE or the gNB may create and store the associating information. The relay UE or the gNB may notify the AMF or the SMF of the associating information in the procedure for releasing the PDU session or in the procedure for transitioning the relay UE to the RRC_Idle state or the CM_Idle state. Here, the relay UE or the gNB may notify the latest updated associating information. The AMF holds the latest updated associating information even when the relay UE is in the RRC_Idle state or the CM_Idle state.

For example, when data for the remote UE has been generated and the AMF receives notification of the generation of the data for the remote UE during the RRC_Idle state or the CM_Idle state of the relay UE, the AMF can easily detect the relay UE associated with the remote UE.

While the relay UE is in the RRC_Idle state or the CM_Idle state, upon receipt of the signaling indicating the generation of the data for the remote UE, the AMF notifies the relay UE associated with the remote UE of paging. The AMF should use the associating information to detect the relay UE associated with the remote UE. The AMF notifies the relay UE of the paging through the gNB to which the relay UE is connected.

The AMF may include, in the paging to the relay UE, information indicating the paging caused by the generation of the data for the remote UE. Alternatively, the AMF may include, in the paging to the relay UE, information on the remote UE. The AMF may include, for example, an identifier of the UE as the information on the remote UE in the paging to the relay UE. This enables the relay UE to recognize the paging caused by the generation of the data for the remote UE.

Upon receipt of the paging, the relay UE establishes a PDU session with the NW. When the relay UE that has received the paging receives the information indicating the paging caused by the generation of the data for the remote UE, the relay UE establishes the PDU session with the NW. The PDU session may be for relaying data. The PDU session may be for communicating with the remote UE for which the data has been generated. Consequently, the relay UE and the NW can establish the PDU session for communication between the remote UE and the NW. When data for the remote UE has been generated even after transition of the relay UE to the RRC_Idle state or the CM_Idle state, the relay UE and the NW can reestablish the PDU session, and the remote UE and the NW can communicate using the PDU session.

Upon receipt of the paging, the relay UE may transition to a connected state with the NW. Upon receipt of the paging, the relay UE may transition to an RRC_Connected state or a CM_Connected state with the NW. Consequently, the relay UE and the NW become reconnected. Then, the remote UE and the NW can communicate through the relay UE.

When the relay UE that has received the paging from the AMF is not connected to the remote UE that is a transmission destination of the generated data, the relay UE may notify the gNB or the AMF of information indicating no connection with the remote UE that is the transmission destination of the data. The AMF may notify the SMF or the UPF of information indicating that the relay UE is not connected to the remote UE that is the transmission destination of the data. The UPF may notify the AS or the DN of information indicating that the relay UE is not connected to the remote UE that is the transmission destination of the data. This can indicate no connection between the remote UE and a transmission source of the data for the remote UE.

When receiving, from the relay UE or the gNB, information indicating that the relay UE is not connected to the remote UE that is the transmission destination of the data, the AMF may update the associating information. Thus, retransmission of the paging to the relay UE becomes unnecessary. This can reduce the amount of signaling and malfunctions in a communication procedure between the remote UE and the NW through the relay UE.

What is disclosed is that the AMF notifies the relay UE of the paging through the gNB. The relay UE can perform the discontinuous reception (DRX) using the paging. Upon receipt of the paging from the gNB on a paging cycle (may be referred to as a paging DRX cycle in this invention), the relay UE can recognize whether data for the remote UE has been generated.

Since the relay UE can perform the DRX, the power consumption of the relay UE can be reduced.

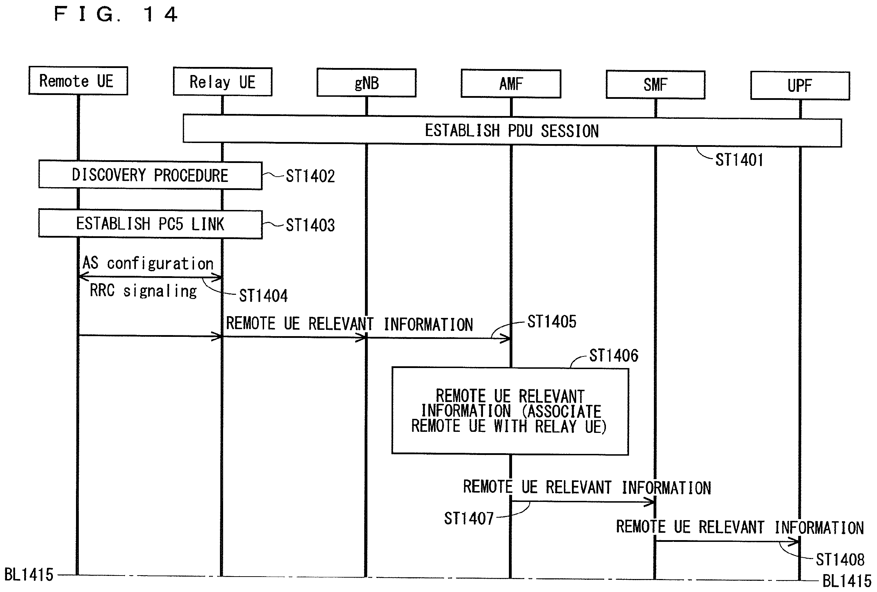

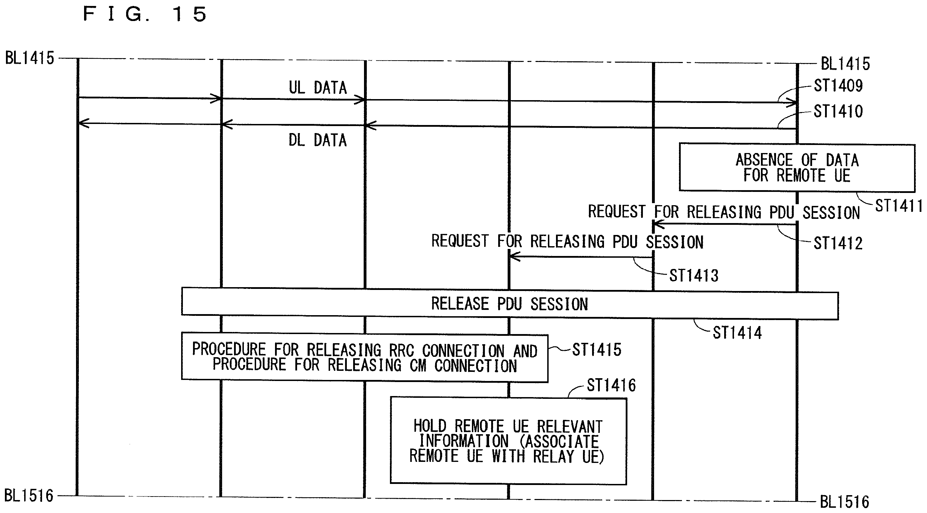

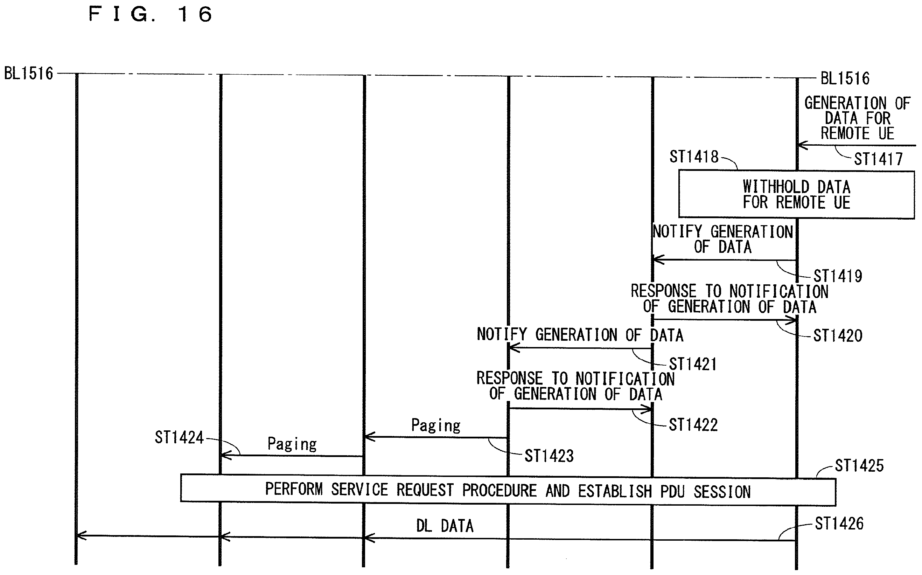

FIGS. 14 to 16 are sequence diagrams illustrating an example method for communicating between the UE and the NW through the relay UE according to the first embodiment. FIGS. 14 to 16 are connected across locations of borders BL1415 and BL1516. FIGS. 14 to 16 disclose a method for transitioning the relay UE to the RRC_Idle state or the CM_Idle state in the absence of data between the remote UE and the NW. In Step ST1401, the relay UE performs a procedure for establishing the PDU session with the gNB, the AMF, the SMF, and the UPF to establish the PDU session between the relay UE and the UPF. The relay UE should perform the procedure for establishing the PDU session before relaying data.

In Step ST1402, the remote UE and the relay UE perform the discovery procedure for detecting a data transmission destination. In this discovery procedure, the relay UE may notify information exhibiting that the relay capability between the NW and a UE exists. Upon receipt of the information, the remote UE can recognize that the remote UE can communicate with the NW through the relay UE.

In this discovery procedure, the remote UE may notify information indicating that the remote UE is searching for the relay UE between the NW and its own UE. The remote UE may notify information requesting a connection with the NW. The remote UE may notify information requesting to relay data to the NW. The remote UE may notify information indicating the NW as a destination. Upon receipt of the information, the relay UE can recognize that the remote UE is requesting the connection with the NW through its own relay UE.

In Step ST1403, the remote UE and the relay UE perform a procedure for establishing the PC5 link. The remote UE and the relay UE perform, for example, a procedure for establishing the PC5-S link as the procedure for establishing the PC5 link. The remote UE that has detected the relay UE for communicating with the NW may perform the procedure for establishing the PC5-S link with the relay UE in Step ST1403. Through this procedure, the remote UE and the relay UE establish the PC5-S link. In this procedure, the remote UE may notify information requesting a connection with the NW, information requesting relaying data to the NW, or information indicating the NW as a destination. The relay UE can recognize that the remote UE is requesting a connection with the NW through its own relay UE.

In Step ST1404, the remote UE and the relay UE may mutually notify the AS configuration. The AS configuration may include, for example, the SLRB configuration for data communication, or an SLRB identifier. The remote UE and the relay UE should configure the PC5 QoS flow and establish the SLRB configuration for mapping the PC5 QoS flow, using the QoS required for the service to be communicated between the remote UE and the NW. For example, the remote UE calculates the QoS relevant information corresponding to the generated service. The remote UE should configure the PC5 QoS flow and a PC5 QoS flow identifier, from the QoS relevant information. Furthermore, the remote UE establishes the SLRB configuration for mapping the PC5 QoS flow. The remote UE may configure an identifier of the SLRB configuration. This enables the PC5 communication satisfying the QoS required for the service.

Information for mapping the QoS to the SLRB configuration may be preconfigured in the remote UE. When the remote UE is out of the coverage of the gNB, the remote UE should establish the SLRB configuration using the information for mapping the QoS to the SLRB configuration which has been preconfigured in its own remote UE.

The QoS relevant information may include a PC5 QoS parameter (simply referred to as a QoS parameter by omitting PC5). The PC5 QoS parameter may include, for example, a PQI (see Non-Patent Document 22 (TS23.287)). The QoS relevant information may include QoS characteristics (see Non-Patent Document 22 (TS23.287)). The PC5 QoS parameter and the QoS characteristics may be referred to as a QoS profile.

The QoS relevant information may include a PC5 QoS flow identifier (PQI). This identifier should be used as information for identifying the QoS flow configured by the remote UE for the data communication with the relay UE in the PC5.

As the procedure for establishing the PC5-S link, a procedure for establishing the PC5-S link from the remote UE to the relay UE, from the relay UE to the remote UE, or from the remote UE to the relay UE and from the relay UE to the remote UE may be performed.

After the procedure for establishing the PC5-S link from the remote UE to the relay UE and a process of notifying the AS configuration for the SL communication from the remote UE to the relay UE, a procedure for establishing the PC5-S link from the relay UE to the remote UE and a process of notifying the AS configuration for the SL communication from the relay UE to the remote UE may be performed.

After the procedure for establishing the PC5-S link from the remote UE to the relay UE and from the relay UE to the remote UE, the process of notifying the AS configuration for the SL communication from the remote UE to the relay UE, and the process of notifying the AS configuration for the SL communication from the relay UE to the remote UE may be performed.

This enables the bidirectional SL communication. Consequently, the remote UE can communicate with the relay UE, and the relay UE can communicate with the remote UE.

In Step ST1405, the remote UE notifies the AMF of the remote UE relevant information through the relay UE and the gNB. In Step ST1406, the AMF stores the remote UE relevant information in the context of the relay UE to associate the remote UE relevant information with the relay UE. The AMF may store information on the remote UE in association with the relay UE. The AMF may store the associating information associating the relay UE with the remote UE.

In Step ST1407, the AMF notifies the SMF of the remote UE relevant information. The AMF may notify the SMF of the information associating the relay UE with the remote UE. In Step ST1408, the SMF notifies the UPF of the remote UE relevant information. The SMF may notify the UPF of the information associating the relay UE with the remote UE. This enables the UPF to recognize that the PDU session established with the relay UE is for relaying data to the remote UE. For example, when the DL data for the remote UE has been generated, the UPF can transmit the DL data to the remote UE through the relay UE.

In Step ST1409, the remote UE and the UPF can communicate the UL data. In Step ST1410, the UPF and the remote UE can communicate the DL data.

In Step ST1411, the UPF determines the presence or absence of generation of data for the remote UE in the communication between the remote UE and the NW. For example, in the absence of generation of the data for a predetermined period, the UPF may determine the absence of the data generation. The UPF that has determined the absence of generation of the data for the remote UE in Step ST 1411 notifies the SMF of a request for releasing the PDU session between the relay UE and the NW that is used for the communication between the remote UE and the NW through the relay UE in Step ST1412. The UPF may use the information associating the remote UE with the relay UE to identify the PDU session between the relay UE and the NW that is used for the communication between the remote UE and the NW through the relay UE. The UPF can determine, for data for the remote UE, to request releasing the PDU session established between which relay UE and the NW.

In Step ST1413, the SMF notifies the AMF of a request for releasing the PDU session between the relay UE and the NW. In Step ST1414, the AMF performs the procedure for releasing the PDU session with the relay UE, the gNB, the SMF, and the UPF. In Step ST1415, the relay UE and the gNB perform the procedure for releasing the RRC connection, and the relay UE, the gNB, and the AMF perform the procedure for releasing the CM connection. Consequently, the relay UE transitions to the RRC_Idle state or the CM_Idle state. The relay UE that has transitioned to the RRC_Idle state or the CM_Idle state starts receiving the paging with the paging DRX configuration broadcast from the gNB.

In Step ST1416, the AMF holds the remote UE relevant information. The AMF holds the associating information associating the remote UE with the relay UE. As described above, holding the information associating the remote UE with the relay UE even after transition of the relay UE to the RRC_Idle state or the CM_Idle state enables the AMF to determine the relay UE that notifies the paging when data for the remote UE has been generated or an incoming call occurs.

In Step ST1417, the UPF receives data for the remote UE from the AS or the DN. In Step ST1418, the UPF withholds the data for the remote UE. In Step ST1419, the UPF notifies the SMF of generation of the data for the remote UE. Upon receipt of the notification, the SMF may notify the UPF of a response to the notification of the generation of the data in Step ST1420. In the absence of the response to the notification of the generation of the data, the UPF may notify the generation of the data for the remote UE again. This can reduce malfunctions. In Step ST1421, the SMF notifies the AMF of the generation of the data for the remote UE. Upon receipt of the notification, the AMF may notify the SMF of a response to the notification of the generation of the data in Step ST1422. In the absence of the response to the notification of the generation of the data, the SMF may notify the generation of the data for the remote UE again. This can reduce malfunctions.

Upon receipt of the notification of the generation of the data for the remote UE, the AMF identifies to which relay UE the paging should be notified, using the held information associating the remote UE with the relay UE. In Step ST1423, the AMF notifies the gNB to which the identified relay UE is connected of the paging. As described above, the AMF may include, in the paging, information indicating the paging for the remote UE. In Step ST1424, the gNB notifies the relay UE of the paging. The gNB may include, in the paging, information indicating the paging for the remote UE.

Upon receipt of the paging, the relay UE performs the procedure for establishing the PDU session in Step ST1425. The relay UE may perform a service request procedure. The relay UE performs the procedure for establishing the PDU session through the service request procedure. The relay UE establishes the RRC connection with the gNB through this procedure. Furthermore, the relay UE establishes the CM connection with the AMF. The relay UE can recognize the paging for the remote UE from information indicating, in the paging, the paging for the remote UE. The relay UE that recognizes the paging for the remote UE can perform the procedure for establishing the PDU session for relaying data.

In Step ST1426, the UPF can transmit, to the gNB to which the relay UE is connected, the withheld data for the remote UE. The gNB can transmit the data to the relay UE. Then, the relay UE can transmit the data to the remote UE.

Furthermore, establishment of the PDU session between the relay UE and the UPF in Step ST1425 enables the remote UE to transmit the data (may be referred to as UL data) to the NW.

This enables the relay UE to transition to the RRC_Idle state or the CM_Idle state in the communication between the remote UE and the NW through the relay UE. Even when the relay UE has transitioned to the RRC_Idle state or the CM_Idle state, the relay UE can establish the RRC connection and the CM connection again with generation of data, and establish the PDU session for relaying data.

What is disclosed is a case where data has been generated from, for example, the AS or the DN for the remote UE while the relay UE is in the RRC_Idle state or the CM_Idle state. Hereinafter, a case where service data has been generated from the remote UE is disclosed.

The remote UE transmits the generated data to the relay UE. Upon receipt of the data from the remote UE, the relay UE performs the procedure for establishing the PDU session with the NW. When data from the remote UE has been generated even after transition of the relay UE to the RRC_Idle state or the CM_Idle state, this method enables the relay UE and the NW to reestablish the PDU session. Accordingly, the remote UE can communicate with the NW using the PDU session. Upon receipt of the data from the remote UE, the relay UE may transition to a connected state with the NW. Upon receipt of the data from the remote UE, the relay UE may transition to an RRC _Connected state or a CM_Connected state with the NW. Consequently, the relay UE and the NW become reconnected. Then, the remote UE can communicate with the NW through the relay UE.

Another method is disclosed. The remote UE notifies the relay UE of a request for establishing the PDU session. The PDU session may be a PDU session for relaying data. The request for establishing the PDU session may include cause information. The cause information indicates a cause for requesting establishment of the PDU session. The cause information may be, for example, generation of data or a request for a relay procedure. Provision of the cause information and its inclusion in the request for establishing the PDU session enable the relay UE to recognize for what the PDU session is requested. Upon receipt of the request for establishing the PDU session from the remote UE, the relay UE performs the procedure for establishing the PDU session with the NW. After establishing the PDU session, the relay UE may notify the remote UE of the completion of establishing the PDU session. Then, the remote UE transmits data to the relay UE.

Upon establishment of the PDU session, the relay UE may transition to a connected state with the NW. The relay UE may transition to an RRC_Connected state or a CM_Connected state with the NW. Consequently, the relay UE and the NW become reconnected. Then, the remote UE and the NW can communicate through the relay UE.

The remote UE may notify the relay UE of a request for establishing the RRC connection. Furthermore, the remote UE may notify the relay UE of a request for establishing the CM connection. The request for establishing the RRC connection or the CM connection may include cause information. The cause information indicates a cause for requesting the RRC connection or the CM connection. The cause information may be, for example, generation of data or a request for the relay procedure. Provision of the cause information and its inclusion in the request enable the relay UE to recognize for what the RRC connection or the CM connection is requested. Upon receipt of the request, the relay UE may transition to an RRC _Connected state or a CM _Connected state with the NW. Consequently, the relay UE and the NW become reconnected. Then, the remote UE and the NW can communicate through the relay UE. Furthermore, the remote UE may notify the relay UE of a request for establishing the PDU session. Establishment of the PDU session with the NW enables the relay UE to communicate data from the remote UE to the NW.

The relay UE may notify the remote UE of whether the PDU session has been established with the NW. The relay UE may notify the remote UE of whether the relay UE is in an RRC_Idle state with the NW. The relay UE may notify the remote UE of whether the relay UE is in a CM_Idle state with the NW. RRC state information or CM state information may be provided. The relay UE may notify the remote UE of the RRC state information and/or the CM state information with the NW. The relay UE may give the notification via the PC5-S signaling or the RRC signaling. The relay UE may notify the information using the PSCCH or the PSSCH. This enables the relay UE to give the notification early. This enables the remote UE to recognize a connected state between the relay UE and the NW.

When the service data has been generated in the remote UE, the remote UE should determine whether to notify a request for establishing the PDU session, the RRC connection, or the CM connection, according to the connected state between the relay UE and the NW.

When the connection between the relay UE and the NW is released or the PDU session to be established between the relay UE and the NW is released, the relay UE may notify the remote UE of information indicating the release of the connection or the PDU session between the relay UE and the NW. For example, when the connection between the relay UE and the NW is released due to deterioration of the communication quality between the relay UE and the gNB, the relay UE notifies the remote UE of information indicating the release of the connection between the relay UE and the NW. Upon receipt of the information, the remote UE may change the relay UE.

The relay UE may give the notification via the PC5-S signaling or the RRC signaling. Furthermore, the relay UE may notify the information using the PSCCH or the PSSCH. This enables the relay UE to give the notification early. Consequently, for example, the remote UE can change early the relay UE to a relay UE that can relay data with the NW.

A case where the relay UE moves across a tracking area is disclosed. The relay UE should perform a Tracking Area Update (TAU) procedure with the NW. The relay UE notifies the AMF of information relevant to its own relay UE and information relevant to the remote UE to which the relay UE is connected. The relay UE may notify the pieces of information in or after the TAU procedure. Upon receipt of the relevant information on the relay UE and the remote UE, the AMF creates the associating information. The aforementioned method should be appropriately applied to the procedure in the AMF. Consequently, when data for the remote UE has been generated in a state where the relay UE moves across a tracking area, this method enables the NW to transmit the data to the remote UE.

When the relay UE moves across a tracking area, the relay UE sometimes fails to maintain the connection with the remote UE. In such a case, the relay UE need not notify the AMF of the information relevant to the remote UE with which the relay UE fails to maintain the connection. Alternatively, the relay UE may notify the AMF to release or discard the information relevant to the remote UE. Furthermore, the relay UE need not establish the PDU session to be used for relay communication with the remote UE. When the connection between the relay UE and the remote UE is not maintained, this can, for example, prevent establishment of the PDU session or prevent the AMF from holding information associated with the remote UE. The wasteful processes can be avoided. Thus, malfunctions and the power consumption in the system can be reduced.

A method for the remote UE to change the relay UE is disclosed. The remote UE performs the discovery procedure to detect the relay UE with the PDU session for relaying data. The relay UE may transmit information indicating whether its own relay UE has the PDU session for relaying data, in the discovery procedure. For example, the relay UE may include the information in a solicitation message and transmit the information. This enables the remote UE to detect the relay UE with the PDU session for relaying data in the discovery procedure.

The remote UE measures the reception quality (may be received power) from one or more relay UEs including the relay UE to which the remote UE is connected, and selects one of the relay UEs with the best communication quality. When the selected relay UE is different from the relay UE to which the remote UE has been connected (may be referred to as an S-relay UE), the remote UE releases the PC5-S link with the S-relay UE and establishes the PC5-S link with the selected relay UE (may be referred to as a T-relay UE).

When the remote UE performs a procedure for releasing the PC5-S link with the S-relay UE, the remote UE may perform the releasing procedure without notifying the S-relay UE of anything. The S-relay UE may measure a period from the last communication with the remote UE. When the period from the last communication with the remote UE exceeds a predetermined period, the S-relay UE may release the PC5-S link with the remote UE. The predetermined period may be managed by a timer.

The S-relay UE may release the PC5-S link in the absence of a predetermined number of consecutive pieces of data in the resources cyclically selected and reserved by the remote UE.

The procedure for releasing the PC5-S link may be releasing the resources used for the PC5-S link connection. Furthermore, the procedure may be a procedure for releasing the RRC connection. The resources used for the RRC connection may be released.

When the PC5-S link between the remote UE and the T-relay UE has been established, the T-relay UE performs the procedure for establishing the PDU session for relaying data with the NW. The aforementioned method should be appropriately applied to this method.

Consequently, the T-relay UE is associated with the remote UE. Accordingly, the remote UE and the NW can communicate data through the T-relay UE. In the absence of data between the remote UE and the NW, the PDU session may be released. The connection between the T-relay UE and the NW may be released. The aforementioned method should be appropriately applied to this method.

Even when the remote UE changes the relay UE, this method enables the communication between the remote UE and the NW through a relay UE after change.

The disclosed method enables the relay UE to transition to the CM_Idle state or the RRC_Idle state in the communication between the remote UE and the NW through the relay UE. Since the relay UE can perform reception on a paging DRX cycle, the power consumption of the relay UE can be reduced.

What is disclosed is that the relay UE and the CN establish the PDU session for communication between the remote UE and the NW. One PDU session may be established for relaying data in the communication between a plurality of remote UEs and the NW. In other words, the relay UE may relay the communication between a plurality of remote UEs and the NW, using the one PDU session for relaying data which has been established with the CN. This enables the plurality of remote UEs to communicate with the NW through one relay UE.

A new remote UE may communicate with the NW, using the PDU session first established for the communication between a remote UE and the NW. Here, the PDU session may be modified. For example, when the PDU session first established for relaying data is not appropriate for the service to be implemented between the new remote UE and the NW, the PDU session may be modified. The relay UE may request modification of the PDU session. The remote UE may notify the relay UE of information on the service for communicating with the NW. The relay UE should determine whether to modify the PDU session, using the information on the service obtained from the remote UE.

The CN node, for example, the AMF, the SMF, or the UPF may request modification of the PDU session. The remote UE may notify the CN node of information on the service for communicating with the NW, through the relay UE and the gNB. The CN node should determine whether to modify the PDU session, using the information on the service obtained from the remote UE.

The PDU session for relaying data should be configured for each relay UE. The PDU session for relaying data may be managed for each relay UE. The PDU session for relaying data may be managed by an identifier of the relay UE. An identifier of the UE for which the PDU session for relaying data is configured may be an identifier of the relay UE. Configuration information on the PDU session for relaying data may include an identifier of the relay UE.

When one remote UE and the NW terminate communication in a situation where a plurality of remote UEs communicate with the NW using one PDU session, the PDU session may be modified. The aforementioned method should be appropriately applied. Whether to modify the PDU session may be determined, using information on the service in which communication between one remote UE and the NW is terminated.

The aforementioned procedure for releasing the PDU session is performed for the one PDU session. In the temporary absence of the communication between all the remote UEs and the NW in the communication between a plurality of remote UEs and the NW using the one PDU session for relaying data, the releasing procedure should be performed. For example, the releasing procedure should be performed during a period without any communication between all the remote UEs and the NW. The aforementioned method should be appropriately applied to these methods.

Another method is disclosed. A plurality of PDU sessions may be established for relaying data in the communication between a plurality of remote UEs and the NW. In other words, the relay UE may relay the communication between a plurality of remote UEs and the NW, using a plurality of PDU sessions for relaying data which have been established with the CN. For example, one PDU session may be established for the communication between each of the remote UEs and the NW. This enables the plurality of remote UEs to communicate with the NW through one relay UE.

The relay UE and the CN establish one PDU session so that one remote UE first communicates with the NW. In addition to the PDU session established early between the relay UE and the CN, one new PDU session is established for the communication between a new remote UE and the NW. The PDU session appropriate for the service to be implemented between the new remote UE and the NW is established.

After the new remote UE and the relay UE have established the PC5-S link, the relay UE and the CN may establish a new PDU session for relaying data between the remote UE and the NW. The PDU session appropriate for the communication between the remote UE and the NW can be established.

Before the new remote UE and the relay UE establish the PC5-S link, the relay UE and the CN may establish a new PDU session for relaying data between the new remote UE and the NW. The new remote UE and the NW should communicate through the relay UE using the PDU session already established. This can start the communication between the remote UE and the NW through the relay UE early.

A plurality of PDU sessions are established for one relay UE. A PDU session should be configured for each remote UE. A PDU session may be managed for each remote UE. A PDU session may be managed by an identifier of the remote UE. An identifier of the UE for which each PDU session is configured may be an identifier of the remote UE. Configuration information on the PDU session may include an identifier of the remote UE. Each PDU session may be managed not only by an identifier of the remote UE but also by an identifier of the relay UE and the identifier of the remote UE. For example, not only the identifier of the relay UE but also the identifier of the remote UE may be configured as the configuration information on the PDU session. Consequently, the PDU session for each remote UE is identifiable.

When one remote UE and the NW terminate communication in a situation where a plurality of remote UEs communicate with the NW using a plurality of PDU sessions, the PDU session for the one remote UE may be released. The aforementioned procedure for releasing the PDU session may be performed on the PDU session for each remote UE.

In the temporary absence of the communication between all the remote UEs and the NW in the communication between a plurality of remote UEs and the NW using the plurality of PDU sessions for relaying data, the procedure for releasing the RRC connection or the CM connection may be performed. For example, the procedure for releasing the RRC connection or the CM connection should be performed during a period without any communication between all the remote UEs and the NW. The aforementioned method should be appropriately applied to these methods.

Another method is disclosed. The method for establishing one PDU session for relaying data in the communication between a plurality of remote UEs and the NW may be combined with a method for establishing a plurality of PDU sessions for relaying data in the communication between a plurality of remote UEs and the NW. One or more PDU sessions may be established for relaying data in the communication between one or more remote UEs and the NW. For example, one PDU session may be established for a group consisting of a plurality of remote UEs so that the remote UEs in the group and the NW communicate for relaying data. For example, one PDU session may be established for one or more remote UEs using the same service. Consequently, a PDU session can be flexibly established according to the service to be communicated between the remote UEs and the NW.

### The First Modification of the First Embodiment

Another method for solving the problem described in the first embodiment is disclosed.

The UE determines a preferred RRC state of another UE. Such preferred RRC states include RRC _Idle, RRC_Inactive, and RRC _Connected. Preferred RRC state information on the other UE may be provided. The UE notifies the gNB of the preferred RRC state information on the other UE. The gNB may transition the RRC state of the other UE, using the received preferred RRC state information.

The remote UE determines a preferred RRC state of the relay UE. The remote UE notifies the gNB of the preferred RRC state information on the relay UE. The remote UE notifies, through the relay UE, the gNB to which the relay UE is connected or the gNB on which the relay UE is camping of the preferred RRC state information on the relay UE. Since the gNB to which the relay UE is connected or the gNB on which the relay UE is camping can transition the RRC state of the relay UE, the remote UE should notify the gNB to which the relay UE is connected or the gNB on which the relay UE is camping of the preferred RRC state information on the relay UE.

For example, in the absence of communication data between the remote UE and the NW, the remote UE determines RRC_Idle as a preferred RRC state of the relay UE. The remote UE configures RRC_Idle as the preferred RRC state information on the relay UE, and notifies the gNB to which the relay UE is connected of the preferred RRC state information on the relay UE through the relay UE. The gNB to which the relay UE is connected may transition the RRC state of the relay UE, using the received preferred RRC state information on the relay UE. For example, when the relay UE is in the RRC connected state, the gNB may perform the procedure for releasing the RRC connection so that the relay UE transitions to the RRC_Idle state.

The preferred RRC state information may include information for identifying on which UE the preference has been given. The remote UE may notify the information for identifying on which UE the preference has been given together with the preferred RRC state information. Upon receipt of the preferred RRC state information, the node can recognize on which UE the preferred RRC state information is.

The preferred RRC state information may include information for identifying which UE has given the preference. The remote UE may notify the information for identifying which UE has given the preference together with the preferred RRC state information. Upon receipt of the preferred RRC state information, the node can recognize which UE has given the preference on the RRC state information.

The remote UE may notify the relay UE of the preferred RRC state information via the PC5-S signaling. Even without the RRC configuration for transmitting data in the PC5 link, the remote UE can notify the relay UE of the preferred RRC state information. This enables the remote UE to notify the relay UE of the preferred RRC state information early. As another method, the remote UE may notify the relay UE of the preferred RRC state information via the PC5-RRC signaling. This enables the relay UE to process the information in the RRC. When the relay UE notifies the gNB of the preferred RRC state information via the RRC signaling, which will be described later, these procedures can be unified in the RRC. This can avoid increase in complexity. Furthermore, malfunctions can be reduced.

When the relay UE is in the RRC _Connected state, the relay UE may notify, via the RRC signaling, the gNB to which the relay UE is connected of the preferred RRC state information received from the remote UE. This can avoid increase in complexity of the processes, for example, when the relay UE notifies the preferred RRC state information received from the remote UE via the PC5-RRC signaling between the remote UE and the relay UE. The preferred RRC state information on the relay UE may be included in the UE Assistance Information, and notified via the RRC signaling.

When the relay UE is in the RRC_Idle state or the RRC_Inactive state, the relay UE may notify the gNB on which the relay UE is camping of the preferred RRC state information received from the remote UE, using the random access (RA) procedure. For example, in the 4-step RACH (see Non-Patent Document 16 (TS38.300)), the relay UE may notify the preferred RRC state information using the MSG3. The MSG3 can increase the probability of reaching the information through the collision avoidance procedure. The relay UE may notify the preferred RRC state information, for example, using the 2-step RACH procedure. In the 2-step RACH (see Non-Patent Document 16 (TS38.300)), the relay UE should notify the preferred RRC state information using the MSGA. The relay UE may notify the preferred RRC state information using the PUSCH with the MSGA. This enables the relay UE to give the notification early.

When the relay UE is in the RRC_Idle state or the RRC_Inactive state, the relay UE may notify the gNB of the preferred RRC state information received from the remote UE after establishing the RRC connection with the gNB. The method when the relay UE is in the RRC _Connected state should be appropriately applied to the notification method.

Consequently, the relay UE can notify the gNB to which the relay UE is connected of the preferred RRC state information on the relay UE which has been determined by the remote UE. The gNB can recognize, from the received preferred RRC state information, the preferred RRC state, which UE has given the preference, or on which UE the preference has been given. The gNB may transition or maintain the RRC state of the relay UE, using the received preferred RRC state information.

For example, when the remote UE determines the absence of communication data with the NW during the RRC connected state of the relay UE, the remote UE configures RRC_Idle as the preferred RRC state information on the relay UE, and notifies the relay UE of the configured information. The remote UE may include, in the notification, information indicating that the remote UE has given the preference and the preference on the relay UE has been given. The relay UE notifies the gNB to which the relay UE is connected of the information. Upon receipt of the information, the gNB may determine to transition the relay UE to the RRC_Idle state, using the information. The gNB performs the procedure for releasing the RRC connection with the relay UE.

The gNB may notify the AMF of a request for releasing the PDU session between the relay UE and the NW. Upon receipt of the request, the AMF may perform the procedure for releasing the PDU session between the relay UE and the NW. Furthermore, the AMF may perform the procedure for releasing the CM connection with the relay UE. The relay UE that has transitioned to the RRC_Idle state or the CM_Idle state receives the paging from the gNB on the paging DRX cycle. The aforementioned method may be appropriately applied to these methods. When data for the remote UE has been generated even after transition of the relay UE to the RRC_Idle state or the CM_Idle state, the relay UE can transmit the data to the remote UE.

The gNB may make a determination in a manner different from that on the preferred RRC state of the relay UE. The gNB may notify the remote UE of the RRC state of the relay UE which has been determined by the gNB. This enables the remote UE to recognize how the state of the relay UE transitions. For example, the remote UE can determine whether to make the request again. For example, the remote UE can determine whether to change the relay UE.

When making the determination in a manner different from that on the preferred RRC state of the relay UE, the gNB may notify a rejection message to the remote UE. The gNB may include cause information in the rejection message. This enables the remote UE to recognize a cause of rejection of the preference. Furthermore, the gNB may include, in the rejection message, the RRC state determined by the gNB. This enables the remote UE to recognize how the state of the relay UE transitions. For example, the remote UE can determine whether to make the request again. For example, the remote UE can determine whether to change the relay UE.

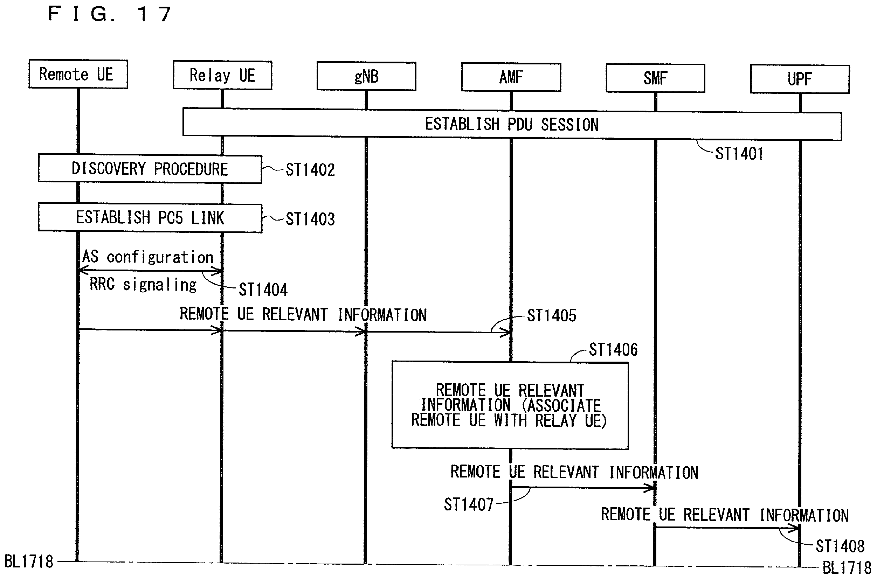

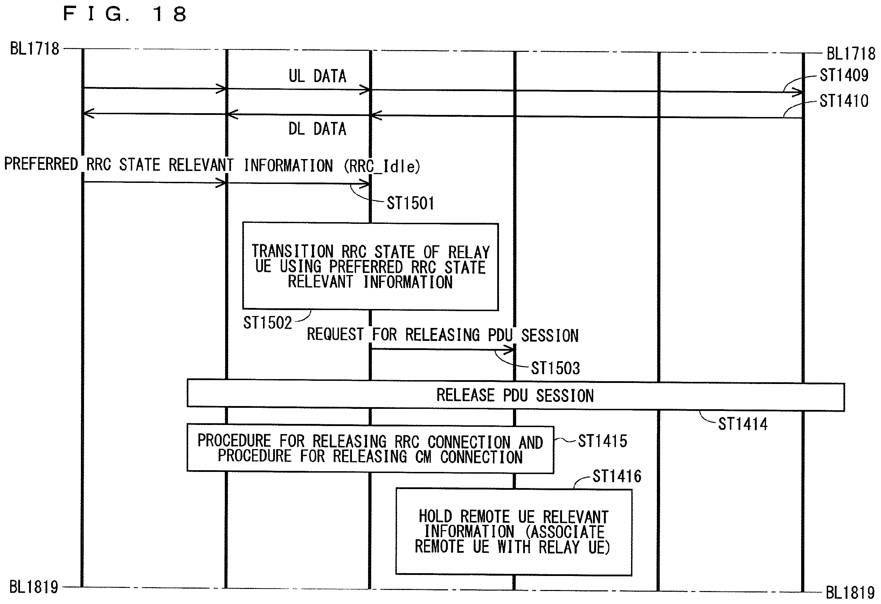

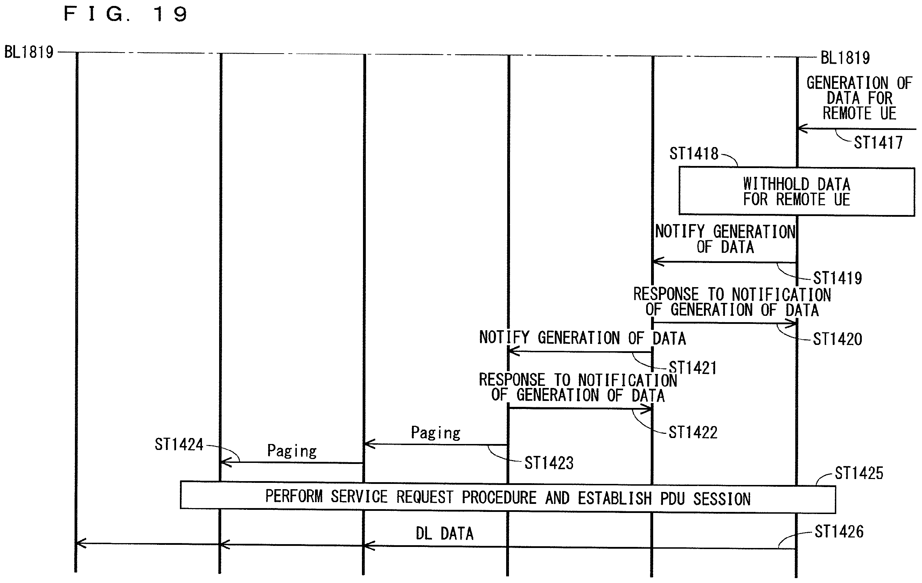

FIGS. 17 to 19 are sequence diagrams illustrating an example method for communicating between the UE and the NW through the relay UE according to the first modification of the first embodiment. FIGS. 17 to 19 are connected across locations of borders BL1718 and BL1819. FIGS. 17 to 19 disclose a method for transitioning the relay UE to the RRC_Idle state or the CM_Idle state by notifying the preferred RRC state information on the relay UE from the remote UE to the gNB to which the relay UE is connected in the absence of data between the remote UE and the NW. In FIGS. 17 to 19, the same step numbers are applied to the steps common to those in FIGS. 14 to 16, and the common description thereof is omitted.

In Steps ST1409 and ST1410, the remote UE transmits and receives data to and from the NW. The remote UE determines the presence or absence of generation of data in the communication between the remote UE and the NW. For example, the remote UE may determine the absence of generation of data when recognizing the absence of generation of data from the service relevant information. The remote UE that has determined the absence of generation of data configures RRC_Idle as the preferred RRC state information on the relay UE. In Step ST1501, the remote UE notifies, through the relay UE, the gNB to which the relay UE is connected of the preferred RRC state information on the UE. The remote UE may include, in the RRC state information, information indicating the preference from which UE to which UE.

Upon receipt of the RRC state information, the gNB can recognize RRC_Idle as the preferred RRC state of the relay UE. Furthermore, the gNB can recognize the preference to the communication for relaying data, from the preference from the remote UE. In Step ST1502, the gNB determines to transition or maintain the RRC state of the relay UE, using the preferred RRC state information on the relay UE. Here, the gNB determines to transition the relay UE to RRC_Idle.

In Step ST1503, the gNB notifies the AMF of a request for releasing the PDU session for relaying data between the relay UE and the NW. In Step ST1414, the AMF performs the procedure for releasing the PDU session between the relay UE and the NW. Since processes after Step ST1414 are common to those in FIGS. 14 to 16, the description is omitted.

These enable the remote UE to notify the gNB to which the relay UE is connected of the preferred RRC state of the relay UE. Thus, the gNB can recognize the preference, and transition the relay UE to the preferred RRC state of the relay UE which has been given by the remote UE, or maintain the preferred RRC state of the relay UE.

The remote UE may notify the relay UE of the preferred RRC state information on the relay UE. For example, when the relay UE is connected to a plurality of remote UEs, each of the remote UEs notifies the relay UE of the preferred RRC state information on the relay UE. The relay UE may derive the preferred RRC state information on its own relay UE, from the pieces of preferred RRC state information on its own UE which have been received from one or more remote UEs.

For example, when all the pieces of preferred RRC state information on the relay UE which have been received from the one or more remote UEs indicate RRC_Idle, the relay UE configures RRC_Idle as the preferred RRC state information on the relay UE. For example, when one of the pieces of preferred RRC state information on the relay UE which have been received from the one or more remote UEs indicates RRC_Connected, the relay UE configures RRC_Connected as the preferred RRC state information on its own UE.

The relay UE notifies the gNB to which its own UE is connected or the gNB on which its own UE is camping of the derived preferred RRC state information on its own UE. Upon receipt of the information, the gNB may determine to transition or maintain the RRC state of the relay UE, using the information. For example, when the gNB receives RRC_Idle from the relay UE as the preferred RRC state information on the relay UE and the relay UE is in the RRC connected state, the gNB may perform the procedure for releasing the RRC connection so that the relay UE transitions to the RRC_Idle state.

The aforementioned method should be applied to a method for notifying the preferred RRC state information on another UE from the remote UE to the relay UE. The aforementioned method should be also appropriately applied to a method for notifying the preferred RRC state information on the relay UE from the relay UE to the gNB.

Even when the relay UE is connected to a plurality of remote UEs, the relay UE can configure the preferred RRC state of its own UE, and notify the gNB of the preferred RRC state of its own UE. The gNB can transition or maintain the RRC state of the relay UE, using the received information. Thus, the RRC state of the relay UE can be controlled according to data communication states of the plurality of remote UEs connected to the relay UE.

The remote UE may notify the AMF of the preferred RRC state information on another UE. The remote UE may notify the AMF of the preferred RRC state information on the relay UE through the relay UE and the gNB. Furthermore, the relay UE may notify the AMF of the preferred RRC state information on the relay UE. Upon receipt of the information, the AMF may determine to release or maintain the PDU session between the relay UE and the NW, using the information. For example, when the AMF receives RRC_Idle from the remote UE as the preferred RRC state information on the relay UE through the gNB, the AMF may release the PDU session between the relay UE and the NW. Through the release of the PDU session, the gNB may perform the procedure for releasing the RRC connection with the relay UE. Furthermore, the AMF may perform the procedure for releasing the CM connection. This enables the relay UE to transition to the RRC_Idle state or the CM_Idle state. The relay UE that has transitioned to the RRC_Idle state or the CM_Idle state receives the paging from the gNB on the paging DRX cycle.

Preferred CM state information may be provided. Such preferred CM states include CM_Idle and CM_Connected. Preferred CM state information on its own UE may be provided. Preferred CM state information on another UE may be provided. The UE may notify the AMF of the preferred CM state information. The UE may notify the preferred CM state information via the NAS signaling. The UE may notify the gNB of the information via the RRC signaling. Then, the gNB may notify the AMF of the information via the N2 signaling. The UE may notify a UE connected in the PC5 of the preferred CM state information. The UE may give the notification via the PC5-S signaling or the PC5-RRC signaling. Upon receipt of the preferred CM state information, the AMF determines on which UE the CM state information has been given, and determines whether to transition or maintain the CM state of the UE, using the CM state information on the UE.

For example, when the remote UE determines the absence of communication data with the NW, the remote UE configures CM_Idle as the preferred CM state information on the relay UE, and notifies the AMF of the configured information through the relay UE and the gNB. When the relay UE establishes the CM connection, the AMF determines to transition the relay UE to CM_Idle using the received preferred CM state information on the relay UE, and performs the procedure for releasing the CM connection. Upon release of the CM connection between the relay UE and the NW, the gNB performs the procedure for releasing the RRC connection with the relay UE. This enables the relay UE to transition to the CM_Idle state or the RRC_Idle state.

The AMF may make a determination in a manner different from that on the preferred CM state of the relay UE. The AMF may notify the remote UE of the CM state of the relay UE which has been determined by the AMF. This enables the remote UE to recognize how the state of the relay UE transitions. For example, the remote UE can determine whether to make the request again. For example, the remote UE can determine whether to change the relay UE.

When making the determination in a manner different from that on the preferred CM state of the relay UE, the AMF may notify a rejection message to the remote UE. The AMF may include cause information in the rejection message. This enables the remote UE to recognize a cause of rejection of the preference. Furthermore, the AMF may include, in the rejection message, the CM state determined by the gNB. This enables the remote UE to recognize how the state of the relay UE transitions. For example, the remote UE can determine whether to make the request again. For example, the remote UE can determine whether to change the relay UE.

The remote UE may notify the relay UE of the preferred CM state information on the relay UE. For example, when the relay UE is connected to a plurality of remote UEs, each of the remote UEs notifies the relay UE of the preferred CM state information on the relay UE. The relay UE may derive the preferred CM state information on its own relay UE, from the pieces of preferred CM state information on its own UE which have been received from one or more remote UEs.

For example, when all the pieces of preferred CM state information on the relay UE which have been received from the one or more remote UEs indicate CM_Idle, the relay UE configures CM_Idle as the preferred CM state information on its own UE. For example, when one of the pieces of preferred CM state information on the relay UE which have been received from the one or more remote UEs indicates CM_Connected, the relay UE configures CM Connected as the preferred CM state information on its own UE.

The relay UE notifies the gNB to which its own UE is connected or the gNB on which its own UE is camping of the derived preferred CM state information on its own UE. Upon receipt of the information, the gNB may determine to transition or maintain the CM state of the relay UE, using the information. For example, when the gNB receives CM_Idle from the relay UE as the preferred CM state information on the relay UE and the relay UE is in the CM connected state, the gNB may perform a procedure for requesting the AMF to release the CM connection so that the relay UE transitions to the CM_Idle state.

The relay UE may notify the AMF of the derived preferred CM state information on its own UE. The relay UE may notify the information to the AMF through the gNB to which its own UE is connected or the gNB on which its own UE is camping. Upon receipt of the information, the AMF may determine to transition or maintain the CM state of the relay UE, using the information. For example, when the AMF receives CM_Idle from the relay UE as the preferred CM state information on the relay UE and the relay UE is in the CM connected state, the AMF may perform the procedure for releasing the CM connection so that the relay UE transitions to the CM_Idle state.

The aforementioned method for notifying the preferred RRC state information should be appropriately applied to a method for notifying the preferred CM state information on another UE from the remote UE to the relay UE.

Even when the relay UE is connected to a plurality of remote UEs, the relay UE can configure the preferred CM state of its own UE, and notify the gNB or the AMF of the preferred CM state of its own UE. The gNB or the AMF can transition or maintain the CM state of the relay UE, using the received information. Thus, the CM state of the relay UE can be controlled according to data communication states of the plurality of remote UEs connected to the relay UE.

The disclosed method enables the relay UE to transition to the CM_Idle state or the RRC_Idle state depending on the presence or absence of data to be communicated between the remote UE and the NW in the communication between the remote UE and the NW through the relay UE. Since the relay UE can perform reception on the paging DRX cycle, the power consumption of the relay UE can be reduced.

### The Second Modification of the First Embodiment

Another method for solving the problem described in the first embodiment is disclosed.

The first embodiment discloses the method for transitioning the relay UE to the CM_Idle state or the RRC_Idle state in the communication between the remote UE and the NW through the relay UE. The relay UE that has transitioned to the CM_Idle state or the RRC_Idle state receives the paging from the gNB on the paging DRX cycle. The paging methods include CN initiated paging and RAN initiated paging.

The CN initiated paging involves a method using the paging DRX cycle broadcast by a cell (may be referred to as a paging DRX cycle for each cell). In this method, the cell configures the paging DRX cycle. The gNB may configure a paging DRX cycle of a cell included in the gNB. The paging DRX cycle of a cell is configured for each cell. Thus, the paging DRX cycle for each cell which is appropriate for the relay UE cannot be configured in the communication between the remote UE and the NW through the relay UE.

The CN initiated paging involves a method using the paging DRX cycle specific to the UE. In this method, the paging DRX cycle can be configured for each UE. Thus, the paging DRX cycle for each relay UE can be configured in the communication between the remote UE and the NW through the relay UE. However, not the relay UE but the remote UE generates communication data in the communication between the remote UE and the NW through the relay UE. Thus, a paging DRX duration appropriate for the service to be generated between the remote UE and the NW cannot be configured. A method for solving such a problem is disclosed.

DRX relevant information on another UE whose preference is given by the UE is provided. This information is referred to as preferred DRX relevant information on another UE in the present invention. The UE determines the preferred DRX relevant information on another UE. Specific examples of the preferred DRX relevant information include a paging DRX cycle, a paging frame, and a paging slot.

Other specific examples of the preferred DRX relevant information include a paging reception period and a cycle of the paging reception period. The paging reception period or the cycle of the paging reception period may be an integer multiple of the paging DRX cycle for each cell. The integer value may be used as information on the paging reception period or the cycle of the paging reception period. As a paging DRX processing method using these pieces of information, for example, the UE may receive paging during a paging reception period, and receive the paging during the next paging reception period after a cycle of the paging reception period has elapsed since the start of the paging reception period.

The specific examples of the preferred DRX relevant information may be combined.

The UE notifies the AMF of the preferred DRX relevant information on another UE. The AMF calculates a paging DRX configuration for the other UE, using the received preferred DRX relevant information. A paging DRX configuration dedicated to each UE may be used as the paging DRX configuration. Specific examples of the paging DRX configuration include a paging DRX cycle, a paging frame, and a paging slot.

Other specific examples of the paging DRX configuration include a paging reception period and a cycle of the paging reception period. The paging reception period or the cycle of the paging reception period may be an integer multiple of the paging DRX cycle for each cell. The integer value may be used as information on the paging reception period or the cycle of the paging reception period.

The specific examples of the paging DRX configuration may be combined.

The preferred DRX relevant information may include information for identifying on which UE the preference has been given. The UE may notify the information for identifying on which UE the preference has been given together with the preferred DRX relevant information. Upon receipt of the preferred DRX relevant information, the node can recognize on which UE the preferred DRX relevant information is.

The preferred DRX relevant information may include information for identifying which UE has given the preference. The UE may notify the information for identifying which UE has given the preference together with the preferred DRX relevant information. Upon receipt of the preferred DRX relevant information, the node can recognize which UE has given the preference on the DRX relevant information.

The preferred DRX relevant information may include information on a service. The UE may notify information on the service together with the preferred DRX relevant information. The UE may notify, for example, an identifier for identifying the service and the QoS of the service. Upon receipt of the preferred DRX relevant information, the node can recognize to which service the preferred DRX corresponds.

The AMF notifies another UE of the calculated paging DRX configuration dedicated to the other UE. The AMF may notify the calculated configuration through the gNB to which the other UE is connected. The other UE receives the paging using the received paging DRX configuration dedicated to the other UE. Consequently, the paging DRX configuration dedicated to each UE which corresponds to the preferred DRX relevant information can be notified to a UE different from the UE that has given the preference on the DRX relevant information. The UE can receive the paging, using the paging DRX configuration which has been established according to the DRX relevant information whose preference has been given by the other UE.

For example, the remote UE determines the preferred DRX relevant information on the relay UE in the communication between the remote UE and the NW through the relay UE. The remote UE notifies the AMF of the preferred DRX relevant information on the relay UE. The remote UE notifies the AMF of the preferred DRX relevant information on the relay UE through the relay UE and the gNB. The AMF establishes the paging DRX configuration for the relay UE, using the received preferred DRX relevant information on the relay UE. The paging DRX configuration may be a paging DRX configuration dedicated to the relay UE. The paging DRX configuration may be for relaying data.

The remote UE may notify the AMF of the preferred DRX relevant information on the relay UE when the remote UE generates the preferred DRX relevant information on the relay UE. As another method, the remote UE may include the preferred DRX relevant information on the relay UE in the remote UE relevant information to be notified from the remote UE to the AMF, and notify the AMF of the preferred DRX relevant information on the relay UE. As another method, the remote UE may notify the preferred DRX relevant information on the relay UE, in a registration procedure or a service request procedure of the remote UE. The remote UE may perform the registration procedure or the service request procedure on the AMF through the relay UE and the gNB to which the relay UE is connected. When the remote UE recognizes the preferred DRX relevant information on the relay UE in advance, the remote UE can give the notification early.

The method for notifying the preferred RRC state information from the remote UE to the relay UE, which is disclosed in the first modification of the first embodiment, should be appropriately applied to a method for notifying the preferred DRX relevant information on the relay UE from the remote UE to the relay UE. This can produce the same advantages as previously described.

The relay UE may notify the AMF of the preferred DRX relevant information on the relay UE via the NAS signaling. Alternatively, the relay UE may give the notification to the gNB via the RRC signaling, and the gNB may give the notification to the AMF via the N2 signaling. The method for notifying the preferred RRC state information from the relay UE to the gNB, which is disclosed in the first modification of the first embodiment, may be appropriately applied to a method for notifying the preferred DRX relevant information on the relay UE from the relay UE to the gNB. This can produce the same advantages as previously described.

The AMF notifies the relay UE of the calculated paging DRX configuration dedicated to the relay UE. The AMF may notify the calculated configuration through the gNB to which the relay UE is connected. The relay UE receives the paging using the received paging DRX configuration dedicated to the relay UE.

The AMF may notify the relay UE of the paging DRX configuration dedicated to the relay UE after calculating the configuration. For example, the AMF may notify the relay UE of the configuration in the procedure for establishing the PDU session between the relay UE and the NW. For example, the AMF may notify the relay UE of the configuration in the procedure for releasing the RRC connection or the CM connection.

For example, the AMF may notify the relay UE of the paging DRX configuration dedicated to the relay UE via the NAS signaling. Alternatively, the AMF may give the notification to the gNB via the N2 signaling, and the gNB may give the notification to the relay UE via the RRC signaling.

The AMF may establish the paging DRX configuration inconsistent with the preferred DRX relevant information on the relay UE. The AMF need not establish the paging DRX configuration dedicated to each UE. The AMF may notify the remote UE of the paging DRX configuration established for the relay UE. The remote UE can recognize the paging DRX configuration established for the relay UE. The AMF may include cause information in the notification. When the AMF establishes the paging DRX configuration inconsistent with the preferred DRX relevant information on the relay UE, the remote UE can recognize the cause. This enables, for example, the remote UE to determine whether to make the request again.

The remote UE may notify the AMF of a request for resetting the preferred DRX relevant information on the relay UE. The remote UE may notify the AMF of no preference on the DRX configuration of the relay UE. The AMF can recognize that the remote UE has no preference on the DRX configuration of the relay UE. In response to the notification, the AMF may determine to cancel the paging DRX configuration of the relay UE which is dedicated to each UE. The AMF may notify the relay UE of cancelation of the paging DRX configuration of the relay UE which is dedicated to each UE. Consequently, the relay UE need not perform a procedure for receiving the paging with the paging DRX configuration dedicated to each UE. The AMF may notify the remote UE of cancelation of the paging DRX configuration of the relay UE which is dedicated to each UE. Consequently, the remote UE can recognize whether the relay UE performs the procedure for receiving the paging with the paging DRX configuration dedicated to each UE.

This enables the remote UE to notify the relay UE of the paging DRX configuration dedicated to each UE which corresponds to the preferred DRX relevant information whose preference has been given by the remote UE. The relay UE can receive the paging with the paging DRX configuration which has been established according to the DRX relevant information whose preference has been given by the remote UE.

When the relay UE is connected to one or more remote UEs, the aforementioned method should be applied to each of the remote UEs. Each of the remote UEs determines the preferred DRX relevant information on the relay UE. Each of the remote UEs notifies the AMF of the preferred DRX relevant information on the relay UE. The AMF establishes one or more paging DRX configurations of the relay UE, using the pieces of preferred DRX relevant information on the relay UE which have been received from the remote UEs. The AMF may establish, for each of the remote UEs, the paging DRX configuration for the relay UE. The one or more paging DRX configurations may be paging DRX configurations dedicated to the relay UE. The paging DRX configurations may be for relaying data.

The AMF notifies the relay UE of the derived one or more paging DRX configurations dedicated to the relay UE. The relay UE receives the paging using the received one or more paging DRX configurations dedicated to the relay UE. Even when the relay UE is connected to a plurality of remote UEs, this method enables the relay UE to receive the paging on a paging DRX cycle corresponding to the preferred DRX cycle of each of the remote UEs.

The remote UE may notify the relay UE of the preferred DRX relevant information on the relay UE. For example, when the relay UE is connected to a plurality of remote UEs, each of the remote UEs notifies the relay UE of the preferred DRX relevant information on the relay UE. The relay UE may derive the preferred DRX relevant information on its own relay UE, from the pieces of preferred DRX relevant information on its own UE which have been received from one or more remote UEs.

For example, the relay UE selects the shortest DRX cycle from the pieces of preferred DRX relevant information on the relay UE which have been received from one or more remote UEs, and configures the selected DRX cycle as the preferred DRX relevant information on its own UE.

The relay UE notifies the AMF of the derived preferred DRX relevant information on its own UE. The relay UE may notify the AMF of the information through the gNB. The AMF establishes the paging DRX configuration for the relay UE, using the received preferred DRX relevant information on the relay UE. The paging DRX configuration may be a paging DRX configuration dedicated to the relay UE. The paging DRX configuration may be for relaying data. The AMF notifies the relay UE of the derived paging DRX configuration dedicated to the relay UE. The AMF may notify the derived configuration through the gNB to which the relay UE is connected. The relay UE receives the paging using the received paging DRX configuration dedicated to the relay UE.

Even when the remote UE generates data for the relay UE connected to one or more remote UEs, this method can reduce the amount of latency caused by the paging DRX cycle for the relay UE.

The aforementioned methods should be appropriately applied to a method for notifying the preferred DRX relevant information on another UE from the remote UE to the relay UE, a method for notifying the preferred RRC state information on the relay UE from its own relay UE to the AMF, and a method for notifying the paging DRX configuration from the AMF to the relay UE.

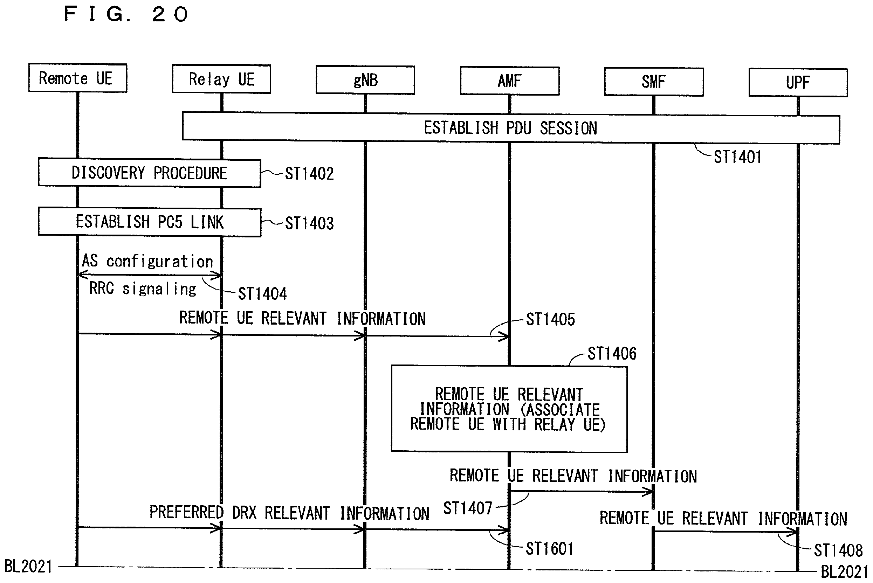

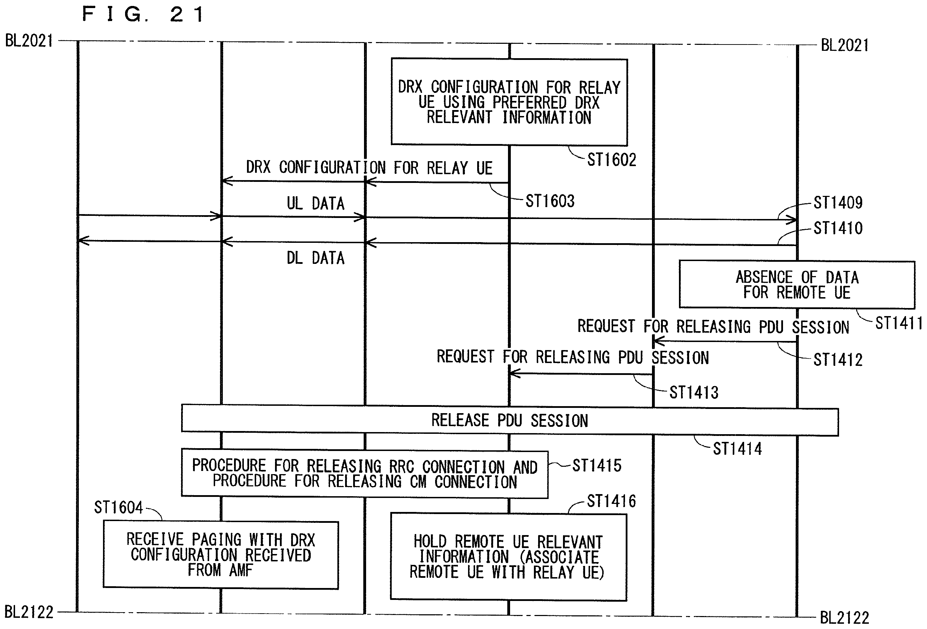

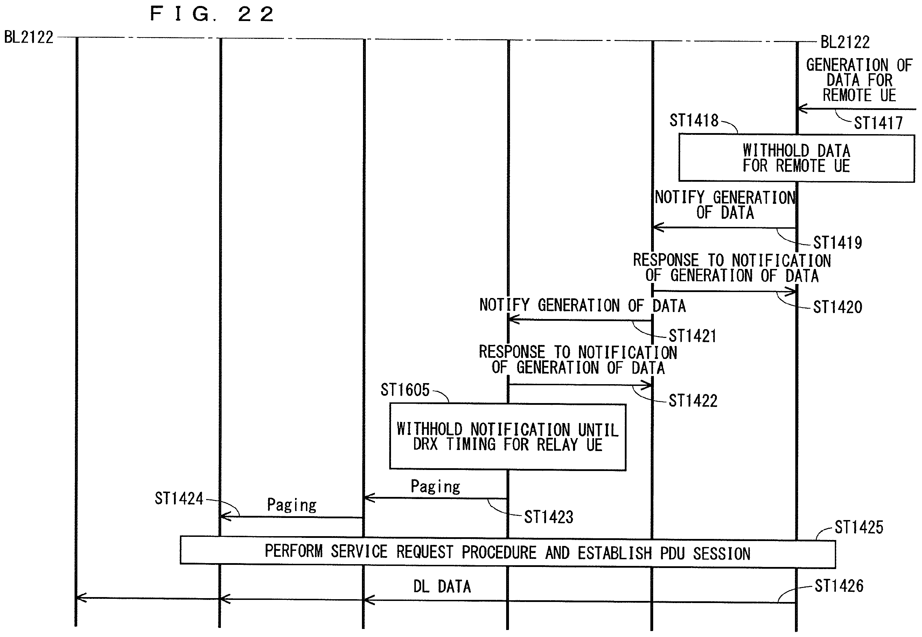

FIGS. 20 to 22 are sequence diagrams illustrating an example method for communicating between the UE and the NW through the relay UE according to the second modification of the first embodiment. FIGS. 20 to 22 are connected across locations of borders BL2021 and BL2122. FIGS. 20 to 22 disclose an example where the remote UE notifies the gNB to which the relay UE is connected of the preferred DRX relevant information on the relay UE in the absence of data between the remote UE and the NW. According to this example, the relay UE can receive the paging on the paging DRX cycle desired by the remote UE. In FIGS. 20 to 22, the same step numbers are applied to the steps common to those in FIGS. 14 to 16, and the common description thereof is omitted.

In Step ST1405, the remote UE notifies the AMF of the remote UE relevant information, so that the remote UE can communicate with the NW. In Step ST1601, the remote UE notifies the AMF of the preferred DRX relevant information on the relay UE. The remote UE notifies the AMF of the preferred DRX relevant information on the relay UE through the relay UE and the gNB. The remote UE configures the preferred DRX relevant information on the relay UE. For example, the remote UE should calculate a cycle of generating data from the service relevant information, and configure, using these pieces of information, the preferred DRX relevant information on the relay UE, for example, the paging DRX cycle. The remote UE may include, in the DRX relevant information, information indicating the preference from which UE to which UE. The remote UE may notify the DRX relevant information together with the remote UE relevant information notified from the remote UE to the AMF in Step ST1405, or include the DRX relevant information in the remote UE relevant information in Step ST1405 and notify the DRX relevant information. This enables the gNB to process the information early.

Upon receipt of the DRX relevant information, the AMF can recognize the paging DRX configuration for the relay UE. Furthermore, the AMF can recognize the preference to the communication for relaying data, from the preference from the remote UE. In Step ST1602, the AMF calculates the paging DRX configuration for the relay UE, using the preferred paging DRX relevant information on the relay UE. The paging DRX configuration may be a DRX configuration dedicated to each UE. This enables the paging DRX configuration dedicated to the relay UE.

In Step ST1603, the AMF notifies the relay UE of the paging DRX configuration for the relay UE through the gNB. When the relay UE transitions to the RRC_Idle state or the CM_Idle state, the relay UE receives the paging with this paging DRX configuration. The relay UE may receive the paging with both of the paging DRX configuration broadcast by the cell and the paging DRX configuration received from the AMF. Alternatively, the relay UE may receive the paging with one of the DRX configurations having a shorter DRX cycle.

Then, no data between the remote UE and the NW is generated. In Step ST1415, the relay UE and the gNB perform the procedure for releasing the RRC connection, and the relay UE, the gNB, and the AMF perform the procedure for releasing the CM connection. Consequently, the relay UE transitions to the RRC_Idle state or the CM_Idle state. In Step ST1604, the relay UE receives the paging with the DRX configuration received from the AMF.

In Step ST1417, data for the remote UE has been generated. In Step ST1421, the AMF receives notification on the generated data from the SMF. Upon receipt of the notification on the generated data, the AMF may withhold notification of the paging to the relay UE through the gNB until the paging DRX timing configured for the relay UE in Step ST1605. This enables the AMF to notify the paging with the appropriate timing.

The disclosed method enables the remote UE to establish the paging DRX configuration for the relay UE according to a cycle of generating data to be communicated between the remote UE and the NW in the communication between the remote UE and the NW through the relay UE. Since the relay UE can perform reception on the paging DRX cycle appropriate for the cycle of generating data to be communicated between the remote UE and the NW, the power consumption of the relay UE can be reduced.

### The Second Embodiment

Another method for solving the problem described in the first embodiment is disclosed.

The relay UE with the UE-to-NW relay capability is permitted to transition to RRC _Inactive. The RRC connection between the relay UE and the gNB may be suspended. The relay UE with the UE-to-NW relay capability maintains the CM_Connected state. The RRC_Inactive state means an RRC suspended state and a CM connected state. The PDU session between the relay UE and the NW may be released. Even when the PC5-S link between the remote UE and the relay UE has been established, the aforementioned processes may be performed.

A procedure for transitioning to RRC _Inactive is disclosed. The gNB and the relay UE perform a procedure for suspending the RRC. The gNB may start the procedure for suspending the RRC for the relay UE. For example, the gNB may notify the relay UE of an RRC release message with suspending information. Consequently, the gNB and the relay UE perform the procedure for suspending the RRC. The relay UE may request the gNB to suspend the RRC. Upon receipt of the request for suspending the RRC, the gNB performs the procedure for suspending the RRC with the relay UE. Furthermore, when the AMF performs the procedure for releasing the PDU session with the gNB, the gNB may perform the procedure for suspending the RRC with the relay UE. The CM connection between the relay UE and the NW is maintained. The AMF may maintain the CM connection between the relay UE and the NW. The AMF may maintain the CM_Connected state of the relay UE. Since maintaining the CM connection can save transitioning of the CM state in performing communication with the NW again, low-latency communication is possible.

The method disclosed in the first embodiment should be appropriately applied to the procedure for releasing the PDU session by the relay UE and the NW node.

The procedure for transitioning to RRC _Inactive should be performed with the PC5-S link between the relay UE and the remote UE being connected. The releasing procedures should be performed without releasing the PC5-S link between the relay UE and the remote UE.

The procedure for transitioning to RRC _Inactive should be performed, for example, in the temporary absence of the communication between the remote UE and the NW. The procedure for transitioning to RRC_Inactive should be performed, for example, during a period without the communication between the remote UE and the NW which is cyclically performed. Transitioning the relay UE to the RRC _Inactive state through the procedure for transitioning to RRC _Inactive can reduce the power consumption of the relay UE.

The method disclosed in the first embodiment should be appropriately applied to a method for transitioning the relay UE or the NW node to RRC _Inactive. For example, the method for the relay UE or the NW node to determine whether to execute or request the releasing procedures, which is disclosed in the first embodiment, should be appropriately applied to a method for determining whether to transition to RRC_Inactive.

The remote UE may request transitioning the relay UE and the gNB to RRC _Inactive. The remote UE may request the relay UE or the gNB to transition to RRC Inactive.

Since the remote UE recognizes the service for communicating with the NW, the remote UE can easily determine, for example, the temporary absence of communication between the remote UE and the NW. The remote UE requests transitioning the relay UE and the NW to RRC_Inactive. This enables execution of the procedure for transitioning the relay UE to the RRC _Inactive state which is appropriate for the communication service between the remote UE and the NW. In the absence of data communication in the PC5-S link for a predetermined period, this method enables the remote UE to transition the relay UE to the RRC_Inactive state. Moreover, the power consumption of the relay UE can be reduced.

When receiving data for the remote UE from the UPF through the relay UE or receiving signaling from the AMF to the relay UE during the RRC_Inactive state of the relay UE, the gNB notifies paging to the relay UE associated with the remote UE. The paging is referred to as RAN paging. One or more gNBs in a predetermined area perform the RAN paging on the UEs being served thereby. The predetermined area is referred to as a RAN Notification Area (RNA).

The gNB notifies surrounding gNBs of the RAN paging. The gNB may give the notification via the Xn signaling. The gNB included in the RNA transmits the received RAN paging to the UEs being served thereby. This enables the gNB in the RNA to transmit the RAN paging to the UEs being served thereby.

The RAN paging to be transmitted from the gNB to the UEs being served thereby and/or the RAN paging to be notified from the gNB to the surrounding gNBs may include information indicating the paging caused by generation of data or signaling for the remote UE. Alternatively, the paging for the relay UE may include information on the remote UE, for example, an identifier of the UE. This enables the relay UE that has received the RAN paging to recognize the paging caused by the generation of the data for the remote UE.

Upon receipt of the RAN paging, the relay UE transitions to RRC_Connected with the NW. Upon receipt of the RAN paging, the relay UE may notify the gNB of an RRC resumption request. The gNB requests a previous serving gNB of the relay UE to notify the RAN UE context. The previous serving gNB of the relay UE notifies the gNB of the RAN UE context. The previous serving gNB of the relay UE may include, in the RAN UE context, information associating the relay UE with the remote UE. The previous serving gNB of the relay UE may include the associating information in the RAN UE context of the relay UE.

The RAN UE context of the remote UE may be provided. The RAN UE context of the remote UE may include the associating information. The gNB may store RAN UE context information on the remote UE. The gNB may store the associating information separately from the RAN UE context information. The previous serving gNB of the relay UE may notify the gNB of the RAN UE context of the remote UE together with the RAN UE context of the relay UE. Alternatively, the previous serving gNB of the relay UE may notify the gNB of the associating information together with the RAN UE context of the relay UE.

Upon receipt of the RRC resumption request from the relay UE, the gNB may request the previous serving gNB of the relay UE to notify the RAN UE context of the remote UE. The previous serving gNB of the relay UE notifies the requesting gNB of the RAN UE context of the remote UE.

Upon receipt of the RRC resumption request from the relay UE, the gNB may request the previous serving gNB of the relay UE to notify the information associating the relay UE with the remote UE in which data or signaling has been generated. The previous serving gNB of the relay UE notifies the requesting gNB of the information associating the remote UE with the relay UE.

This enables the gNB to which the relay UE is newly connected to recognize the association between the remote UE and the relay UE. This can reduce malfunctions when the gNB notifies the remote UE of the data or the signaling through the relay UE.

Upon receipt of the information associating the remote UE with the relay UE from the previous serving gNB of the relay UE, the gNB notifies the relay UE of the RRC resumption. The relay UE transitions to the RRC_Connected state. The relay UE notifies the gNB of the completion of transitioning to the RRC _Connected state. The gNB, the AMF, the SMF, and the UPF perform a path switch procedure. When data for the remote UE has been generated, the relay UE can transition to the RRC _Connected state.

Upon receipt of the RAN paging, the relay UE may establish the PDU session with the gNB to which the relay UE has been connected before transitioning to RRC _Inactive. When the relay UE that has received the paging receives the information indicating the paging caused by the generation of the data for the remote UE, the relay UE establishes the PDU session with the NW. The PDU session may be for relaying data. The PDU session may be for communicating with the remote UE for which the data has been generated. Consequently, the relay UE and the NW can establish the PDU session for communication between the remote UE and the NW. When data for the remote UE has been generated even after transition of the relay UE to the RRC_Inactive state, this method enables the relay UE and the NW to reestablish the PDU session. Accordingly, the remote UE can communicate with the NW using the PDU session.

Since the relay UE can perform the DRX on the paging DRX cycle of the RAN paging, the power consumption of the relay UE can be reduced.

The procedure when the service data has been generated from the remote UE during the RRC_Idle state or the CM_Idle state of the relay UE, which is disclosed in the first embodiment, should be appropriately applied to a procedure when the service data has been generated from the remote UE during the RRC_Inactive state of the relay UE. For example, a procedure for transitioning RRC _Inactive to RRC _Connected or a procedure for establishing the PDU session should be performed. This enables the remote UE to communicate data to the NW.

The method disclosed in the first modification of the first embodiment may be applied. The first modification of the first embodiment discloses the method for the remote UE to determine a preferred RRC state of the relay UE and notify the gNB to which the relay UE is connected of the determined RRC state information. RRC_Inactive may be configured as the preferred RRC state of the relay UE. The gNB to which the relay UE is connected may transition the RRC state of the relay UE, using the received preferred RRC state information on the relay UE. For example, the gNB may perform the procedure for suspending the RRC to transition the relay UE to the RRC_Inactive state when the relay UE is in the RRC connected state.

This enables the relay UE to transition to the RRC _Inactive state depending on the presence or absence of data to be communicated between the remote UE and the NW in the communication between the remote UE and the NW through the relay UE. Since the relay UE can perform reception on the RAN paging DRX cycle, the power consumption of the relay UE can be reduced.

The DRX dedicated to each UE may be configured as a RAN paging DRX. Specific examples of the RAN paging DRX configuration include a paging DRX cycle, a paging frame, and a paging slot. These may be combined. The gNB may configure the RAN paging DRX dedicated to each UE for the relay UE. The gNB may notify the relay UE of the RAN paging DRX configuration dedicated to each UE while the relay UE is in the RRC_Connected state. For example, the gNB may include the DRX configuration in the RRC suspending signaling, and notify the relay UE of the DRX configuration.

The AMF may configure the RAN paging DRX dedicated to each UE for the relay UE. The AMF may notify the relay UE of the RAN paging DRX configuration dedicated to each UE while the relay UE is in the RRC _Connected state. The AMF may notify the DRX configuration, for example, via the NAS signaling. Alternatively, the AMF may give the notification to the gNB via the N2 signaling, and the gNB may give the notification to the relay UE via the RRC signaling.

The gNB may notify an adjacent gNB of the RAN paging DRX relevant information. The gNB may include the information in the RAN paging information and notify the information, or notify the information together with the RAN paging information. This enables the gNB in the RNA to transmit the paging to the relay UE, with the DRX configuration for the same RAN paging.

Consequently, configuring the RAN paging DRX dedicated to each UE for the relay UE can, for example, establish the DRX configuration appropriate for data communication intervals between the remote UE and the NW for the relay UE. Thus, wasteful power consumption in the relay UE can be reduced. Furthermore, latency in the data communication between the remote UE and the NW through the relay UE can be reduced.

The method disclosed in the second modification of the first embodiment may be applied. The method disclosed in the second modification of the first embodiment may be appropriately applied to a method for the AMF to configure the RAN paging DRX dedicated to each UE for the relay UE. This can produce the same advantages as previously described.

Although the second modification of the first embodiment discloses the method for the AMF to configure the RAN paging DRX dedicated to each UE, not the AMF but a RAN node, for example, the gNB may configure the DRX. The gNB to which the relay UE is connected may configure the DRX. Not the AMF but the gNB processes the method disclosed in the second modification of the first embodiment to configure the RAN paging DRX. This can avoid increase in complexity of the processes. This can also reduce the amount of signaling between the gNB and the AMF.

The disclosed method enables the relay UE to transition to the RRC_Inactive state in the communication between the remote UE and the NW through the relay UE. Since the relay UE can receive the paging on the RAN paging DRX cycle, the power consumption can be reduced. Furthermore, the RAN paging DRX dedicated to the relay UE can be configured according to a cycle of generating data to be communicated between the remote UE and the NW. Since the relay UE can perform reception on the RAN paging DRX cycle appropriate for the cycle of generating data to be communicated between the remote UE and the NW, the power consumption of the relay UE can be reduced. Furthermore, latency in the data communication between the remote UE and the NW through the relay UE can be reduced.

### The Third Embodiment

Another method for solving the problem described in the first embodiment is disclosed.

The relay UE with the UE-to-NW relay capability maintains the RRC _Connected state during execution of a relay procedure. The RRC connection need not be released. The relay UE with the UE-to-NW relay capability maintains the CM _Connected state during execution of a relay procedure. The CM connection need not be released. The relay UE with the UE-to-NW relay capability may maintain the PDU session between the relay UE and the NW during execution of a relay procedure. The PDU session need not be released.

Even when the PC5-S link between the remote UE and the relay UE has been established, the aforementioned procedure may be performed. "during execution of a relay procedure" may mean a period from establishment of a PDU session for relaying data between the relay UE and the NW to release of the PDU session for relaying data.

The gNB configures the DRX in the relay UE. The relay UE configures the DRX in the RRC connected state. The DRX in the RRC connected state may be referred to as C-DRX. This enables the relay UE to perform the DRX processes in the data communication between the remote UE and the NW through the relay UE. Thus, the power consumption of the relay UE can be reduced.

The gNB configures the C-DRX in the relay UE. The gNB can establish the C-DRX configuration for each UE. Thus, the gNB can establish the C-DRX configuration dedicated to the relay UE. However, not the relay UE but the remote UE generates communication data in the communication between the remote UE and the NW through the relay UE. Thus, the gNB to which the relay UE is connected cannot establish, for the relay UE, the C-DRX configuration appropriate for the service to be generated between the remote UE and the NW. A method for solving such a problem is disclosed.

C-DRX relevant information on another UE whose preference is given by the UE is provided. This information is referred to as preferred C-DRX relevant information on another UE in the present invention. The UE determines the preferred C-DRX relevant information on another UE. Specific examples of the preferred C-DRX relevant information include a DRX cycle, an ON duration, an inactivity timer, a retransmission timer, and a HARQ inactivity timer. These may be combined.

The UE notifies the gNB of the preferred C-DRX relevant information on another UE. The gNB calculates a C-DRX configuration for the other UE, using the received preferred C-DRX relevant information. The C-DRX configuration may be a C-DRX configuration dedicated to each UE. Specific examples of the C-DRX configuration include a DRX cycle, an ON duration, an inactivity timer, a retransmission timer, and a HARQ inactivity timer. These may be combined.

The preferred C-DRX relevant information may include information for identifying on which UE the preference has been given. The UE may notify the information for identifying on which UE the preference has been given together with the preferred C-DRX relevant information. Upon receipt of the preferred C-DRX relevant information, the node can recognize on which UE the preferred C-DRX relevant information is.

The preferred C-DRX relevant information may include information for identifying which UE has given the preference. The UE may notify the information for identifying which UE has given the preference together with the preferred C-DRX relevant information. Upon receipt of the preferred C-DRX relevant information, the node can recognize which UE has given the preference on the C-DRX relevant information.

The gNB notifies another UE of the calculated C-DRX configuration dedicated to the other UE. The gNB may notify the calculated configuration through a gNB to which the other UE is connected. The other UE performs the DRX processes using the received C-DRX configuration dedicated to the other UE. The other UE performs a reception operation during a DRX active period. For example, the other UE receives the PDCCH during the DRX active period. The other UE does not receive the PDCCH outside the DRX active period. Consequently, the C-DRX configuration dedicated to each UE which corresponds to the preferred C-DRX relevant information can be notified to a UE different from the UE that has given the preference on the C-DRX relevant information. The UE can perform the DRX process, using the C-DRX configuration which has been established according to the C-DRX relevant information whose preference has been given by the other UE.

For example, the remote UE determines the preferred DRX relevant information on the relay UE in the communication between the remote UE and the NW through the relay UE. The remote UE notifies the gNB of the preferred C-DRX relevant information on the relay UE through the relay UE. The gNB establishes the C-DRX configuration of the relay UE, using the received preferred C-DRX relevant information on the relay UE. The C-DRX configuration may be a configuration dedicated to the relay UE. The C-DRX configuration may be for relaying data.

The method for notifying the preferred RRC state information from the remote UE to the relay UE, which is disclosed in the first modification of the first embodiment, may be appropriately applied to a method for notifying the preferred C-DRX relevant information on the relay UE from the remote UE to the relay UE. The C-DRX information should be used instead of the RRC state information. This can produce the same advantages as previously described.

The method for notifying the preferred RRC state information from the relay UE to the gNB, which is disclosed in the first modification of the first embodiment, may be appropriately applied to a method for notifying the preferred C-DRX relevant information on the relay UE from the relay UE to the gNB. The C-DRX information should be used instead of the RRC state information. This can produce the same advantages as previously described.

Consequently, the preferred C-DRX relevant information on the relay UE which has been determined by the remote UE can be notified to the gNB to which the relay UE is connected. The gNB can recognize, from the received preferred C-DRX relevant information, the preferred C-DRX configuration, which UE has given the preference, or on which UE the preference has been given. The gNB establishes the C-DRX configuration of the relay UE, using the received preferred C-DRX relevant information.

For example, the remote UE calculates data communication intervals between the remote UE and the NW, from the service for communicating with the NW. The remote UE may determine whether the service is cyclically implemented, and calculate the cycle when the service is cyclically implemented. The remote UE determines the preferred C-DRX relevant information on the relay UE, using the calculated data communication intervals or cycle. The remote UE should configure the preferred C-DRX relevant information on the relay UE so that the C-DRX configuration fits the calculated data communication intervals or cycle.

As another method, the remote UE may measure time information on data in the PC5-S link. The remote UE may calculate the data communication intervals or a traffic pattern from the measurement result. The method disclosed in the first embodiment may be appropriately applied to these methods. The remote UE should configure the preferred C-DRX relevant information on the relay UE, using the calculated data communication intervals or traffic pattern. The remote UE should configure the preferred C-DRX relevant information on the relay UE so that the C-DRX configuration fits the calculated data communication intervals or traffic pattern.

This enables the remote UE to calculate the preferred C-DRX configuration of the relay UE which is appropriate for the service for communicating with the NW.

The gNB establishes the C-DRX configuration of the relay UE, using the received preferred C-DRX relevant information on the relay UE. The C-DRX configuration may be a configuration dedicated to each UE. The gNB notifies the relay UE of the calculated C-DRX configuration dedicated to the relay UE. The relay UE can perform the DRX processes using the received C-DRX configuration dedicated to the relay UE.

The gNB may establish the C-DRX configuration inconsistent with the preferred C-DRX relevant information on the relay UE. The gNB need not establish the C-DRX configuration. The gNB may notify the remote UE of the C-DRX configuration established for the relay UE. The remote UE can recognize the C-DRX configuration established for the relay UE. The gNB may include cause information in the notification. When the gNB establishes the C-DRX configuration inconsistent with the C-DRX relevant information whose preference has been given by the remote UE, the remote UE can recognize the cause. This enables, for example, the remote UE to determine whether to make the request again.

The remote UE may notify the gNB of a request for resetting the preferred C-DRX relevant information on the relay UE. The remote UE may notify the gNB of no preference on the C-DRX configuration of the relay UE. The gNB can recognize that the remote UE has no preference on the C-DRX configuration of the relay UE. In response to the notification, the gNB may determine to cancel the C-DRX configuration of the relay UE. The gNB may notify the relay UE of cancelation of the C-DRX configuration of the relay UE. Consequently, the relay UE need not perform the DRX processes with the C-DRX configuration. The gNB may notify the remote UE of cancelation of the C-DRX configuration of the relay UE. Consequently, the remote UE can recognize whether the relay UE performs the DRX processes with the C-DRX configuration.

When the relay UE is connected to one or more remote UEs, the aforementioned method should be applied to each of the remote UEs. Each of the remote UEs determines the preferred C-DRX relevant information on the relay UE. Each of the remote UEs notifies the gNB of the preferred DRX relevant information on the relay UE. The gNB establishes one or more C-DRX configurations of the relay UE, using the pieces of preferred C-DRX relevant information on the relay UE which have been received from the remote UEs. The gNB may establish the C-DRX configuration of the relay UE for each of the remote UEs. The one or more C-DRX configurations may be C-DRX configurations dedicated to the relay UE. The C-DRX configurations may be for relaying data.

The gNB notifies the relay UE of the calculated one or more C-DRX configurations dedicated to the relay UE. The relay UE performs the DRX processes using the received one or more C-DRX configurations dedicated to the relay UE. Even when the relay UE is connected to a plurality of remote UEs, this method enables the relay UE to perform the DRX processes on the C-DRX cycle corresponding to the preferred DRX cycle of each of the remote UEs.

The remote UE may notify the relay UE of the preferred C-DRX relevant information on the relay UE. For example, when the relay UE is connected to a plurality of remote UEs, each of the remote UEs notifies the relay UE of the preferred C-DRX relevant information on the relay UE. The relay UE may derive the preferred C-DRX relevant information on its own relay UE, from the pieces of preferred C-DRX relevant information on its own UE which have been received from one or more remote UEs.

For example, the relay UE selects the shortest DRX cycle from the pieces of preferred C-DRX relevant information on the relay UE which have been received from the one or more remote UEs, and configures the selected DRX cycle as the preferred C-DRX relevant information on its own UE.

The relay UE notifies the gNB of the derived preferred C-DRX relevant information on its own UE. The gNB establishes the C-DRX configuration of the relay UE, using the received preferred C-DRX relevant information on the relay UE. The C-DRX configuration may be a configuration dedicated to the relay UE. The C-DRX configuration may be for relaying data. The gNB notifies the relay UE of the derived C-DRX configuration dedicated to the relay UE. The relay UE performs the DRX processes using the received C-DRX configuration dedicated to the relay UE.

Even when the remote UE generates data for the relay UE connected to one or more remote UEs, this method can reduce the amount of latency caused by the C-DRX cycle for the relay UE.

The aforementioned methods should be appropriately applied to a method for notifying the preferred C-DRX relevant information on another UE from the remote UE to the relay UE, a method for notifying the preferred C-DRX relevant information on the relay UE from its own relay UE to the gNB, and a method for notifying the C-DRX configuration from the gNB to the relay UE.

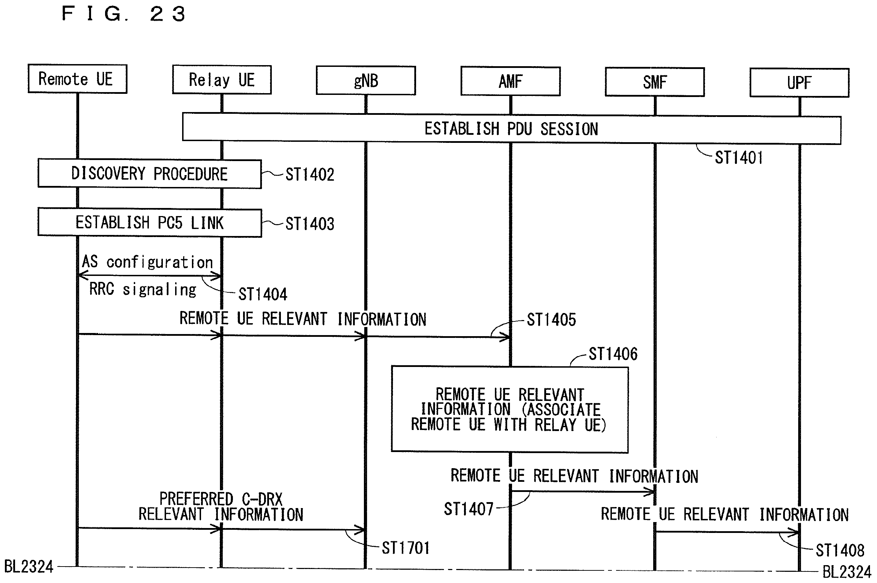

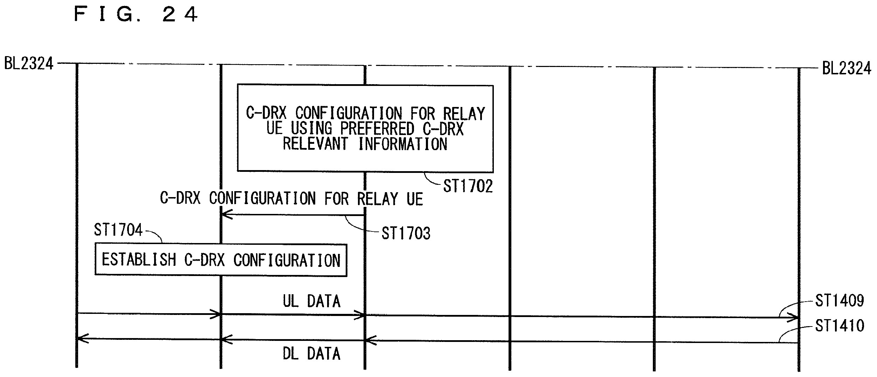

FIGS. 23 and 24 are sequence diagrams illustrating an example method for communicating between the UE and the NW through the relay UE according to the third embodiment. FIGS. 23 and 24 are connected across a location of a border BL2324. FIGS. 23 and 24 disclose an example where the remote UE notifies the gNB to which the relay UE is connected of the preferred C-DRX relevant information on the relay UE. According to this example, the relay UE can perform the DRX processes on the C-DRX cycle desired by the remote UE. In FIGS. 23 and 24, the same step numbers are applied to the steps common to those in FIGS. 14 to 16, and the common description thereof is omitted. FIGS. 23 and 24 illustrate that the relay UE maintains the RRC connection and the CM connection.

In Step ST1405, the remote UE notifies the AMF of the remote UE relevant information, so that the remote UE can communicate with the NW. In Step ST1701, the remote UE notifies the gNB of the preferred C-DRX relevant information on the relay UE. The remote UE notifies the gNB of the preferred C-DRX relevant information on the relay UE through the relay UE. The remote UE configures the preferred C-DRX relevant information on the relay UE. For example, the remote UE should calculate a cycle of generating data from the service relevant information, and configure, using these pieces of information, the preferred C-DRX relevant information on the relay UE, for example, a DRX cycle or a DRX ON duration. The remote UE may include, in the C-DRX relevant information, information indicating the preference from which UE to which UE. The remote UE may notify the C-DRX relevant information together with the remote UE relevant information notified from the remote UE to the AMF in Step ST1405, or include the C-DRX relevant information in the remote UE relevant information in Step ST1405 and notify the C-DRX relevant information. This enables the gNB to process the information early.

Upon receipt of the DRX relevant information, the gNB can recognize the C-DRX configuration of the relay UE. Furthermore, the gNB can recognize the preference to the communication for relaying data, from the preference from the remote UE. In Step ST1702, the gNB calculates the C-DRX configuration for the relay UE, using the preferred paging DRX relevant information on the relay UE. The C-DRX configuration may be a DRX configuration dedicated to each UE. This enables the C-DRX configuration dedicated to the relay UE.

In Step ST1703, the gNB notifies the relay UE of the C-DRX configuration for the relay UE. In Step ST1704, the relay UE establishes the received C-DRX configuration. The relay UE performs transmission and reception to and from the gNB with this C-DRX configuration.

The relay UE may support mobility. For example, the relay UE may support a cell resection procedure. The relay UE may support a HO procedure.

A case where the relay UE is handed over is disclosed. The relay UE should perform the HO procedure between a source gNB and a target gNB. The source gNB notifies the target gNB of information relevant to the relay UE to be handed over and information relevant to the remote UE to which the relay UE is connected. The source gNB may include the information in a HO request signaling to be notified to the target gNB, and notify the information. Upon receipt of the relevant information on the relay UE and the remote UE, the target gNB may create the associating information. The target gNB establishes a PDU session between the relay UE and the NW. Even when the relay UE is handed over and data for the remote UE has been generated, this method enables the NW to transmit data to the remote UE through the target gNB and the relay UE.

When the relay UE is handed over, the relay UE sometimes fails to maintain the connection with the remote UE. In such a case, the relay UE may notify the source gNB or the target gNB of information indicating a failure to maintain the connection with the remote UE. Alternatively, the relay UE may notify the source gNB or the target gNB to release or discard the information relevant to the remote UE. Furthermore, the target gNB need not establish, with the relay UE and the NW, the PDU session to be used for relay communication with the remote UE.

The source gNB or the target gNB may notify the AMF of information indicating a failure to maintain the connection with the remote UE. Alternatively, the source gNB or the target gNB may notify the AMF to release or discard the information relevant to the remote UE. Furthermore, the AMF need not establish, with the relay UE and the NW, the PDU session to be used for relay communication with the remote UE.

When the relay UE is handed over and the connection between the relay UE and the remote UE is not maintained, this method can, for example, prevent establishment of the PDU session or prevent the gNB and/or the AMF from holding the information associated with the remote UE. The wasteful processes can be avoided. Thus, malfunctions and the power consumption in the system can be reduced.

The disclosed method enables the relay UE to perform the DRX processes on the C-DRX cycle without transitioning the relay UE to the RRC_Idle state or the RRC _Inactive state in the communication between the remote UE and the NW through the relay UE. Thus, the power consumption of the relay UE can be reduced. Furthermore, the method enables the C-DRX configuration dedicated to the relay UE, according to intervals of generated data or a traffic pattern to be communicated between the remote UE and the NW. Since the relay UE can perform the DRX processes with the C-DRX configuration appropriate for the intervals of generated data or the traffic pattern to be communicated between the remote UE and the NW, the power consumption of the relay UE can be reduced. Furthermore, latency in the data communication between the remote UE and the NW through the relay UE can be reduced.

What is disclosed is that the gNB configures the DRX in the relay UE. As another example, the gNB may configure the SPS in the relay UE. As another example, the gNB may establish the CG in the relay UE. The relay UE in which the SPS or the CG has been established may activate a transmitting/receiving procedure with resources established by the SPS (semi-persistent scheduling) or the CG (configured grant). In the data communication between the remote UE and the NW through the relay UE, the power consumption of the relay UE can be reduced.

### The First Modification of the Third Embodiment

Another method for solving the problem described in the first embodiment is disclosed.

The third embodiment discloses the method for the remote UE to notify the gNB of the preferred C-DRX relevant information on the relay UE, and the method for the gNB to establish the C-DRX configuration for the relay UE, using the notified information. The first modification of the third embodiment discloses a method using not the C-DRX relevant information but a traffic pattern.

The remote UE calculates a traffic pattern in the communication with the NW. The method disclosed in the third embodiment may be appropriately applied to a method for calculating the traffic pattern. For example, the remote UE calculates a traffic pattern between the remote UE and the NW from a service for communicating with the NW. For example, the remote UE may measure time information on data in the PC5-S link, and calculate a traffic pattern from the measurement result.

The remote UE calculates a traffic pattern in the communication between the remote UE and the NW through the relay UE. The remote UE notifies the gNB of the traffic pattern through the relay UE.

Information indicating the traffic pattern of which UE may be provided. The information may be, for example, an identifier of the UE. Information indicating the traffic pattern in which service may be provided. The information may be, for example, an identifier of the service. Information indicating the traffic pattern of which QoS flow may be provided. The QoS flow may be the PC5 QoS flow. For example, an identifier of the QoS flow may be used. The remote UE may notify the gNB of a part or all of these pieces of information together with the traffic pattern through the relay UE. Consequently, the gNB can recognize the traffic pattern of which UE, in which service, or of which QoS flow.

The gNB establishes the C-DRX configuration of the relay UE, using the traffic pattern. The C-DRX configuration may be a configuration dedicated to the relay UE. The C-DRX configuration may be for relaying data.

The method for notifying the preferred RRC state information from the remote UE to the relay UE, which is disclosed in the first modification of the first embodiment, may be appropriately applied to a method for notifying the traffic pattern from the remote UE to the relay UE. The traffic pattern should be used instead of the RRC state information. This can produce the same advantages as previously described.

The method for notifying the preferred RRC state information from the relay UE to the gNB, which is disclosed in the first modification of the first embodiment, may be appropriately applied to a method for notifying the traffic pattern from the relay UE to the gNB. The traffic pattern should be used instead of the RRC state information. This can produce the same advantages as previously described.

Consequently, the traffic pattern calculated by the remote UE can be notified to the gNB to which the relay UE is connected.

The gNB calculates the C-DRX configuration of the relay UE, using the traffic pattern received from the remote UE. The C-DRX configuration may be a configuration dedicated to each UE. The gNB notifies the relay UE of the calculated C-DRX configuration dedicated to the relay UE. The relay UE can perform the DRX processes using the received C-DRX configuration dedicated to the relay UE.

The gNB may notify the remote UE of the C-DRX configuration established for the relay UE. The remote UE can recognize the C-DRX configuration established for the relay UE. The gNB may include cause information in the notification. This enables, for example, the remote UE to determine whether to change a cycle of notifying a traffic pattern or whether to notify the traffic pattern.

When the relay UE is connected to one or more remote UEs, the aforementioned method should be applied to each of the remote UEs. Each of the remote UEs determines a traffic pattern. Each of the remote UEs notifies the gNB of the traffic pattern. The gNB establishes one or more C-DRX configurations of the relay UE, using the traffic patterns received from the remote UEs. The gNB may establish the C-DRX configuration of the relay UE for each of the remote UEs. The one or more C-DRX configurations may be C-DRX configurations dedicated to the relay UE. The C-DRX configurations may be for relaying data.

The gNB notifies the relay UE of the calculated one or more C-DRX configurations dedicated to the relay UE. The relay UE performs the DRX processes using the received one or more C-DRX configurations dedicated to the relay UE. Even when the relay UE is connected to a plurality of remote UEs, this method enables the relay UE to perform the DRX processes on the C-DRX cycle corresponding to the traffic pattern of each of the remote UEs.

Although what is disclosed is that the remote UE calculates a traffic pattern, the relay UE may calculate a traffic pattern in the communication between the remote UE and the NW. For example, the relay UE measures the communication data with the remote UE in the PC5 link. The method disclosed in the first embodiment may be appropriately applied.

The relay UE notifies the gNB of the calculated traffic pattern in the communication between the remote UE and the NW. The number of remote UEs may be one or more. The relay UE notifies the gNB of the traffic pattern calculated for each of the remote UEs in the communication between the remote UE and the NW. The gNB establishes one or more C-DRX configurations of the relay UE, using the traffic patterns received from the relay UE in the communication between the remote UE and the NW. The one or more C-DRX configurations may be C-DRX configurations dedicated to the relay UE. The C-DRX configurations may be for relaying data.

The gNB notifies the relay UE of the calculated one or more C-DRX configurations dedicated to the relay UE. The relay UE performs the DRX processes using the received one or more C-DRX configurations dedicated to the relay UE. Even when the relay UE is connected to a plurality of remote UEs, this method enables the relay UE to perform the DRX processes on the C-DRX cycle corresponding to the traffic pattern in the communication between each of the remote UEs and the NW.

This method may be combined with that disclosed in the third embodiment. For example, the remote UE may notify the relay UE of the traffic pattern. For example, when the relay UE is connected to a plurality of remote UEs, each of the remote UEs notifies the relay UE of the traffic pattern. The relay UE calculates the preferred C-DRX relevant information on its own relay UE, using the traffic patterns received from one or more remote UEs.

The relay UE notifies the gNB of the calculated preferred C-DRX relevant information on its own relay UE. The gNB establishes the C-DRX configuration of the relay UE, using the received preferred C-DRX relevant information on the relay UE. The C-DRX configuration may be a configuration dedicated to the relay UE. The C-DRX configuration may be for relaying data. The gNB notifies the relay UE of the calculated C-DRX configuration dedicated to the relay UE. The relay UE performs the DRX processes using the received C-DRX configuration dedicated to the relay UE.

Even when the remote UE generates data for the relay UE connected to the one or more remote UEs, this method can reduce the amount of latency caused by the C-DRX cycle for the relay UE.

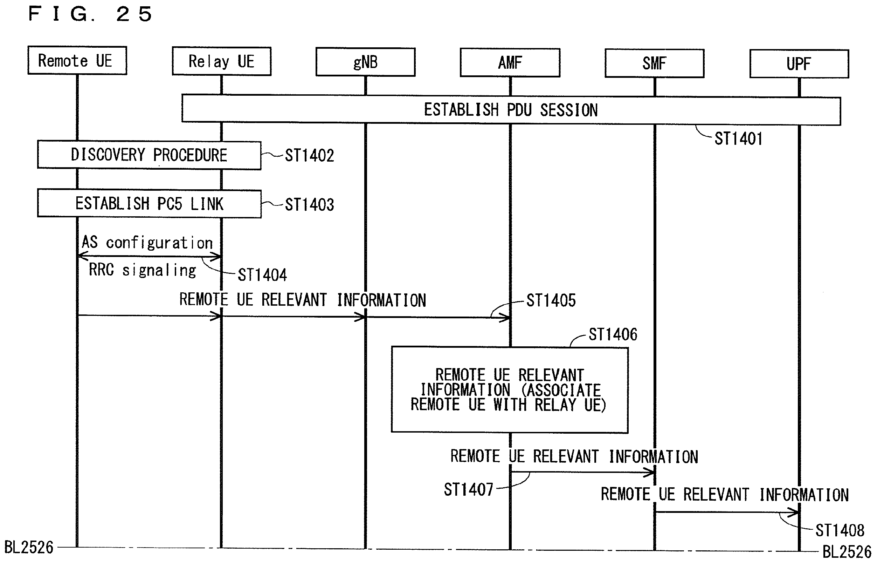

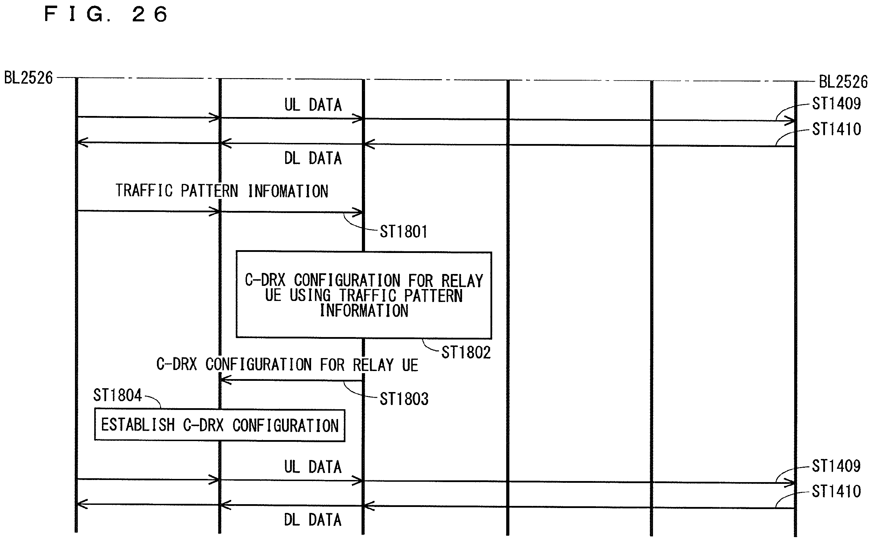

FIGS. 25 and 26 are sequence diagrams illustrating an example method for communicating between the UE and the NW through the relay UE according to the first modification of the third embodiment. FIGS. 25 and 26 are connected across a location of a border BL2526. FIGS. 25 and 26 disclose an example where the remote UE notifies the gNB to which the relay UE is connected of a traffic pattern. According to this example, the relay UE can perform the DRX processes on the C-DRX cycle corresponding to the traffic pattern. In FIGS. 25 and 26, the same step numbers are applied to the steps common to those in FIGS. 23 and 24, and the common description thereof is omitted.

In Step ST1405, the remote UE notifies the AMF of the remote UE relevant information, so that the remote UE can communicate with the NW. In Step ST 1801, the remote UE notifies the gNB of a traffic pattern. The remote UE notifies the gNB of the traffic pattern through the relay UE. The remote UE may calculate the traffic pattern, for example, from the service relevant information to be communicated between the remote UE and the NW. The remote UE may notify the traffic pattern together with the remote UE relevant information notified from the remote UE to the AMF in Step ST1405, or include the traffic pattern in the remote UE relevant information in Step ST1405 and notify the traffic pattern. This enables the gNB to process the information early.

Upon receipt of the traffic pattern from the remote UE, the gNB calculates the C-DRX configuration for the relay UE, using the traffic pattern in Step ST1802. The C-DRX configuration may be a DRX configuration dedicated to each UE. This enables the C-DRX configuration dedicated to the relay UE.

In Step ST1803, the gNB notifies the relay UE of the C-DRX configuration for the relay UE. In Step ST1804, the relay UE establishes the received C-DRX configuration. The relay UE performs transmission and reception to and from the gNB with this C-DRX configuration.

The disclosed method enables the relay UE to perform the DRX processes on the C-DRX cycle without transitioning the relay UE to the RRC_Idle state or the RRC _Inactive state in the communication between the remote UE and the NW through the relay UE. Thus, the power consumption of the relay UE can be reduced. Furthermore, the method enables the C-DRX configuration dedicated to the relay UE, according to the traffic pattern of data to be communicated between the remote UE and the NW. Since the relay UE can perform the DRX processes with the C-DRX configuration appropriate for the traffic pattern of data to be communicated between the remote UE and the NW, the power consumption of the relay UE can be reduced. Furthermore, latency in the data communication between the remote UE and the NW through the relay UE can be reduced.

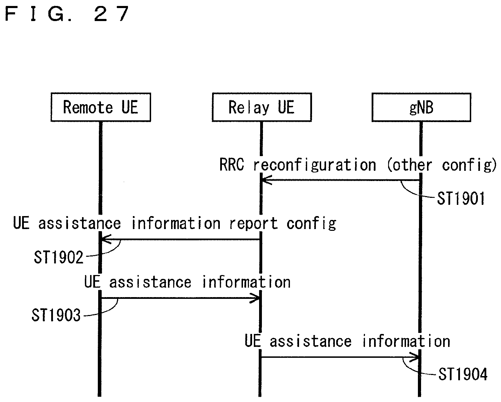

A method for notifying, between the remote UE, the relay UE, and the gNB to which the relay UE is connected, information on the communication between the remote UE and the NW through the relay UE is disclosed. FIG. 27 is a sequence diagram illustrating an example method for notifying, between the remote UE, the relay UE, and the gNB to which the relay UE is connected, information on the communication between the remote UE and the NW through the relay UE.

The gNB notifies the relay UE of a configuration for reporting information on the communication between the remote UE and the NW through the relay UE. The gNB may give the notification via the RRC signaling. The gNB may give the notification, for example, using Other Config Message. Upon receipt of the configuration for reporting information, the relay UE may notify the remote UE of the configuration. The relay UE may notify information indicating which information on the communication between the remote UE and the NW through the relay UE. Examples of the information include the preferred RRC state information on another UE, the preferred C-DRX relevant information on another UE, and a traffic pattern.

The relay UE may notify the remote UE of the configuration for reporting information via the PC5-S signaling. This enables the relay UE to give the notification early without the RRC configuration in the PC5. Alternatively, the relay UE may give the notification via the PC5-RRC signaling. This is compatible with the RRC procedure from the gNB to the relay UE, and can avoid increase in complexity of the processes. For example, a message for configuring a UE assistance information report may be provided. Alternatively, the relay UE may give the notification via the PC5-MAC signaling. This enables the relay UE to give the notification early with low error. Alternatively, the relay UE may give the notification using the PSCCH or the PSSCH. This enables the relay UE to give the notification earlier.

Upon receipt of the configuration for reporting information, the remote UE calculates the information based on the configuration. For example, when the preferred RRC state information on another UE has been configured, the remote UE calculates the preferred RRC state information on another UE. The remote UE notifies the relay UE of the calculated RRC state information. The method for notifying the configuration for reporting information from the relay UE to the remote UE should be appropriately applied to the notification method. For example, a UE assistance information message may be provided as the RRC signaling.

Upon receipt of the RRC state information, the relay UE notifies the gNB of the RRC state information. The method for notifying the configuration for reporting information from the gNB to the relay UE should be appropriately applied to the notification method. For example, a UE assistance information message may be used as the RRC signaling. This enables the gNB to obtain, from the remote UE, information on the communication between the remote UE and the NW through the relay UE.

The gNB can obtain the aforementioned information, for example, the preferred RRC state information on the relay UE, the preferred C-DRX relevant information on the relay UE, or information on a traffic pattern. This enables the gNB to control a connected state with the relay UE and the DRX configuration, using these pieces of information.

### The Fourth Embodiment

Another method for solving the problem described in the first embodiment is disclosed.

In the UE-to-UE direct communication in the PC5, the DRX processes are performed. A method for configuring the DRX in the UE-to-UE direct communication in the PC5 is disclosed. The DRX in the UE-to-UE direct communication in the PC5 in the present invention may be referred to as PC5 DRX. Furthermore, a transmitting UE may be referred to as a UE-TX, and a receiving UE may be referred to as a UE-RX in the UE-to-UE direct communication in the PC5. The UE-to-UE direct communication in the PC5 involves a method for the UE-TX to select and reserve resources for the SL communication (referred to as Mode 2), and a method for the gNB to which the UE-TX is connected to schedule the resources for the SL communication (referred to as Mode 1).

The PC5 DRX configuration in Mode 2 is disclosed. The UE-TX configures the PC5 DRX. The UE-TX notifies the PC5 DRX configuration to the UE-RX that is a peer UE in the UE-to-UE direct communication in the PC5. The UE-RX performs the DRX processes using the PC5 DRX configuration received from the UE-TX in the UE-to-UE direct communication in the PC5.

The UE-TX may notify the UE-RX of the PC5 DRX configuration via the PC5-S signaling. This enables the UE-TX to give the notification early. As another method, the UE-TX may notify the UE-RX of the PC5 DRX configuration via the PC5-RRC signaling. The UE-TX may notify the PC5 DRX configuration as an AS configuration. As another method, the UE-TX may notify the UE-RX of the PC5 DRX configuration via the PC5-MAC signaling. As another method, the UE-TX may notify the UE-RX of the PC5 DRX configuration using the PSCCH or the PSSCH. This enables the UE-TX to configure the PC5 DRX and then dynamically and promptly notify the PC5 DRX configuration.

Activation or deactivation of the PC5 DRX may be configurable. For example, the UE-TX notifies the PC5 DRX configuration via the PC5-S signaling or the PC5-RRC signaling, and notifies activation/deactivation information on the PC5 DRX via the PC5-MAC signaling or using the PSCCH or the PSSCH. Upon receipt of the activation/deactivation information on the PC5 DRX, the UE-RX activates/deactivates the PC5 DRX according to the information. Consequently, the PC5 DRX configuration can be notified in advance, and PC5 DRX processes can be dynamically activated or deactivated.

The PC5 DRX configuration in Mode 1 is disclosed. The gNB configures the PC5 DRX for the UE-TX. The gNB notifies the UE-TX of the PC5 DRX configuration. Unless recognizing the PC5 DRX configuration, the UE-TX cannot perform the PC5 DRX processes with the UE-RX. Thus, the gNB notifies the UE-TX of the PC5 DRX configuration, so that the UE-TX can perform the PC5 DRX processes. Upon receipt of the PC5 DRX configuration from the gNB, the UE-TX notifies the UE-RX of the PC5 DRX configuration. Unless recognizing the PC5 DRX configuration, the UE-RX cannot perform the PC5 DRX processes with the UE-TX. Thus, the UE-RX can perform the PC5 DRX processes by receiving, from the UE-TX, the PC5 DRX configuration established by the gNB.

The gNB may notify the UE-TX of the PC5 DRX configuration via the RRC signaling. As another method, the gNB may notify the PC5 DRX configuration via the MAC signaling. As another method, the gNB may notify the PC5 DRX configuration using the PDSCH. The method disclosed in Mode 2 should be appropriately applied to the notification of the PC5 DRX configuration from the UE-TX to the UE-RX.

Activation or deactivation of the PC5 DRX may be configurable. For example, the gNB notifies the UE-TX of the PC5 DRX configuration via the RRC signaling. The UE-TX notifies the UE-RX of the PC5 DRX configuration via the PC5-RRC signaling. For example, the gNB notifies the UE-TX of the activation/deactivation information on the PC5 DRX via the MAC signaling or using the PDCCH. The UE-TX notifies the UE-RX of the activation/deactivation information on the PC5 DRX using the PSCCH or the PSSCH. Upon receipt of the activation/deactivation information on the PC5 DRX, the UE-RX activates/deactivates the PC5 DRX according to the information.

Not limited to this, the PC5 DRX configuration should be notified before notification of the activation/deactivation of the PC5 DRX. Thus, the PC5 DRX configuration can be notified in advance, and the PC5 DRX processes can be dynamically activated or deactivated in Mode 1.

The UE-TX may request the PC5 DRX configuration to the gNB. The UE-TX notifies the gNB of a request for establishing the PC5 DRX configuration. The UE-TX may notify the gNB of service relevant information for performing the PC5 communication with the UE-RX. The UE-TX may notify the gNB of an SL traffic pattern in the PC5 communication with the UE-RX. The UE-TX may notify these pieces of information together with the request for establishing the PC5 DRX configuration, or include these pieces of information in the request for establishing the PC5 DRX configuration and notify the information. The gNB may configure the PC5 DRX for the UE-TX using these pieces of information. The gNB can establish the PC5 DRX configuration appropriate for the PC5 communication between the UE-TX and the UE-RX.

When the gNB performs dynamic scheduling for the UE-TX in Mode 1, the scheduling outside a PC5 DRX active period need not be permitted. While the PC5 DRX configuration deactivates the PC5 communication, this method saves the UE-TX from having to receive the scheduling from the gNB in the Uu, for example, the PDCCH. Thus, the power consumption of the UE-TX can be reduced.

The required time for processes from when the UE-TX receives the DCI (Downlink Control Information) to when the UE-TX transmits the PSCCH or the PSSCH in the PC5, or the time configured for the processes may be considered. For example, when the gNB performs dynamic scheduling for the UE-TX, the scheduling need not be permitted from the timing when the PC5 DRX transitions outside the PC5 DRX active period to a predetermined timing (e.g., the timing earlier than the timing when the PC5 DRX transitions to the active period by the required time for the processes or the time configured for the processes). The UE-TX can transmit the PSCCH or the PSSCH immediately after transitioning to the PC5 DRX active period.

The gNB may establish the DRX configuration between the gNB and the UE-TX, using the PC5 DRX configuration for the UE-TX. In this invention, the DRX configuration between the gNB and the UE-TX may be referred to as a Uu DRX configuration. For example, the gNB should adjust the PC5 DRX configuration and the Uu DRX configuration to match (in other words, align) both of the active periods. Alternatively, the gNB should adjust the PC5 DRX configuration and the Uu DRX configuration so that both of the active periods are consecutive. Alternatively, the gNB should adjust the PC5 DRX configuration and the Uu DRX configuration so that a period from the start of one of the active periods to the end of each of the active periods is reduced even when the active periods are not consecutive. For example, the gNB may establish the Uu DRX configuration and the PC5 DRX configuration in consideration of the required time for processes from receipt of the DCI to transmission of the PSCCH or the PSSCH in the PC5 or the time configured for the processes. For example, the gNB may configure a Uu DRX activation transitioning timing earlier than the PC5 DRX activation transitioning timing by the required time for the processes or the time configured for the processes.

Thus, the power consumption of the UE-TX can be reduced.

When the gNB establishes a configured grant (CG) in the PC5 in the UE-TX in Mode 1, the UE-TX that has received a CG configuration in the PC5 from the gNB may notify the UE-RX of the CG configuration in the PC5. For example, the UE-RX can perform reception from the UE-TX using the CG configuration established in the UE-TX, by recognizing the CG configuration. The UE-RX should perform reception from the UE-TX with the resource timing established by the CG. Thus, the power consumption of the UE-RX can be reduced. Furthermore, when data is generated in the UE-TX, the UE-TX can transmit the data to the UE-RX with low latency using the CG.

The gNB may establish both of the CG in the PC5 and the DRX in the PC5 in the UE-TX. For example, the CG in the PC5 may be used when low latency is required, whereas the DRX in the PC5 may be used when low latency is not required.

The gNB may prohibit the UE-TX from simultaneously establishing both of the CG in the PC5 and the DRX in the PC5. This can avoid increase in complexity of the processes.

The DRX in the PC5 may be configured for each UE or for each UE-TX. When the UE-TX performs data communication with a plurality of UE-RXs, the UE-TX should perform the communication during a DRX active period configured in the UE-TX.

The DRX in the PC5 may be configured for each UE-RX. When the UE-RX performs data communication with a plurality of UE-TXs, the UE-RX should perform the communication during a DRX active period configured in the UE-RX.

The DRX in the PC5 may be configured for each pair of peer UEs. This enables the PC5 DRX configuration appropriate for the service to be communicated between the pair of peer UEs. The DRX in the PC5 may be configured for each PC5-S link. This enables the PC5 DRX configuration appropriate for the service to be communicated between the pair of peer UEs. The DRX in the PC5 may be configured for each PC5 QoS flow. This enables the PC5 DRX configuration appropriate for the QoS of the service to be communicated between the pair of peer UEs.

The number of PC5 DRX configurations may be one or more. Furthermore, a plurality of PC5 DRX configurations may be combined. This enables flexible configurations of the DRX. This enables PC5 DRX configurations appropriate for various SL traffic patterns.

The following (1) to (8) are disclosed as specific examples of the PC5 DRX configuration information.
(1) A PC5 DRX cycle
(2) A PC5 DRX ON duration
(3) A PC5 DRX offset
(4) A PC5 DRX inactivity period
(5) A PC5 DRX retransmission period
(6) A PC5 DRX retransmission inactivity period
(7) A PC5 DRX frequency band
(8) Combinations of (1) to (7) above

In (1), a plurality of PC5 DRX cycles may be configured. For example, a plurality of PC5 DRX configurations with different cycles may be configured. For example, a cycle A and a cycle B longer than the cycle A may be configured. First, the PC5 DRX processes are performed on the cycle A. The cycle A is used for a predetermined period or a predetermined number of times. Then, in the absence of data during the cycle A, the cycle A transitions to the cycle B. If data is generated during the PC5 DRX processes on the cycle B, the cycle B transitions to the cycle A. This enables flexible PC5 DRX configurations according to the frequency of occurrence of communication.

The PC5 DRX ON duration in (2) may be set longer than or equal to an SL resource selection window period in Mode 2. Alternatively, the PC5 DRX ON duration may be set equal to the SL resource selection window period. Consequently, the PC5 DRX ON duration includes at least one of SL resources selected during the SL resource selection window period. The PSCCH and the PSSCH can be transmitted with the SL resource during the PC5 DRX ON duration.

The PC5 DRX offset in (3) may be configured in synchronization with the SL resource selection window start timing in Mode 2. This enables a configuration including, in the PC5 DRX ON duration, the SL resources selected during the SL resource selection window period.

(1) to (6) above may be managed by a timer.

The PC5 DRX frequency band in (7) indicates frequency resources to be used during the PC5 DRX active period. The resources may be represented per subcarrier, per resource block (RB), or per sub-channel. Furthermore, the resources may be a Bandwidth Part (BWP). Carrier frequencies may be configured as a PC5 DRX frequency band. A frequency band including frequencies of resources selected and reserved as SL resources may be configured as a PC5 DRX frequency band in Mode 2. Consequently, the UE-RX can limit a frequency band in which transmission from the UE-TX is searched. This facilitates the processes, and can reduce the power consumption necessary for the searching.

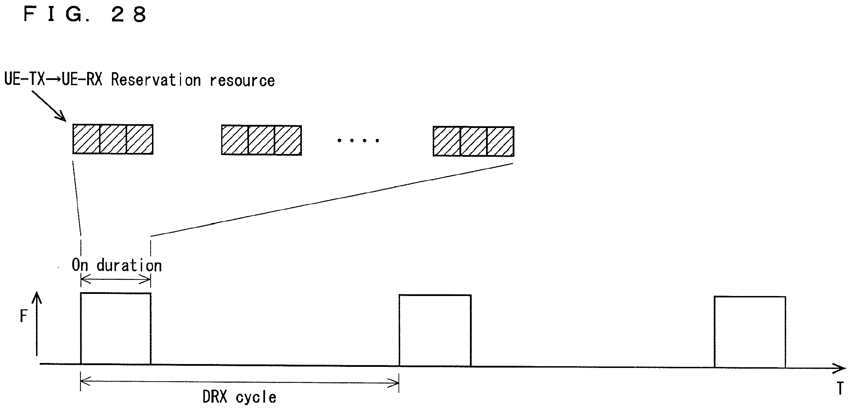

FIG. 28 is a conceptual diagram illustrating the first example of the PC5 DRX configuration according to the fourth embodiment. In FIG. 28, a PC5 DRX cycle, a PC5 DRX offset, and a PC5 DRX ON duration are configured as the PC5 DRX configuration. The PC5 DRX ON duration appears on the PC5 DRX cycle. The start of the PC5 DRX ON duration is configured by the PC5 DRX offset. The PC5 DRX offset may be configurable not only per subframe or radio frame but also per symbol or slot. This enables a more specific time configuration.

The resources selected and reserved for the SL communication from the UE-TX to the UE-RX are validated during the PC5 DRX active period. The UE-TX can transmit data to the UE-RX with the reserved resources during the PC5 DRX active period. The UE-TX cannot transmit data to the UE-RX with the reserved resources outside the PC5 DRX active period. In the example of FIG. 28, the PC5 DRX active period is the PC5 DRX ON duration. "Outside the PC5 DRX active period" means a period excluding the PC5 DRX ON duration.

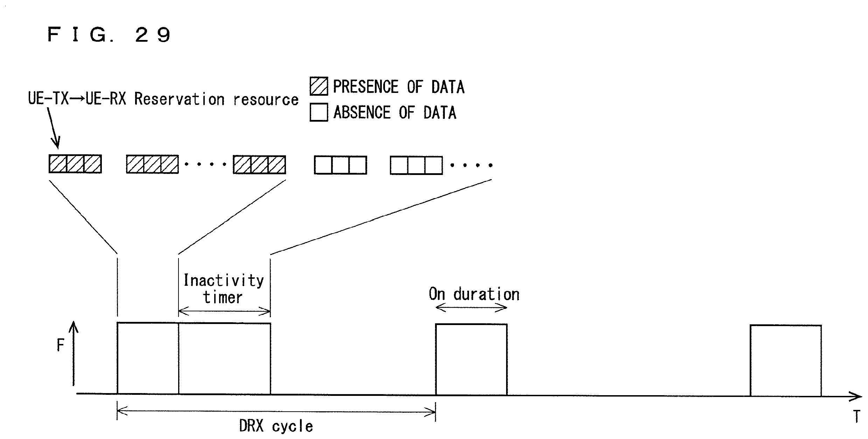

FIG. 29 is a conceptual diagram illustrating the second example of the PC5 DRX configuration according to the fourth embodiment. In FIG. 29, the PC5 DRX configuration includes a PC5 DRX inactivity period. Hereinafter, different portions from FIG. 28 are mainly described in FIG. 29. When the PSCCH or the PSSCH appears during the PC5 DRX ON duration, the PC5 DRX active period is further configured by the PC5 DRX inactivity period from the PSCCH or the PSSCH. When the UE-TX transmits data to the UE-RX during the PC5 DRX ON duration, the PC5 DRX active period may be further configured by the PC5 DRX inactivity period from transmission of the data.

When the PSCCH or the PSSCH appears during the PC5 DRX inactivity period, the PC5 DRX active period is continued by the PC5 DRX inactivity period from the PSCCH or the PSSCH. When the UE-TX transmits data to the UE-RX during the PC5 DRX inactivity period, the PC5 DRX active period may be continued further by the PC5 DRX inactivity period from transmission of the data.

The PSCCH, the PSSCH, or data in the PC5 in the present invention may be simply referred to data.

The timing may be statically predetermined, for example, in a standard. Alternatively, the timing may be included in the PC5 DRX configuration information. For example, start of the PC5 DRX inactivity period may be a start timing of a slot next to a slot in which data has been generated. For example, the start may be defined not by the slot but by a symbol.

In the absence of data during the PC5 DRX inactivity period since the last PSCCH, the PC5 DRX transitions outside the PC5 DRX active period. A period until the start of the next PC5 DRX ON duration is outside the PC5 DRX active period.

The resources selected and reserved for the SL communication from the UE-TX to the UE-RX are validated during the PC5 DRX active period. The UE-TX can transmit data to the UE-RX with the reserved resources during the PC5 DRX active period. The UE-TX cannot transmit data to the UE-RX with the reserved resources outside the PC5 DRX active period. In the example of FIG. 29, the PC5 DRX active period means a period from the start of the PC5 DRX ON duration to the end of the PC5 DRX inactivity period. "Outside the PC5 DRX active period" means a period from the end of the PC5 DRX inactivity period to the start of the PC5 DRX ON duration.

A PC5 DRX processing method in Mode 2 is disclosed. If data is generated, the UE-TX searches for resources for the SL communication before the PC5 DRX ON duration. The UE-TX may search for the resources for the SL communication in advance regardless of whether data has been generated. This enables the UE-TX to select and reserve the resources early when data has been generated. The UE-TX selects and reserves resources for the PC5 DRX ON duration. In the absence of resources for the SL communication to be reserved, the UE-TX selects and reserves the resources for the SL communication again. The UE-TX may select and reserve the resources a plurality of times during the PC5 DRX ON duration. Furthermore, the UE-TX may select and reserve the resources a plurality of times not only during the PC5 DRX ON duration but also during the PC5 DRX active period.

The number (may be referred to as a reselection counter) of resources to be reserved for the SL communication may be limited to that in the PC5 DRX ON duration. This can enhance the use efficiency of the resources for other UEs. When the number of resources to be reserved for the SL communication is limited to that in the PC5 DRX ON duration, the UE-TX may select and reserve the resources during the PC5 DRX ON duration again. When the reselection counter of the resources to be reserved becomes 0 during the PC5 DRX ON duration, the UE-TX may select and reserve the resources again. The number (may be referred to as a reselection counter) of resources to be reserved for the SL communication need not be limited to that in the PC5 DRX ON duration. This can reduce processes for the UE-TX to select and reserve the resources again during the PC5 DRX active period. Thud, increase in complexity of the processes can be avoided.

When data is transmitted during the PC5 DRX ON duration, the PC5 DRX inactivity period is started. When data is transmitted during the PC5 DRX inactivity period, the PC5 DRX inactivity period is started again. When the resources for the SL communication to be reserved when the PC5 DRX inactivity period is started are less than the resources available during the PC5 DRX inactivity period, the UE-TX may select and reserve the resources again. When the reselection counter of the resources to be reserved for the SL communication becomes 0 during the PC5 DRX inactivity period, the UE-TX may select and reserve the resources again. This method enables the UE-TX to reserve the resources for the SL communication during the PC5 DRX active period.

The repeated transmission may be performed in the SL communication. The repeated transmission may be performed during the PC5 DRX active period. The repeated transmission may start the PC5 DRX inactivity period. The UE-TX should perform the repeated transmission with the resources for the SL communication during the PC5 DRX active period. The repeated transmission can increase the reception quality in the UE-RX.

When the PC5 DRX transitions outside the PC5 DRX active period, the UE-TX may release the reserved resources for the SL communication. Information indicating release of the resources for the SL communication may be provided. Transmission of the information should mean no transitioning to the PC5 DRX inactivity period. When releasing the reserved resources for the SL communication, the UE-TX transmits the information. The UE-TX may, for example, include the information in the PSCCH. This enables other UEs to receive the information. The other UEs can recognize that the resources reserved by the UE-TX that has transmitted the information have been released. This can enhance the use efficiency of the resources for the SL communication. Another control channel or signal may be provided for transmitting the information.

For example, the UE-TX may transmit the information with the last resource in the PC5 DRX inactivity period. Alternatively, the UE-TX may transmit the information with the first resource after transitioning outside the PC5 DRX active period. This enables the UE-TX to transmit the information immediately before or after transitioning outside the PC5 DRX active period.

The UE-TX performs scheduling for the UE-RX with the resources for the SL communication within the PC5 DRX active period, and transmits data according to the scheduling. When the PC5 DRX inactivity period is not configured and the amount of data exceeds the amount that can be transmitted during the DRX ON duration, the UE-TX may transmit the data in the next DRX ON duration.

A PC5 DRX processing method in Mode 1 is disclosed. The UE-TX should perform the DRX processes according to the PC5 DRX configuration received from the gNB. The aforementioned method should be appropriately applied to the PC5 DRX configuration. The method disclosed in Mode 2 should be appropriately applied to the DRX processing method. Here, the UE-TX need not select and reserve resources, but should use resources for the PC5 DRX which have been received from the gNB.

The DRX processes in the UE-RX in Modes 1 and 2 are disclosed. The UE-RX calculates the start timing of the PC5 DRX ON duration using the PC5 DRX configuration received from the UE-TX, and receives the PSCCH or the PSSCH from the UE-TX during the PC5 DRX ON duration. In LTE, the PSCCH includes the SCI that is PC5 control information. In NR, both of the PSCCH and the PSSCH include the information. Upon receipt of the PSCCH or the PSSCH, the UE-RX can receive the SCI from the UE-TX. The UE-RX receives data according to scheduling information of the received SCI.

The UE-RX that has received data from the UE-TX during the PC5 DRX ON duration receives the PSCCH or the PSSCH from the UE-TX during the PC5 DRX inactivity period that begins upon receipt of the data, when such inactivity period has been configured. In the presence of data during the PC5 DRX inactivity period, the PC5 DRX transitions to the PC5 DRX inactivity period again. In the absence of data during the PC5 DRX inactivity period, the PC5 DRX transitions outside the PC5 DRX active period after the end of the PC5 DRX inactivity period. The UE-RX stops receiving the PSCCH or the PSSCH outside the PC5 DRX active period.

The UE-RX receives the PSCCH or the PSSCH from the UE-TX during the next PC5 DRX ON duration, using the PC5 DRX cycle. As such, the UE-RX receives the PSCCH, the PSSCH, or data during the PC5 DRX active period, whereas the UE-RX receives none of the PSCCH, the PSSCH, and data outside the PC5 DRX active period.

Thus, the PC5 DRX configuration between the UE-TX and the UE-RX can reduce the power consumption of the UEs in the UE-to-UE direct communication in the PC5.

In NR, support of unicast and groupcast communications in the PC5 has been studied. In unicasts and groupcasts, the HARQ using feedback has been studied. A HARQ retransmission method when the PC5 DRX is configured is disclosed.

A retransmission period may be provided. The aforementioned PC5 DRX retransmission period should be configured. When retransmission is required, the UE-TX performs the retransmission within the configured PC5 DRX retransmission period. Furthermore, a period from receipt of a HARQ feedback signal to the retransmission may be provided. The aforementioned PC5 DRX retransmission inactivity period should be configured. After receiving the feedback signal, the UE-TX does not perform retransmission during the PC5 DRX retransmission inactivity period. The UE-TX may start the PC5 DRX retransmission period with the end timing of the PC5 DRX retransmission inactivity period.

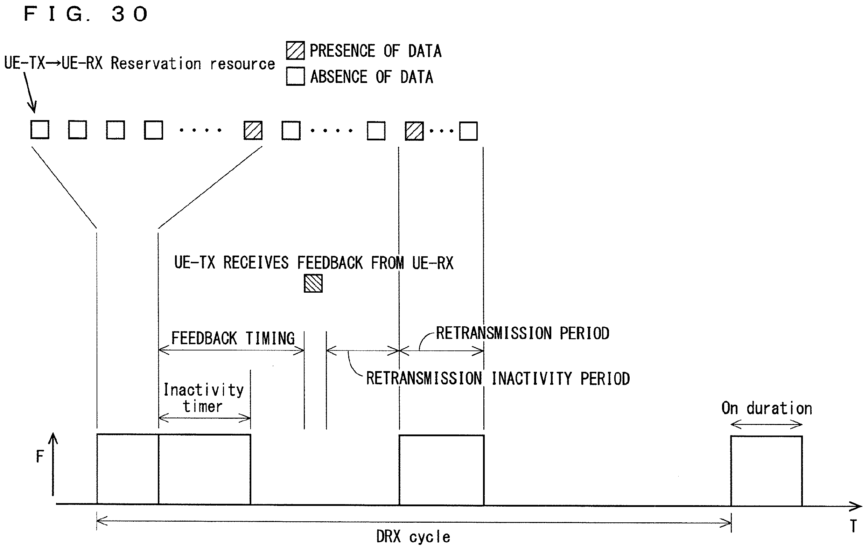

FIG. 30 is a conceptual diagram illustrating the third example of the PC5 DRX configuration according to the fourth embodiment. The PC5 DRX configuration includes the PC5 DRX retransmission period and the PC5 DRX retransmission inactivity period. Hereinafter, different portions from FIG. 29 are mainly described in FIG. 30. When data has been generated during the PC5 DRX ON duration, the PC5 DRX active period is further continued by the PC5 DRX inactivity period from the generation of the data. When the UE-TX does not transmit data to the UE-RX during the PC5 DRX inactivity period, the PC5 DRX terminates the PC5 DRX active period, and transitions outside the PC5 DRX active period.

The UE-RX receives the data transmitted from the UE-TX to the UE-RX during the PC5 DRX ON duration. The UE-RX transmits a feedback signal to the UE-TX with the timing configured for feedback (feedback timing). The UE-RX may transmit the feedback signal using a feedback channel (the PSFCH). The feedback signal may be the Ack/Nack for received data.

The UE-TX may configure a feedback timing. The UE-TX notifies the UE-RX of the feedback timing. The UE-TX may notify the UE-RX of resource information for feedback. The UE-TX may notify feedback timing information together with the resource information for feedback, or include the feedback timing information in the resource information for feedback and notify the feedback timing information. The UE-TX may notify the resource information or the timing information via the PC5-RRC signaling. The UE-TX may include, in the AS configuration, the resource information or the timing information, and notify the information. Alternatively, the UE-TX may include, in the PC5-MAC signaling, the resource information or the timing information, and notify the information. Alternatively, the UE-TX may include, in the SCI, the resource information or the timing information, and notify the information. This enables the UE-TX to give the notification dynamically early.

Reselection counters of the resources to be reserved for the SL communication may be configured separately for initial transmission and feedback. As another method, a reselection counter of the resources to be reserved for the SL communication may be configured for the initial transmission and the feedback. A plurality of HARQs may be processed in the SL communication. A reselection counter of the resources to be reserved for the SL communication may be configured for each HARQ.

The gNB may configure the feedback timing. The gNB may configure the resources for feedback. For example, the gNB notifies the UE-TX of these pieces of information together with other scheduling information in Mode 1. The UE-TX should notify the UE-RX of the received feedback timing and feedback resource information. The gNB may include the resource information or the timing information in the Uu RRC signaling, and notify the UE-TX of the information. Alternatively, the gNB may include, in the Uu-MAC signaling, the resource information or the timing information, and notify the information. Alternatively, the gNB may include, in the DCI, the resource information or the timing information, and notify the information. The aforementioned method should be applied to a method for notifying the information from the UE-TX to the UE-RX.

A feedback signal may be transmitted and received outside the PC5 DRX active period.

For example, the feedback signal may be transmitted and received after the end of the PC5 DRX inactivity period as illustrated in FIG. 30. The feedback timing may be configured as a period longer than the PC5 DRX inactivity period. The UE-RX transmits the feedback signal with the configured feedback timing after the end of the PC5 DRX inactivity period. The UE-TX receives the feedback signal with the configured feedback timing.

When receiving the Nack or none with the configured feedback timing, the UE-TX performs retransmission. The UE-TX searches for, selects, and reserves the resources for the SL communication to be used during the PC5 DRX retransmission period, and performs retransmission with the reserved resources during the PC5 DRX retransmission period. The UE-RX receives the retransmission from the UE-TX during the PC5 DRX retransmission period. The UE-RX receives the PSCCH and the PSSCH from the UE-TX during the PC5 DRX retransmission period, and receives the retransmission data. The PC5 DRX retransmission period is the PC5 DRX active period. This enables the retransmission processes even when the PC5 DRX configuration has been established.

The retransmission may be applied to determination on whether to transition to the PC5 DRX inactivity period. When retransmission is performed during the PC5 DRX ON duration or the PC5 DRX inactivity period, the PC5 DRX may transition to the PC5 DRX inactivity period again. Consequently, the PC5 DRX active period can be configured according to generation of data (including retransmission data). For example, this is effective when the feedback timing is set shorter.

The retransmission need not be applied to determination on whether to transition to the PC5 DRX inactivity period. Even when retransmission is performed during the PC5 DRX ON duration or the PC5 DRX inactivity period, the PC5 DRX does not transition to the PC5 DRX inactivity period again. This can separate the retransmission and the initial transmission. The PC5 DRX active period corresponding to the generated initial transmission data can be configured, regardless of the presence or absence of the retransmission process. For example, this is effective when the communication quality is better and the number of retransmissions is less.

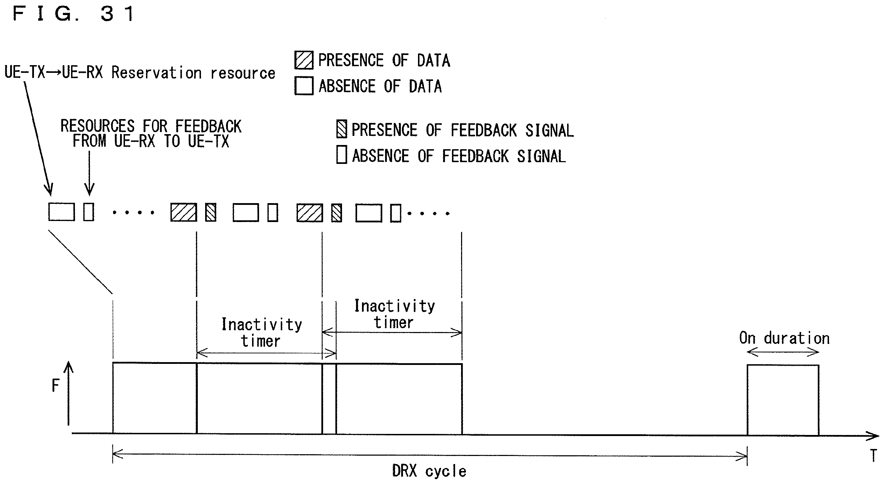

FIG. 31 is a conceptual diagram illustrating the fourth example of the PC5 DRX configuration according to the fourth embodiment. FIG. 31 illustrates that retransmission is applied to determination on whether to transition to the PC5 DRX inactivity period. Hereinafter, different portions from FIG. 29 are mainly described in FIG. 31. If data is generated during the PC5 DRX ON duration, the PC5 DRX active period is further continued by the PC5 DRX inactivity period from the generation of the data.

For example, the feedback signal may be transmitted and received within the PC5 DRX inactivity period. The feedback timing may be configured as a period shorter than the PC5 DRX inactivity period. The UE-RX transmits the feedback signal with the configured feedback timing after the end of the PC5 DRX inactivity period. The UE-TX receives the feedback signal with the configured feedback timing.

When receiving the Nack or none with the configured feedback timing, the UE-TX performs retransmission. The UE-TX performs the retransmission during the PC5 DRX inactivity period. When the UE-TX performs the retransmission during the PC5 DRX inactivity period, the PC5 DRX starts the PC5 DRX inactivity period again. When the UE-TX does not transmit data (including retransmission data) to the UE-RX during the PC5 DRX inactivity period, the PC5 DRX terminates the PC5 DRX active period, and transitions outside the PC5 DRX active period.

The UE-RX should receive the data (including retransmission data) from the UE-TX during the PC5 DRX active period. The UE-RX should receive the PSCCH and the PSSCH during the PC5 DRX duration and the PC5 DRX inactivity period, and receive the data (including retransmission data) from the UE-TX. The processing method with the PC5 DRX configuration, which is disclosed in FIG. 29, should be applied to this method.

This can avoid increase in complexity of the PC5 DRX processes between the UE-TX and the UE-RX.

Although the example of FIG. 31 discloses a case where the PC5 DRX retransmission period and the PC5 DRX retransmission inactivity period are not configured, the PC5 DRX retransmission period and the PC5 DRX retransmission inactivity period may be configured. For example, the PC5 DRX retransmission period and the PC5 DRX inactivity period are configured so that the PC5 DRX inactivity period includes the PC5 DRX retransmission period. Although this increases the complexity of the PC5 DRX processes between the UE-TX and the UE-RX, unified processes including a process of configuring the PC5 DRX retransmission period outside the PC5 DRX inactivity period are applicable. This enables a flexible configuration of a retransmission period. In such a case, increase in complexity of the processes can be avoided.

What is disclosed in the aforementioned method is using the Ack/Nack in HARQ feedback as the feedback information. Another feedback information may be used. The other feedback information should be appropriately applied to a case where the UE-TX or the gNB configures the feedback timing and the feedback resources. This can produce the same advantages as previously described.

In this invention, the UE in which the service data has been generated is the UE-TX. Suppose, for example, a UE 1 denotes the UE-TX and a UE 2 denotes the UE-RX. When the service data has been generated in the UE 2 and the UE 2 transmits the data to the UE 1, the disclosed methods should be applied by reading the UE 2 as the UE-TX and reading the UE 1 as the UE-RX. This can produce the same advantages as previously described.

Examples of the feedback information include CSI report information to be transmitted from the UE-RX (the UE 2) to the UE-TX (the UE 1). With application of the disclosed methods by reading the UE 2 as the UE-TX and reading the UE 1 as the UE-RX, the CSI report information may be transmitted and received during the PC5 DRX active period. This enables transmission and reception of information requiring a larger amount of information such as the CSI report information.

When the UEs that perform the UE-to-UE direct communication in the PC5 are the UEs 1 and 2, the PC5 DRX configuration may be established in the bidirectional communication. In the PC5 DRX configuration in the communication from the UE 1 to the UE 2, a transmitting UE is the UE 1, and a receiving UE is the UE 2. Thus, the aforementioned method should be appropriately applied by reading the UE 1 as the UE-TX and reading the UE 2 as the UE-RX. In the PC5 DRX configuration in the communication from the UE 2 to the UE 1, a transmitting UE is the UE 2, and a receiving UE is the UE 1. Thus, the aforementioned method should be appropriately applied by reading the UE 2 as the UE-TX and reading the UE 1 as the UE-RX.

In the UE-to-UE direct communication in the PC5, a method for matching (i.e., aligning) bidirectional PC5 DRX configurations is disclosed. As describe above, the bidirectional PC5 DRX configurations should be established, for example, by matching (in other words, aligning) both of the active periods. Alternatively, the bidirectional PC5 DRX configurations should be established, for example, by making the active periods consecutive. Alternatively, the bidirectional PC5 DRX configurations should be established, for example, so that a period from the start of one of the active periods to the end of each of the active periods is reduced even when the active periods are not consecutive.

For example, the PC5 DRX configuration in one direction should be matched to the PC5 DRX configuration in another direction. The PC5 DRX configuration in any one of the directions may be established earlier. For example, the PC5 DRX configuration in the communication from the UE 1 to the UE 2 should be established first. Then, the PC5 DRX configuration in the communication from the UE 2 to the UE 1 should be established by matching the configuration to the PC5 DRX configuration in the communication from the UE 1 to the UE 2. For example, one of the UEs may establish the bidirectional PC5 DRX configurations by matching these configurations. For example, the gNB to which one of the UEs is connected may establish the bidirectional PC5 DRX configurations by matching these configurations.

The PC5 DRX configuration information established earlier may be notified to a node that matches the bidirectional PC5 DRX configurations. The node that matches the bidirectional PC5 DRX configurations can establish a subsequent PC5 DRX configuration by matching the bidirectional PC5 DRX configurations using the PC5 DRX configuration established earlier.

Matching the bidirectional PC5 DRX configurations can reduce the power consumption of the UEs that perform the UE-to-UE direct communication in the PC5.

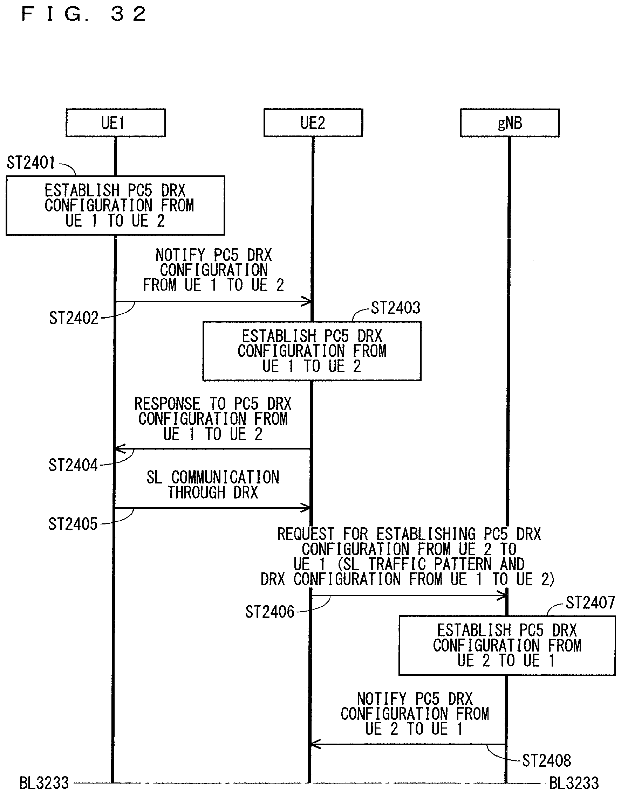

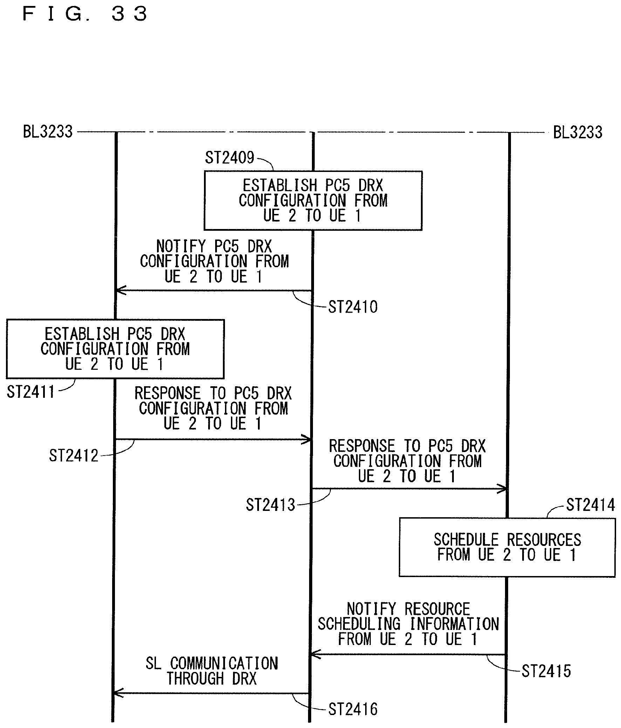

FIGS. 32 and 33 are sequence diagrams illustrating the first example method for matching the bidirectional DRXs in the UE-to-UE direct communication in the PC5 according to the fourth embodiment. FIGS. 32 and 33 are connected across a location of a border BL3233. FIGS. 32 and 33 illustrate that the UE 1 is out of coverage (OOC) of the gNB and the UE 2 is in coverage (IC) of the gNB.

Since the UE 1 is OOC, the UE 1 establishes the PC5 DRX configuration for the UE 2 in the communication from the UE 1 to the UE 2 in Step ST2401. In Step ST2402, the UE 1 notifies the UE 2 of the PC5 DRX configuration information. In Step ST2403, the UE 2 establishes the PC5 DRX configuration received from the UE 1. In Step ST2404, the UE 2 notifies the completion of the PC5 DRX configuration in the communication from the UE 1 to the UE 2. This enables the PC5 DRX configuration in the communication from the UE 1 to the UE 2. Accordingly, the UE 1 performs the PC5 DRX processes in the SL communication in Step ST2405. The UE 1 searches for, selects, and reserves the resources for the SL communication from the UE 1 to the UE 2, and communicates data through the PC5 DRX processes.

The UE 2 determines to establish the PC5 DRX configuration in the communication from the UE 2 to the UE 1. In Step ST2406, the UE 2 notifies the gNB to which the UE 2 is connected of a request for establishing the PC5 DRX configuration in the communication from the UE 2 to the UE 1. The UE 2 notifies the gNB of an SL traffic pattern in the communication from the UE 2 to the UE 1. The UE 2 may notify the gNB of service relevant information (e.g., a service identifier, a type and the QoS of the service, and the frequency of occurrence of service data) on the communication from the UE 2 to the UE 1. Consequently, the gNB can calculate the SL traffic pattern in the communication from the UE 2 to the UE 1. Furthermore, the UE 2 notifies the gNB of the PC5 DRX configuration information from the UE 1 to the UE 2. The UE 2 may notify these pieces of information together with the request information, or include the pieces of information in the request information and notify the pieces of information.

Upon receipt of the request for establishing the PC5 DRX configuration from the UE 2 to the UE 1, the gNB establishes the PC5 DRX configuration in the communication from the UE 2 to the UE 1 using the information in Step ST2407. The gNB establishes the PC5 DRX configuration in the communication from the UE 2 to the UE 1 by matching the bidirectional PC5 DRX configurations using the DRX configuration from the UE 1 to the UE 2. This enables the gNB to match the bidirectional PC5 DRX configurations.

In Step ST2408, the gNB notifies the UE 2 of the PC5 DRX configuration information. In Step ST2409, the UE 2 establishes the PC5 DRX configuration. Furthermore, the UE 2 notifies the UE 1 of the PC5 DRX configuration in the communication from the UE 2 to the UE 1 in Step ST2410. In Step ST2411, the UE 1 establishes the PC5 DRX configuration. In Step ST2412, the UE 1 notifies the UE 2 of the completion of the PC5 DRX configuration in the communication from the UE 2 to the UE 1. This enables the UE 2 to perform the PC5 DRX processes in the communication from the UE 2 to the UE 1.

In Step ST2413, the UE 2 notifies the gNB of the completion of the PC5 DRX configuration in the communication from the UE 2 to the UE 1. The UE 2 may include, in the notification of the completion of the PC5 DRX configuration, information on a request for scheduling the SL communication from the UE 2 to the UE 1. Alternatively, the UE 2 may notify the gNB of the information on the request for scheduling the SL communication from the UE 2 to the UE 1 separately from the notification of the completion of the PC5 DRX configuration. In Step ST2414, the gNB schedules the resources for the communication from the UE 2 to the UE 1. In Step ST2415, the gNB notifies the UE 2 of information on scheduling the communication from the UE 2 to the UE 1. In Step ST2416, the UE 2 communicates data to the UE 1 through the PC5 DRX processes.

Matching the bidirectional PC5 DRX configurations in the UE-to-UE direct communication in the PC5 can reduce the power consumption of the UE 1 and the UE 2 that perform the UE-to-UE direct communication in the PC5.

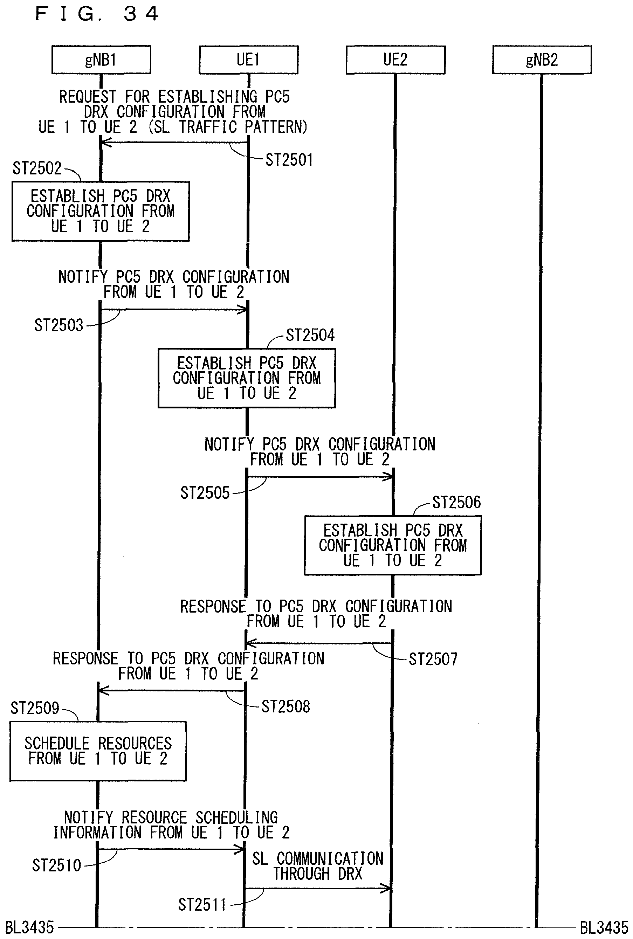

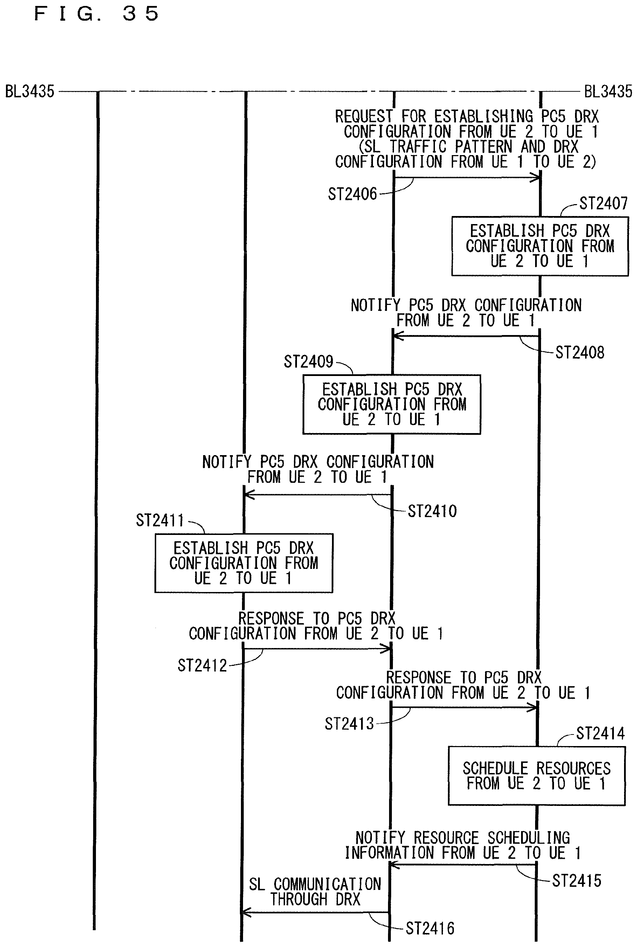

FIGS. 34 and 35 are sequence diagrams illustrating the second example method for matching the bidirectional DRXs in the UE-to-UE direct communication in the PC5 according to the fourth embodiment. FIGS. 34 and 35 are connected across a location of a border BL3435. FIGS. 34 and 35 illustrate that the UE 1 is IC of the gNB 1 and the UE 2 is IC of the gNB 2. Since the UE 1 is IC, FIGS. 34 and 35 illustrate that the gNB 1 schedules the PC5 communication from the UE 1 to the UE 2.

The UE 1 determines to establish the PC5 DRX configuration in the communication from the UE 1 to the UE 2. In Step ST2501, the UE 1 notifies the gNB to which the UE 1 is connected of a request for establishing the PC5 DRX configuration in the communication from the UE 1 to the UE 2. The UE 1 notifies the gNB of an SL traffic pattern in the communication from the UE 1 to the UE 2. The UE 1 may notify the gNB of the service relevant information (e.g., a service identifier, a type and the QoS of the service, and the frequency of occurrence of service data) on the communication from the UE 1 to the UE 2. Consequently, the gNB 1 can calculate the SL traffic pattern in the communication from the UE 1 to the UE 2.

Upon receipt of the request for establishing the PC5 DRX configuration from the UE 1 to the UE 2, the gNB 1 establishes the PC5 DRX configuration in the communication from the UE 1 to the UE 2, using the information in Step ST2502. In Step ST2503, the gNB 1 notifies the UE 1 of the PC5 DRX configuration information. In Step ST2504, the UE 1 establishes the PC5 DRX configuration. Furthermore, the UE 1 notifies the UE 2 of the PC5 DRX configuration in the communication from the UE 1 to the UE 2 in Step ST2505. In Step ST2506, the UE 2 establishes the PC5 DRX configuration. In Step ST2507, the UE 2 notifies the UE 1 of the completion of the PC5 DRX configuration in the communication from the UE 1 to the UE 2. This enables the UE 1 to perform the PC5 DRX processes in the communication from the UE 1 to the UE 2.

In Step ST2508, the UE 1 notifies the gNB 1 of the completion of the PC5 DRX configuration in the communication from the UE 1 to the UE 2. The UE 1 may include, in the notification of the completion of the PC5 DRX configuration, information on the request for scheduling the SL communication from the UE 1 to the UE 2. Alternatively, the UE 1 may notify the gNB 1 of the information on the request for scheduling the SL communication from the UE 1 to the UE 2 separately from the notification of the completion of the PC5 DRX configuration. In Step ST2509, the gNB 1 schedules the resources for the communication from the UE 1 to the UE 2. In Step ST2510, the gNB 1 notifies the UE 1 of information on scheduling the communication from the UE 1 to the UE 2. In Step ST2511, the UE 1 communicates data to the UE 2 through the PC5 DRX processes.

The UE 2 determines to establish the PC5 DRX configuration in the communication from the UE 2 to the UE 1. The method disclosed in FIGS. 32 and 33 should be appropriately applied to a method for the UE 2 to determine to establish the PC5 DRX configuration in the communication from the UE 2 to the UE 1 and then communicate data to the UE 1 through the PC5 DRX processes. Step ST2406 to Step ST2416 in FIGS. 32 and 33 should be applied. This can produce the same advantages as previously described.

Even when the UE 1 and the UE 2 are IC of the respective gNBs, this method enables the PC5 DRX processes in which the bidirectional PC5 DRX configurations have been matched in the UE-to-UE direct communication in the PC5. Thus, the power consumption of the UE 1 and the UE 2 that perform the UE-to-UE direct communication in the PC5 can be reduced.

The remote UE and the relay UE establish the PC5 DRX configuration in the communication between the remote UE and the NW through the relay UE. The remote UE and the relay UE perform the PC5 DRX processes. The remote UE and the relay UE perform the PC5 communication in the communication between the remote UE and the NW through the relay UE. The method for configuring the DRX in the UE-to-UE direct communication in the PC5 should be appropriately applied to a method for configuring the PC5 DRX between the remote UE and the relay UE.

For example, the method should be applied by reading the remote UE as the UE-TX and reading the relay UE as the UE-RX in the SL communication from the remote UE to the relay UE. In the SL communication from the relay UE to the remote UE, the method should be applied by reading the relay UE as the UE-TX and reading the remote UE as the UE-RX. For example, the method in Mode 2 should be applied to the remote UE that is OOC of the gNB. The method in Mode 1 should be applied to the relay UE that is IC of the gNB. This enables the PC5 DRX configuration and the PC5 DRX processes between the remote UE and the relay UE in the communication between the remote UE and the NW through the relay UE. Thus, the power consumption of the remote UE and the relay UE can be reduced.

The bidirectional PC5 DRX configurations of the SL communication from the remote UE to the relay UE and the SL communication from the relay UE to the remote UE may be matched (i.e., aligned). The aforementioned method for matching the bidirectional PC5 DRX configurations in the UE-to-UE direct communication in the PC5 should be appropriately applied to this method. For example, the method disclosed in FIGS. 32 and 33 may be appropriately applied. Suppose that the UE 1, the UE 2, and the gNB in FIGS. 32 and 33 are the remote UE, the relay UE, and the gNB to which the relay UE is connected, respectively. The gNB to which the relay UE is connected matches the bidirectional PC5 DRX configurations. Thus, matching the bidirectional PC5 DRX configurations can further reduce the power consumption of the remote UE and the relay UE.

In Step ST2406 in FIGS. 32 and 33, the UE 2 notifies the gNB of the SL traffic pattern from the UE 2 to the UE 1. When the relay UE is used, the relay UE does not generate the service data to be communicated in the PC5. The NW communicates the service data to the remote UE. Thus, the relay UE sometimes fails to recognize the traffic pattern of the communication to the remote UE. A method for solving such a problem is disclosed.

The relay UE calculates a traffic pattern from the relay UE to the remote UE in the communication from the NW to the remote UE. As the calculation method, the relay UE may measure the data communication in the PC5 from the relay UE to the remote UE. The method disclosed in the first embodiment may be appropriately applied to the measuring method. As another method, the remote UE may notify the relay UE of the traffic pattern from the relay UE to the remote UE. The remote UE may calculate the traffic pattern from the relay UE to the remote UE, from information on a service to be communicated with the NW through the relay UE. Alternatively, the remote UE may measure the data communication with the relay UE in the PC5. Consequently, the relay UE can recognize the traffic pattern of the communication to the remote UE.

As another method, the gNB or the UPF may calculate a traffic pattern from the relay UE to the remote UE in the communication from the NW to the remote UE. The aforementioned measuring method may be appropriately applied. When the gNB calculates the traffic pattern, the gNB should use the calculation result in Step ST2407 in FIGS. 32 and 33. When the UPF calculates the traffic pattern, the UPF should notify the gNB of the calculated traffic pattern. The gNB should use the traffic pattern received from the UPF in Step ST2407 in FIGS. 32 and 33. This can produce the same advantages as previously described.

Although the traffic pattern of the communication from the NW to the remote UE is disclosed, the aforementioned method may be appropriately applied to the traffic pattern of the communication from the remote UE to the NW.

Another method for matching (i.e., aligning) the bidirectional PC5 DRX configurations of the SL communication from the remote UE to the relay UE and the SL communication from the relay UE to the remote UE is disclosed. The bidirectional PC5 DRX configurations are matched using the connection of the remote UE to the gNB through the relay UE. The gNB to which the relay UE is connected establishes the PC5 DRX configuration of the communication from the remote UE to the relay UE. The gNB to which the relay UE is connected may establish the bidirectional PC5 DRX configurations between the remote UE and the relay UE.

The remote UE may request, through the relay UE, the gNB to establish the PC5 DRX configuration of the communication from the remote UE to the relay UE. Alternatively, the relay UE may request the gNB to establish the PC5 DRX configuration of the communication from the remote UE to the relay UE. Upon receipt of the request, the gNB establishes the PC5 DRX configuration of the communication from the remote UE to the relay UE.

The remote UE may request, through the relay UE, the gNB to establish the bidirectional PC5 DRX configurations between the remote UE and the relay UE. Alternatively, the relay UE may request the gNB to establish the bidirectional PC5 DRX configurations between the remote UE and the relay UE. Upon receipt of the request, the gNB establishes the PC5 DRX configurations in the bidirectional communication between the remote UE and the relay UE.

The gNB establishes the bidirectional PC5 DRX configurations between the remote UE and the relay UE by matching these configurations. Thus, the power consumption of the remote UE and the relay UE can be further reduced.

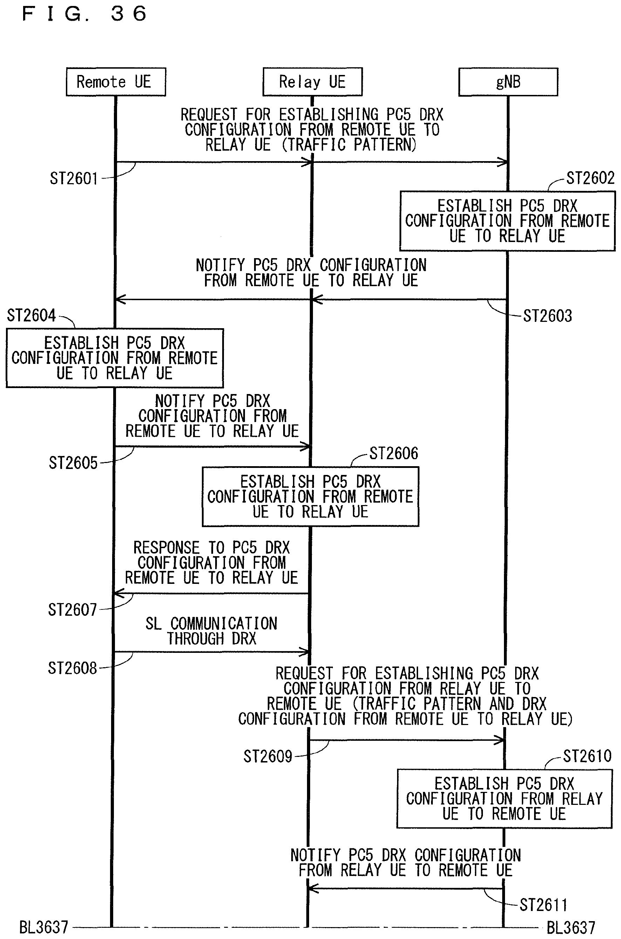

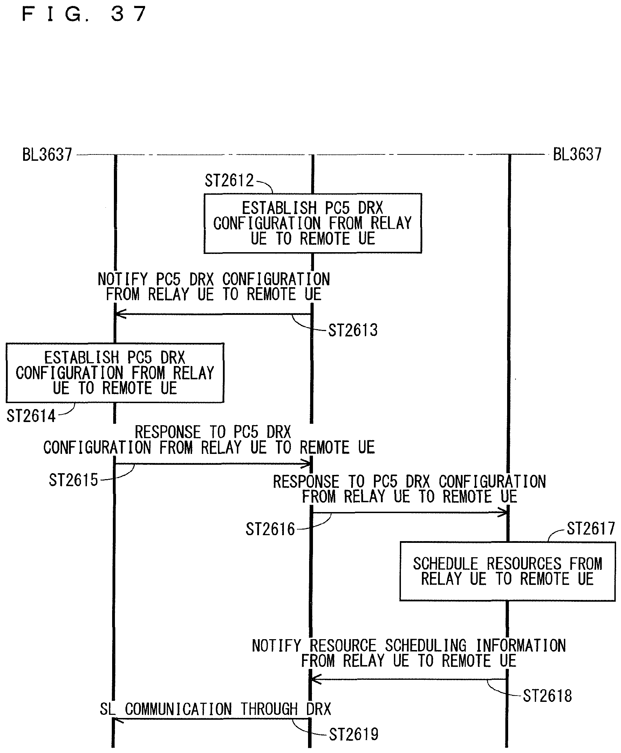

FIGS. 36 and 37 are sequence diagrams illustrating an example method for establishing the PC5 DRX configuration between the remote UE and the relay UE in the communication between the remote UE and the NW through the relay UE according to the fourth embodiment. FIGS. 36 and 37 are connected across a location of a border BL3637. FIGS. 36 and 37 illustrate that the remote UE is OOC of the gNB and the relay UE is IC of the gNB. FIGS. 36 and 37 illustrate that the remote UE requests the gNB to establish the PC5 DRX configuration of the communication from the remote UE to the relay UE and the relay UE requests the gNB to establish the PC5 DRX configuration of the communication from the relay UE to the remote UE. FIGS. 36 and 37 illustrate a method for the gNB to which the relay UE is connected to establish the bidirectional PC5 DRX configurations between the remote UE and the relay UE by matching these configurations.

In Step ST2601, the remote UE requests the gNB to which the relay UE is connected to establish the PC5 DRX configuration of the communication from the remote UE to the relay UE. The remote UE notifies the request through the relay UE. The remote UE may notify the traffic pattern of the communication from the remote UE to the NW together with the request, or include the traffic pattern in the request and notify the traffic pattern. In Step ST2602, the gNB establishes the PC5 DRX configuration of the communication from the remote UE to the relay UE. In Step ST2603, the gNB notifies the remote UE of the PC5 DRX configuration of the communication from the remote UE to the relay UE. The gNB notifies the configuration information through the relay UE. In Step ST2604, the remote UE establishes the PC5 DRX configuration of the communication from the remote UE to the relay UE.

Furthermore, the remote UE notifies the relay UE of the PC5 DRX configuration of the communication from the remote UE to the relay UE in Step ST2605. In Step ST2606, the relay UE establishes the PC5 DRX configuration of the communication from the remote UE to the relay UE. In Step ST2607, the relay UE notifies the remote UE of the completion of the PC5 DRX configuration. This enables the PC5 DRX configuration of the communication from the remote UE to the relay UE. Accordingly, the remote UE performs the PC5 DRX processes in the SL communication in Step ST2608. The remote UE searches for, selects, and reserves the resources for the SL communication from the remote UE to the relay UE, and communicates data through the PC5 DRX processes.

The relay UE establishes the PC5 DRX configuration of the communication with the remote UE. The method disclosed in FIGS. 32 and 33 should be appropriately applied to this method. The UE 1, the UE 2, and the gNB in FIGS. 32 and 33 should be read as the remote UE, the relay UE, and the gNB, respectively. Step ST2406 to Step ST2416 in FIGS. 32 and 33 should be appropriately applied to Step ST2609 to Step ST2619 in FIGS. 36 and 37. This enables the gNB to match the bidirectional PC5 DRX configurations between the remote UE and the relay UE. Thus, the power consumption of the remote UE and the relay UE can be further reduced.

In Step ST2609, the relay UE need not notify the gNB of the PC5 DRX configuration information from the remote UE to the relay UE. Since the gNB establishes the PC5 DRX configuration of the communication from the remote UE to the relay UE in Step ST2602, the gNB recognizes the PC5 DRX configuration. In Step ST2610, the gNB should establish the PC5 DRX configuration of the communication from the relay UE to the remote UE, by matching the bidirectional PC5 DRX configurations between the remote UE and the relay UE using the PC5 DRX configuration of the communication from the remote UE to the relay UE which has been established in Step ST2602. This can produce the same advantages as previously described.

Since this enables the PC5 DRX configuration between the remote UE and the relay UE, the power consumption of the remote UE and the relay UE can be reduced. Furthermore, the bidirectional PC5 DRX configurations between the remote UE and the relay UE can be matched. This can further reduce the power consumption of the remote UE and the relay UE. Thus, the power consumption of the relay UE and the remote UE in the communication between the remote UE and the NW through the relay UE can be reduced.

### The Fifth Embodiment

Another method for solving the problem described in the first embodiment is disclosed.

In the communication between the remote UE and the NW through the relay UE, a DRX configuration between the relay UE and the NW is matched (i.e., aligned) to a PC5 DRX configuration between the remote UE and the relay UE. The DRX configuration between the relay UE and the NW may be a paging DRX configuration when the relay UE is in the RRC _Idle state or the RRC _Inactive state, or a C-DRX configuration when the relay UE is in the RRC _Connected state. The PC5 DRX configuration between the remote UE and the relay UE may correspond to bidirectional PC5 DRX configurations between the remote UE and the relay UE.

The relay UE may establish the DRX configuration between the relay UE and the NW and the PC5 DRX configuration between the remote UE and the relay UE by matching the DRX configurations. The relay UE may match the DRX configuration in the DL direction, that is, the DRX configuration from the NW to the relay UE, to the PC5 DRX configuration from the relay UE to the remote UE. The relay UE may match the DRX configuration in the UL direction, that is, the DRX configuration from the remote UE to the relay UE, to the PC5 DRX configuration from the relay UE to the NW. The relay UE may match the DRX configurations in both of the DL direction and the UL direction to the PC5 DRX configurations.

The methods disclosed from the first embodiment to the fourth embodiment should be appropriately applied to a method for matching the DRX configuration between the relay UE and the NW to the PC5 DRX configuration between the remote UE and the relay UE.

For example, the remote UE establishes the DRX configuration between the relay UE and the NW and the PC5 DRX configuration between the remote UE and the relay UE by matching the DRX configurations. The remote UE establishes the PC5 DRX configuration of the communication between the remote UE and the relay UE. The remote UE establishes the PC5 DRX configuration of the communication from the remote UE to the relay UE. The remote UE may establish the PC5 DRX configuration of the communication from the relay UE to the remote UE. The method disclosed in the fourth embodiment should be appropriately applied.

The remote UE establishes the DRX configuration between the relay UE and the NW using the PC5 DRX configuration with the relay UE by matching the DRX configuration between the relay UE and the NW to the PC5 DRX configuration between the remote UE and the relay UE. The remote UE may determine the DRX relevant information including DRX configurations. Specific examples of the DRX relevant information include a preferred paging DRX configuration of the relay UE, a preferred C-DRX configuration of the relay UE, and a traffic pattern between the remote UE and the NW. The DRX relevant information may be combinations of these.

The remote UE notifies, through the relay UE, the NW of the DRX relevant information between the relay UE and the NW. A NW node, for example, the gNB or the AMF establishes the DRX configuration between the relay UE and the NW, using the DRX relevant information. The methods disclosed from the first embodiment to the first modification of the third embodiment should be appropriately applied to these methods.

Consequently, the DRX configuration between the relay UE and the NW can be matched to the PC5 DRX configuration between the remote UE and the relay UE in the communication between the remote UE and the NW through the relay UE. Since the remote UE recognizes the service of the communication between the remote UE and the NW, for example, the remote UE can establish the PC5 DRX configuration and the DRX configuration between the relay UE and the NW based on information that the remote UE recognizes. The remote UE can establish the PC5 DRX configuration and the DRX configuration which are appropriate for the service of the communication between the remote UE and the NW.

For example, the relay UE may establish the DRX configuration between the relay UE and the NW and the PC5 DRX configuration between the remote UE and the relay UE by matching the DRX configurations. The relay UE establishes the PC5 DRX configuration of the communication between the remote UE and the relay UE. The method disclosed in the fourth embodiment should be appropriately applied.

The relay UE establishes the DRX configuration between the relay UE and the NW using the PC5 DRX configuration with the remote UE by matching the DRX configuration between the relay UE and the NW to the PC5 DRX configuration between the remote UE and the relay UE. The relay UE notifies the NW of the DRX relevant information between the relay UE and the NW. A NW node, for example, the gNB or the AMF establishes the DRX configuration between the relay UE and the NW, using the DRX relevant information. The methods disclosed from the first embodiment to the first modification of the third embodiment should be appropriately applied to these methods.

Consequently, the DRX configuration between the relay UE and the NW can be matched to the PC5 DRX configuration between the remote UE and the relay UE in the communication between the remote UE and the NW through the relay UE. Even when the relay UE is connected to a plurality of remote UEs, the relay UE can establish the PC5 DRX configuration and the DRX configuration, for example, which are appropriate for data generation patterns in the communication between the plurality of remote UEs and the relay UE.

For example, the gNB may establish the DRX configuration between the relay UE and the NW and the PC5 DRX configuration between the remote UE and the relay UE by matching the DRX configurations. The gNB to which the relay UE is connected establishes the PC5 DRX configuration of the communication between the remote UE and the relay UE. The method disclosed in the fourth embodiment should be appropriately applied.

The gNB establishes the DRX configuration between the relay UE and the NW using the PC5 DRX configuration with the remote UE by matching the DRX configuration between the relay UE and the NW to the PC5 DRX configuration between the remote UE and the relay UE. The gNB may notify the NW of the DRX relevant information between the relay UE and the NW. A NW node, for example, the AMF establishes the DRX configuration between the relay UE and the NW, using the DRX relevant information. The methods disclosed from the first embodiment to the first modification of the third embodiment should be appropriately applied to these methods.

Consequently, the DRX configuration between the relay UE and the NW can be matched to the PC5 DRX configuration between the remote UE and the relay UE in the communication between the remote UE and the NW through the relay UE. Furthermore, the gNB establishes the configurations, so that the gNB can recognize all communication states of the relay UE connected to the gNB and the remote UE connected to the relay UE. Thus, the system can establish the PC5 DRX configuration and the DRX configuration which are more appropriate in the communication between the remote UE and the NW through the gNB.

Consequently, the DRX configuration between the relay UE and the NW can be matched to the PC5 DRX configuration between the remote UE and the relay UE in the communication between the remote UE and the NW through the relay UE. This can further reduce the power consumption of the remote UE and the relay UE.

When the remote UE is connected to the gNB through the relay UE, the gNB may perform scheduling for the PC5 communication between the remote UE and another UE. The remote UE should notify, through the relay UE, information on the service of the PC5 communication to be performed with the other UE. The gNB performs scheduling for the PC5 communication for the remote UE, using the information. The gNB notifies the remote UE of the scheduling information through the relay UE. The remote UE performs the PC5 communication with the other UE, according to the scheduling information received from the gNB through the relay UE.

The remote UE may notify the gNB of a scheduling request (SR) through the relay UE. In response to the SR received from the remote UE through the relay UE, the gNB may perform scheduling for the remote UE. The remote UE may notify the gNB of a Buffer Status Report (BSR) through the relay UE. The gNB may perform scheduling for the remote UE using the BSR received from the remote UE through the relay UE.

A PUCCH for transmitting the SR of the remote UE from the relay UE to the gNB may be provided. The gNB may configure, for the relay UE, the PUCCH for transmitting the SR of the remote UE. As another method, the PUSCH may be used for transmitting the SR of the remote UE from the relay UE to the gNB. The relay UE may include the SR of the remote UE in the PUSCH, and notify the gNB of the SR. As another method, the MAC signaling may be used for transmitting the SR of the remote UE from the relay UE to the gNB. The MAC signaling may be configured as a MAC CE. As another method, the RRC signaling may be used for transmitting the SR of the remote UE from the relay UE to the gNB. These enable notification of a larger amount of information.

The aforementioned method should be appropriately applied to transmission of the BSR of the remote UE from the relay UE to the gNB.

Even when the remote UE is out of the coverage of the gNB, the remote UE connected to the gNB through the relay UE can obtain the scheduling information for the PC5 communication from the gNB. Since the gNB can schedule the PC5 communication between the remote UE connected to the relay UE and another UE, collisions in the resources to be used for these communications can be reduced. This can enhance the use efficiency of the resources.

In the communication between the remote UE and the NW through the relay UE, the resource timing of a CG established between the gNB and the relay UE may be matched to the resource timing of a CG established between the remote UE and the relay UE. For example, the gNB may perform scheduling of the remote UE through the relay UE. The gNB matches the resource timing of the CG in the Uu to be established for the relay UE to the resource timing of the CG in the PC5 to be established for the remote UE. The gNB may establish a configuration so that both of the resource timings appear within a predetermined period. This can further reduce the power consumption of the remote UE and the relay UE.

In this invention, the UE in which the service data has been generated is the UE-TX. Suppose, for example, a UE 1 denotes the UE-TX and a UE 2 denotes the UE-RX. When the service data has been generated in the UE 2 and the UE 2 transmits the data to the UE 1, the disclosed methods should be applied by reading the UE 2 as the UE-TX and reading the UE 1 as the UE-RX. This can produce the same advantages as previously described.

The embodiments and the modifications are mere exemplifications, and can be freely combined. The arbitrary constituent elements of the embodiments and the modifications can be appropriately modified or omitted.

For example, a subframe in the embodiments and the modifications is an example time unit of communication in the fifth generation base station communication system. The subframe may be configured per scheduling. The processes described in the embodiments and the modifications as being performed per subframe may be performed per TTI, per slot, per sub-slot, or per mini-slot.

For example, the methods disclosed in the embodiments and its modifications may be applied not only to the vehicle-to-everything (V2X) services but also to services using the SL communication. The methods may be applied to, for example, the SL communication to be used in various services, for example, the proximity-based service, public safety, communication between wearable devices, and Device-to-Device communication in factories.

While the present invention is described in detail, the foregoing description is in all aspects illustrative and does not restrict the present invention. Therefore, numerous modifications and variations that have not yet been exemplified can be devised.

### EXPLANATION OF REFERENCE SIGNS

200, 210 communication system, 202 communication terminal device (communication terminal), 203, 207, 213, 217, 223-1, 224-1, 224-2, 226-1, 226-2 base station device (base station), 204, 214 management device.

## Claims

1. A communication system, comprising:
- a base station;
- a first communication terminal configured to perform radio communication with the base station; and
- a second communication terminal configured to perform Device-to-Device communication with the first communication terminal,
wherein the first communication terminal is configured to relay communication between the second communication terminal and the base station, and
the first communication terminal releases connection with the base station and transitions to an idle state in the absence of data to be transmitted and received between the second communication terminal and the base station for a predetermined period.

2. The communication system according to claim 1, further comprising
a management device configured to manage associating information that is information associating the first communication terminal with the second communication terminal,
wherein when the first communication terminal is in the idle state and data to be transmitted to the second communication terminal has been generated, the management device identifies the first communication terminal associated with the second communication terminal based on the associating information, and notifies the identified first communication terminal of paging.

3. The communication system according to claim 1 or 2,
wherein when the first communication terminal is in the idle state and data to be transmitted from the second communication terminal to the base station has been generated, the first communication terminal transitions to a connected state with the base station by receiving, from the second communication terminal, the data to be transmitted to the base station or a connection request to the base station.

4. A communication terminal configured to perform radio communication with a base station,
wherein the communication terminal is configured to perform Device-to-Device communication with another communication terminal and to relay communication between the other communication terminal and the base station, and
the communication terminal releases connection with the base station and transitions to an idle state in the absence of data to be transmitted and received between the other communication terminal and the base station for a predetermined period.
